# EUROPEAN PATENT APPLICATION

(11) **EP 1 178 662 A2**
(43) Date of publication of application: **06.02.2002**
(21) Application number: 01306648.5
(22) Date of filing: 02.08.2001
(51) Int. Cl.: H04N 1/00

(54) **Image printing system**

(30) Priority: 02.08.2000 JP 2000234831
(71) Applicant: DAI NIPPON PRINTING CO., LTD., Tokyo 162-8001 (JP)
(72) Inventor: Ando, Jitsuhiko, Dai Nippon Printing Co., Ltd., Tokyo-to 162-8001 (JP); Ohkubo, Takayuki, Dai Nippon Printing Co., Ltd., Tokyo-to 162-8001 (JP); Shibasaki, Naoji, Dai Nippon Printing Co., Ltd., Tokyo-to 162-8001 (JP); Ishii, Tohru, Dai Nippon Printing Co., Ltd., Tokyo-to 162-8001 (JP); Akai, Hiroyuki, Dai Nippon Printing Co., Ltd., Tokyo-to 162-8001 (JP)
(74) Representative: Neobard, William John

(57) **Abstract**

An image printing system is disclosed. The system comprises a main body and a backyard printing part which is connected to the main body via a line, wherein the main body comprises an image data inputting means for inputting image data, a request inputting means for inputting requests for an image to be output, a display means for displaying an image, an output content indicating data preparation means for preparing an output content indicating datum which records the image to be output and appendix conditions for the image on the basis of the input image and the input requests, an output method choice means for selecting one of instantaneous printing and backyard printing, and an instantaneous printing means which prints out an printed article of the image in accordance with the output content indicating datum when the choice at the output method choice means is the instantaneous printing, and wherein the backyard printing part prints out an printed article of the image in accordance with the output content indicating datum when the choice at the output method choice means is the backyard printing.

## Description

### Background of the Invention

### Technical field of the invention

This invention is related to an image printing apparatus which outputs the photographic image, for example, output on a pre-cut self-adhesive label by printing, wherein the photographic image was photographed with an image pickup apparatus such as digital camera, and stored in a recording media as an image datum, and input into the printing apparatus by reading the image datum with an equipped media reader, or by reading the out-put photograph directly with an equipped image reader such as scanner; an image printing system having such image printing apparatus; and a printed article delivery system which accompanies the image printing system.

Further, this invention is related to an information terminal table which can read an information from a recording media , and an information output system using the information terminal table.

### Related Arts

Conventionally, in order to print out an image taken by a digital camera or the like, similar to a silver photography film, in general, a user takes a recording medium with photographed images recorded to a laboratory for the printing process thereof. However, since it takes several days or pretty much time, it cannot satisfy the user.

Moreover, since an image taken by a digital camera or the like can be recorded as digital data, it can be printed out by a personal computer and a printer at a house. Furthermore, a system of transmitting the digital image data taken by a digital camera or the like to a nearby laboratory by a personal computer at a house via the Internet so as to have a printing process at the laboratory, and going thereto for picking up the printed matter, or having it sent home by a delivery service has been proposed (JP-A-11-154216, EP 0856972A).

Moreover, a relatively compact image outputting apparatus capable of reading and outputting image digital data photographed by a digital camera or the like as well as capable of being installed at a relatively small space of a corner in a shop or on the street has been proposed (hereinafter referred to as the "post type image outputting apparatus"). For example, JP-A-10-341303 discloses a post type image outputting apparatus comprising various kinds of interfaces corresponding to a plurality of different kinds of recording media, capable of reading and outputting image digital data from the various kinds of the recording media. The post type image output apparatus provides the handiness to be operated freely by customers so that they can print out desired photograph images instantaneously and take them back with them.

However, the capacity of recording media for the digital camera has recently been developed, and thus the number of prints which are intended to print on one occasion by a customer tends to increase greatly. Besides, there is a case in which a large number of the print copies of the same design are printed out, such as the case when a customer wishes to print seasonal greeting cards, such as new year's or hot summer's greeting cards, having a photographic image. In such case. the customer should have a long wait for completion of printing in the front of the post type image output apparatus. Further, the next customer waiting for his turn would be got tired of waiting. In such case, the advantage of the easiness of the post type image output apparatus would reduce by half. Further, certain of customers may want to use the post type image output device only for order of the printing, to be back at the time when the order is finished, and to return to receive the printed article at a certain convenience time in the future.

By separately establishing a delivery place of the printed articles, although an ejection port which discharges the printed articles on the spot printing, has been equipped in the main body of the post type image output device, it comes to be possible to hand the printed articles to the customer who comes again at a certain time after the order. Further, it is possible to be shorten the waiting time of next customer by a time required for the printout, by asking the customer who finished the order to leave the front of the main body of post type image output apparatus, and handing the printed articles to him at the separated place, in the busy hour. Therefore, the flexibility of the business processing would be enhanced.

However, the service works would be increases, since the printed articles which the customer ordered should be handed by a clerk confronted with the customer, upon seeking out the printed articles of the customer from stock printed articles and confirming that the sought printed articles are the right articles for the customer. Further, such delivery would be imposed a constraint that the customer must come again within business hours of the service shop on the customer.

Since compactness is required for the post type image output apparatus not so as to occupy space unnecessarily, the size of inside space where the printer of this apparatus is placed is also restricted. As a result of this restriction, the number of printers stored in this apparatus and the type and quantity of the printing paper to be stored in this apparatus are also restricted.

The constraint regarding the space for such printer causes various inconveniences. For example, the administrator must frequently supply the paper when the storing capacity for the print paper is low. In addition, in order to widely deal with specialized printings, such as of large size photographs and of multi-segmental photographs, e.g., pre-cut self-adhesive label type, and etc., it is necessary to prepare a large number of printers which are differ from each others in their functions, or prepare a large number of printing papers which are differ from each others in their characteristics or size. However, it is not possible to sufficiently satisfy the demand, since the restricted space in the post type image output apparatus can not store such large volume of printers or printing papers, Thus, the specialized demand of a certain customer are not amply satisfied.

The image printing apparatus as disclosed in JP-A-0-341303 comprises a main body of apparatus having a integrated printing, and a monitor part which is sited on the main body and which displays information such as textual information and image information. The monitor part of the apparatus, however, is integrated with the main body and fixed thereto without having an upshift-downshift function and a tilting function. Thus, it own some problems such that the screen of monitor part is not fit for peoples who are particularly tall or low in height to look it and operate the touch panel system on the monitor.

The image printing apparatus is usually set up on a conspicuous spot, such as in the front of or in a convenience store or market. Therefore, when the customer operates the apparatus to display an output image on its monitor, another person who comes up to the spot would be able to glance at the displayed image. Since a certain customer detests such glance by another person, he would often worry about the existence of another person around the apparatus, and when another person happens to be around the apparatus, he would hesitate to output the image, or would give up to output the image.

The monitor part has inlet ports for inserting recording media such as compact disk (CD), flexible disk (FD), and smart media, and the main body has an outlet port for printed articles printed out from the inside of the main body. Since these inlets and outlet are always opened, there is a high possibility that these inlets and outlet would receive any alien substance by tampering. Particularly, because the outlet port for printed articles has relatively wide spread, the outlet port unfortunately receives sundry substances, and which may cause functional troubles of the apparatus.

In such image printing apparatus, the reading of image digital data from various recording medium is followed by printing out of the read data from a printer. Further, a desirable photographic image can be obtained by manipulating variously a manipulation panel on the monitor screen so as to choose and adjust the image to be output. As printing material to which the photographic image is printed, the so-called "pre-cut seal" is typical. The pre-cut seal comprises a self-adhesive sheet which has a printable surface, a substrate sheet on which the self-adhesive sheet is adhered, and cutting lines which is formed on the self-adhesive sheet so as to cut the sheet into a plural number of labels. After printed out, the customer peels off each label from the substrate sheet along the cutting lines, and enjoys affixing the peeled label to any desirable place of the customer's possessions.

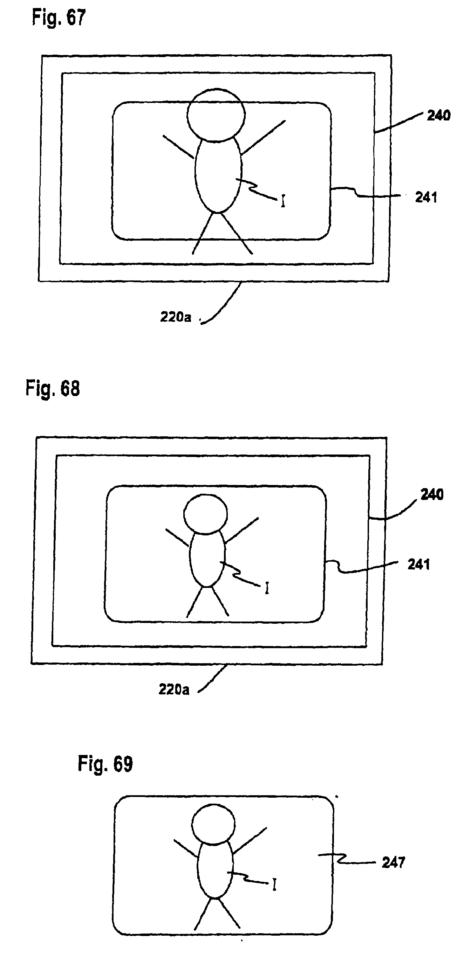

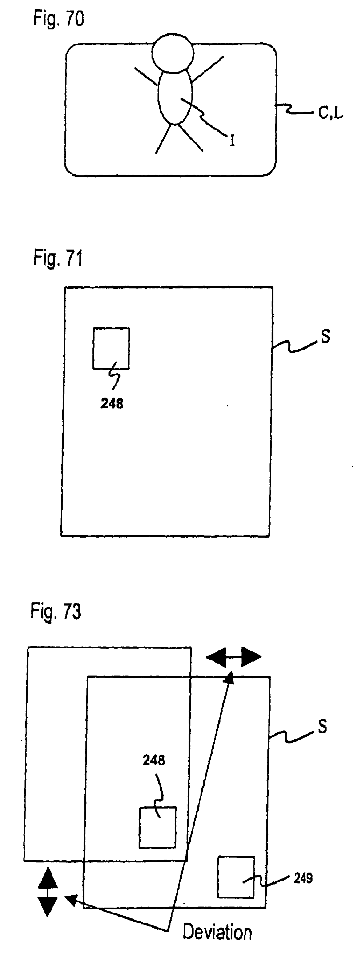

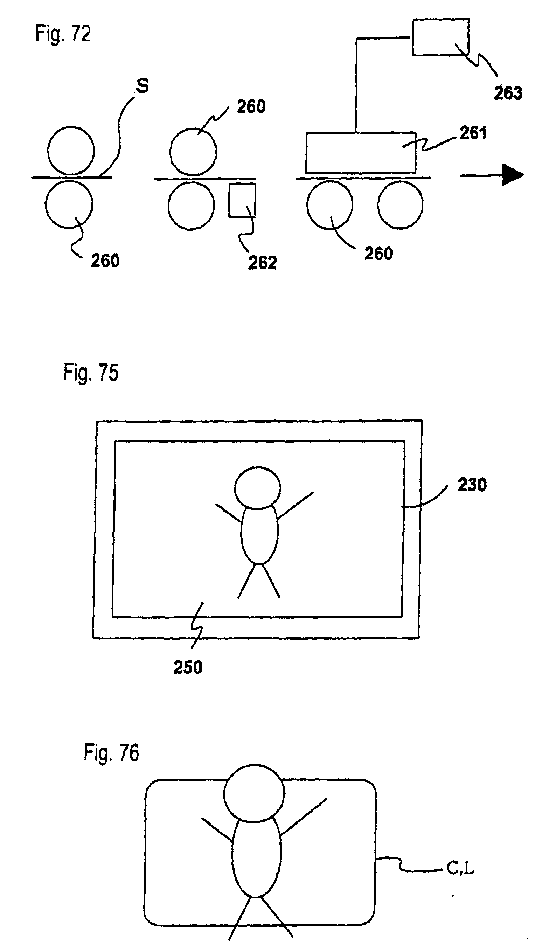

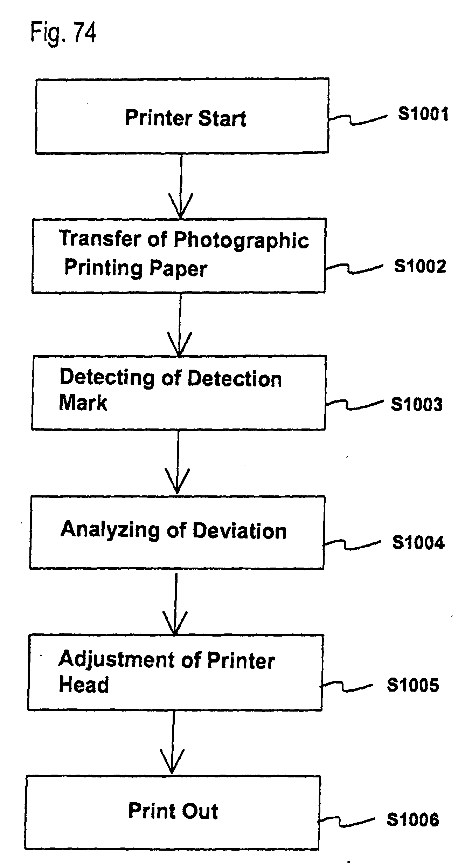

However, a contrivance on the relation between image and printing position of the pre-cut seal has not been made in such image printing apparatus. Therefore, even if position and size of the image are adjusted so as to be in outer frame 230 on the monitor screen 250 as shown in Fig. 75, a possibility that the out-put image printed on the pre-cut seal has a part that lies out of cut lines C,L (Fig. 76) is to be expected. Further, even if the size of image can be set adequately as shown in Fig. 68, the out-put image printed on the pre-cut seal would have a part that lies out of cut lines C,L (Fig. 70), when a position aberration happens on the transfer of pre-cut seal in the printer.

What is called "photo-seal printing machine" which prints the facial image of user to small labels has been installed on the street and in amusement arcade, etc. As described above, included among the conventional photo-seal printing machines are that which can read from the recording medium an image which have been photographed by the user with a digital camera and recorded in the medium and then print out the read image. Further, similar to this machine, an information outputting machine has been developed and come to be installed in front of shop, which machine can read from the recording medium an image which have been photographed by the user with a digital camera and recorded in the medium, and print out the read image as printed matters of large size and high picture quality when compared with that from the above mentioned photo-seal printing machine.

Fig. 82 is a view which illustrates an example of the conventional information outputting machine.

Conventional information outputting machine 300 has display part 301, media read station 302, camera part 303, input part 304, photo-ejection part 305, etc. For example, the media read station 302 is equipped with a photoscanner 302a which read the image from printed photographs, etc., a film scanner 302b which reads the image from the negative film, a card reader 302c which reads image datum from PC card, compact flash card (CF), etc. Image datum got from the medium read station 302 or the camera part 303 is displayed in display part 301, and a desired photograph is output from an internal printing device, which is not illustrated in Fig. 82, to the photo-ejection part 305, by designating the desired output form, etc. on the input part 304.

However, there was a problem of having too much time on user's hands, or being tired, when the user wanted to print a large number of prints such as in case of printing season greeting cards, etc., with the above mentioned conventional information output machine 300, since an elongated time is needed for the output work and the user should operate the machine operation at his standing position.

Further, there is a demand for ample time long before the selection of decoration frame, etc., when the user wants to print a photograph with the decoration frame, or seal type prints. In addition, on such printing, delicate works, such as an adjustment of the composite position between chosen frame and image, etc. would be often needed. Thus, the operation at the standing position would be a hard work and which results in a fatigue of user.

Further more, there was a problem that that the operation would be carried out fidgety, since the luggage space for the user was not prepared in the shop, and thus user should place his baggage at his feet during the operation.

### Summary of the Invention

First, considering the above mentioned problems in the art, the present invention aims to provide an image printing system which is possible to supplement the shortage in its printing performance (for example, waiting time, measures to the special printing and work frequencies of the administrator, etc.) with any means, without detriment to the easiness of the image outputting apparatus where the photographic image can be instantaneously output on the user's direct operation, and be brought back by the user rapidly.

Secondly, also considering the above mentioned problems in the art, the present invention aims to provide an system where the user would not need to meet the clerk on receiving the printed article when the printed article is ordered through a post type image outputting apparatus by the user so as to be received at a different place from the apparatus.

Thirdly, also considering the above mentioned problems in the art, the present invention aims to provide an image printing apparatus which can adjust the height of its monitor part in accordance with the user's height.

Further, the present invention aims to provide an image printing apparatus which can adjust the tilt angle of its monitor parts in accordance with the user's height so that the screen of the display is legible and touchable to the user.

Fourthly, the present invention aims to provide an image printing apparatus which has an insertion port for recording medium and an output port for taking out printed articles, wherein the insertion and output ports are closed except when the ports are in use in order to prevent the ports from receiving any tampering.

Fifthly, the present invention aims to provide an information terminal table and information output system which are easy to manipulate and possible to manipulate calmly and easily for a long time.

The first aim mentioned can be attained by an image printing system according to the present invention, which comprises a main body and a backyard printing part which is connected to the main body via a line, wherein the main body comprises an image data inputting means for inputting image data, an order inputting means for inputting orders for an image to be output, a display means for displaying an image, an output content designation data producing means for preparing an output content designation datum which records the image to be output and appendix conditions for the image on the basis of the input image and the input orders, an output method choice means for selecting one of instantaneous printing and backyard printing, and an instantaneous printing means which prints out an printed article of the image in accordance with the output content designation datum when the choice at the output method choice means is the instantaneous printing, and wherein the backyard printing part prints out an printed article of the image in accordance with the output content designation datum when the choice at the output method choice means is the backyard printing.

According to image printing system of the first aspect of the present invention, it is possible to deliver printed article to the customer instantaneously by using the instantaneous printing means of the main body, when the printed article is of relatively high frequent orders. For example, it is advantageous to print out in the instantaneous printing means 11 in case the number of printed articles wanted is one or few per each image photographed by the digital camera and recorded in the form of digital data in the storage media, or in case only one pre-cut seal is to be printed out.

On the other hand, it is possible to deliver printed article to the customer by using the backyard printing part in accordance with the customer's order or the pre-setting by the administrator of the apparatus, in case the printed article is of a large size which is impossible to be printed by the instantaneous printing means, or in case it is to be wished that a large number of the same designed printed articles are printed out, which case is possible to service with the instantaneous printing means, but not brings efficiency. Therefore, it is possible to supplement the shortage in the print performance with the backyard print part, without detriment to the easiness as the post type image outputting apparatus owned by the main body.

In one embodiment of the image printing system of this invention, the image data inputting means contains an image scanning device possible to scan an image directly. In this embodiment, it is possible to input not only a digital image data photographed by the digital camera or made by the computer graphics but also a printed image when the printed image is read by the image scanning device in order to make it into a digital data.

In another embodiment of the image printing system of this invention, the image datum which is input by the image data inputting means comprises an image datum of photographic image. In this embodiment, it is possible that an image datum photographed by a digital camera and installed in a recording medium or an image from printed photograph will be printed out easily and efficiently.

In further another embodiment of the image printing system of this invention, the main body 1 and the backyard print part 2 is located in the same shop. In this embodiment, it is possible to enjoy the most of facilities belonging to the post type image outputting apparatus, since the orders which are impossible to be processed with the main body or inefficient in processing with the main body 1 can be undertaken by the backyard printing part 2 which is set near the main body 1 in the same shop.

In still another embodiment of the image printing system of this invention, the main body and the backyard print part is connected through a network. In this embodiment, it is possible that the customer will receive printed articles at a place completely away from another place at which he makes an order of the printed articles, and that is convenient.

In another embodiment of the image printing system of this invention, the main body further comprises an order receipt note producing means for giving to the customer an order receipt note which has a customer identity information for confirming the customer to be handed the printed article at the backyard. In this embodiment it is possible that the supplier of the image print system surely delivers the articles printed in the backyard to the ordered customer.

In a more preferable embodiment of the image printing system of this invention, the backyard printing part further comprises a collation sheet printing means for printing the collation sheet which has at least a part of the customer identity information. In this embodiment, it is possible that the supplier of the image print system will very easily confirm the identity of the customer who comes to receive the printed article, by checking the content of the order receipt note as a customer side's stub with the collation sheet as a shop side's stub.

Further, in another embodiment of the image printing system of this invention, the main body further comprises a personal information inputting means for inputting the personal information of the customer, and the order receipt note producing means produces an order receipt note which has a customer identity information which includes the personal information input at the personal information inputting means, and the collation sheet printing means produces the collation sheet which has the customer identity information which includes the personal information input at the personal information inputting means. In this embodiment, it is possible that the supplier of the image print system will confirm more surely the identity of the customer who comes to receive the printed article, since the order receipt note and collation sheet have the customer identity information which includes a personal information which is unknown until the customer provides it at the personal information inputting means.

The second aim mentioned above can be attained by an image printing system according to the present invention, which comprises an image data procurement means for obtaining image data, an order inputting means for inputting orders for an image to be output, an output content designation data producing means for preparing an output content designation datum which records the image to be output and appendix conditions for the image on the basis of the obtained image and the input orders, an printing means which prints out an printed article of the image in accordance with the output content designation datum, a certification information setting means for setting a certification information which certifies the identity of the customer to be handed the printed article, a storage means which stores the printed article therein and which is possible to be locked with the certification information, and a certification information inputting means for inputting the certification information to open the locked storage means.

According to the image printing system of the second invention, it is possible for the customer to receive the printed article ordered without meeting with the clerk. Thus, the customer would not wait for receiving the printed article even if the clerk in charge is absent or busy.

Further, it is possible for the customer to receive always the printed article through 24 hours when the shop installs a storage means like a storing box at a place where the customer is easy of access even after the business hour of the shop, such as shopfront, and that is convenient for the customer.

In the meantime, it is possible for the shop side to improve its business efficiency, because the burden which depends on the delivery work of the clerk can be reduced.

In one embodiment of this invention, it is possible to take a ccnstitution where an image data inputting means for inputting an image datum is set as the image data procurement means.

In another embodiment of this invention, the output content designation data producing means comprises an editing means where the obtained image datum is processed into the image to be output.

In further another embodiment of this invention, as the certification information setting means, the system comprises a password designating means for designating a password as one pleases.

In still another embodiment of this invention, as the certification information setting means, the system comprises a password allocating means for automatically giving a password.

In an embodiment of this invention, as the storage means, the system comprises a storing box having a the door with a lock which key is the aforesaid certification information.

In another embodiment of this invention, as the storage means, the system comprises a plural of storing spaces and a common ejection port, wherein the each storing space can be locked independently and separately with a key which is the certification information to be set individually, and wherein the common ejection port is designed for discharging printed articles stored in any of the storing spaces.

In another embodiment of this invention, the system further comprises an output method choice means for selecting one of instantaneous printing and backyard printing, and the printing means comprises an instantaneous printing means and a backyard printing means, wherein the instantaneous printing means prints out an printed article of the image in accordance with the output content designation datum when the choice at the output method choice means is the instantaneous printing, and wherein the backyard printing means prints out an printed article of the image in accordance with the output content designation datum when the choice at the output method choice means is the backyard printing, and the certification information setting means sets the certification information upon the choice of the backyard printing. That is to say, it is possible that the characteristic in image print system of the first aspect of this invention is used in the image printing system of the second aspect of this invention in combination. Of course, it is also possible to combine the other characteristics in any preferable embodiments mentioned with those of the second image printing system.

In this embodiment, it is possible to deliver printed article to the customer instantaneously by using the instantaneous printing means of the main body, when the printed article is of relatively high frequent orders. On the other hand, it is possible to deliver printed article to the customer by using the backyard printing means in accordance with the customer's order or the pre-setting by the administrator of the apparatus, in case the ordered article is impossible to be printed by the instantaneous printing means, or in case it is possible to service with the instantaneous printing means, but not brings efficiency. Further, all of or a part of articles printed by the backyard printing means can be stored in the storage means under lock and key. Therefore, it is possible to take print menu and delivery system which can widely correspond to the requirements of the customer, without detriment to the easiness as the post type image outputting apparatus owned by the main body.

As an constitutive example of this embodiment, an image printing system which comprises a main body, a backyard printing part and a stoker part, wherein the main body comprises the image data procurement means, the order inputting means, the output content designation data producing means, the output method choice means, the instantaneous printing means, and the certification information setting means, wherein the backyard printing part comprises the backyard printing means and is connected to the main body via a line, and wherein the stocker part is equipped with the certification information inputting means, may be cited.

In the above example, it is possible that the main body and stocker part are connected via line, as well as the connecting of the main body and backyard print part via line.

It is also possible that the main body and backyard print part and the stocker part are all installed in the same shop.

The third aim mentioned above can be attained by an image printing apparatus for printing out a photo-image photographed by a imaging device such as digital camera, which comprises a main body and a monitor part, wherein the main body is equipped with a printing device therein, and wherein the monitor part is located at upper side of the main body, and displays information such as image and character, and which is characterized by the fact that the monitor part has at least one of height adjustment function and tilt angle regulatory function.

Further, this invention concerns an image printing apparatus for printing out a photo-image photographed by a imaging device such as digital camera, which comprises an inlet port for inserting a recording medium, and an outlet port for discharging a output printed article, and which is characterized by the fact that at least one of the inlet and outlet ports has an open/close-free cover.

Still further, this invention concerns an image printing apparatus for printing out a photo-image photographed by a imaging device such as digital camera, which comprises a main body and a monitor part, wherein the main body is equipped with a printing device therein, wherein the monitor part is located at upper side of the main body, and displays information such as image and character, and wherein the apparatus comprises an inlet port for inserting a recording medium and an outlet port for discharging a output printed article, which apparatus is characterized by the fact that the monitor part has at least one of height adjustment function and tilt angle regulatory function and that at least one of the inlet and outlet ports has an open/close-free cover.

According to the third aspect of this invention, by setting the screen in the monitor part at optional height or tilt angle, the screen comes to be easy to look at and touch for the user. Further, in case the time for outputting is concerned, such as a case of continuous printing, it is possible to invert the monitor part so that the screen can be hidden from view of others. That is convenient in the case of being ashamed of showing the image. The inlet port for recording media or output port for printed articles is effective for the mischievous prevention, because they are opened only in use. It also expels the error insertion of recording media which would be caused by when a plurality of inlets are existed. By the way, it is possible to use preferably the image printing apparatus enjoying the characteristics mentioned above as one embodiment of the main body in the image printing system according to the first or second aspect of this invention.

The fourth aim mentioned above can be attained by an image printing apparatus for printing out a photo-image photographed by a imaging device such as digital camera on a pre-cut seal. which comprises a means for displaying a frame for the pre-cut of the pre-cut seal in addition to a selected image on a monitor screen, and a image adjustment means for aligning the selected image in the proper within the frame so as to print the image at a good position within the pre-cut frame.

The image adjustment means may be an image scaling means which is possible to be scale-up and scale-down of the image , an image translocating means or an image rotating means. Alternatively, it may be a printing adjustment means for adjusting the printing position, where a detection mark which is provided on the back side of the pre-cut seal is detected, a deviation of the detected position from the standard position is calculated, and the printing position is adjusted in proportion to the calculated deviation. it may have at least two of or all of the image scaling means , the image translocating means, the image rotating means and the printing adjustment means.

Since the image printing apparatus of the forth aspect of this invention is thus comprised, in the obtained printed pre-cut seal, the image printed into the pre-cut seal would be located at a proper position and in a proper size so as to be in frame of the seal part of pre-cut seal. Therefore, when a seal part was torn off from the pre-cut seal along the pre-cut frame line, a possibility that part of the image lies off the frame of the seal and thus be cut out from the seal would be expelled.

By the way, it is possible to use preferably the image printing apparatus enjoying the characteristics mentioned above as one embodiment of the main body in the image printing system according to the first or second aspect of this invention. It is also possible to use the characteristics of the aforementioned third aspect of this invention in combination with those of the just mentioned forth aspect of this invention in an embodiment of the image printing apparatus, and the preferable image printing apparatus of this embodiment may be used as one embodiment of the main body in the image printing system according to the first or second aspect of this invention.

The fifth aim mentioned above can be attained by an information terminal table which comprises a top board and a media reading part, wherein the top board comprises on its upper surface a display part for displaying character and image information and an inputting part for an input operation, the upper surface being put along or almost along the horizontal, and wherein the media reading part is provided at the lower side of the top board.

In one embodiment of information terminal table of this invention, the display part also has the function of the inputting part.

In another embodiment of this invention, the display part has a function of turning the top and bottom of the image displayed to any direction on a designated operation.

In further another embodiment of this invention, the display part displays, except a necessitated minimum indication, a view which is matched with the design pattern of the parts of the table other than display part and/or the interior design of a room space where the table is placed , when the table is not in operation.

The fifth aim mentioned above can also be attained by an information outputting system which comprises the above mentioned information terminal table and an outputting device. wherein the outputting device outputs a information which is read out at the media reading part, and wherein an operation for outputting the information from the outputting device is done at the top board.

In an embodiment of this invention, the top board further comprises a means for ordering food and/or drink.

In one embodiment of this invention, the system further comprises a charge management part which manages the charge for an output from the outputting device and/or charge for the food and drink ordered.

### Brief Description of the Drawings

Fig. 1 is an explanatory drawing which shows the outline of the first image printing system according to this invention.

Fig. 2 is an explanatory drawing which shows configuration example of the first image printing system according to this invention.

Fig. 3 is a perspective view which shows an example of the main body for image printing system according to this invention.

Fig. 4 is a block diagram which shows an embodiment of the first image printing system according to this invention.

Fig. 5 is a flowchart which shows the procedure of the digital photo in an embodiment of the first image printing system according to this invention.

Fig. 6 is a flowchart which shows the procedure for backyard output part in an embodiment of the first image printing system according to this invention.

Fig. 7 is a flowchart which shows the procedure of frame synthesis and seal printing in an embodiment of the first image printing system according to this invention.

Fig. 8 is a flowchart which shows the procedure of the index printing in an embodiment of the first image printing system according to this invention.

Fig. 9 is a flowchart which shows the procedure of the certification photograph in an embodiment of the first image printing system according to this invention.

Fig. 10 is a flowchart which shows the procedure of the post card printing in an embodiment of the first image printing system according to this invention.

Fig. 11 is the start screen in an embodiment of image printing system according to this invention.

Fig. 12 is the main menu screen in an embodiment of image printing system according to this invention.

Fig. 13 is an operation screen for selecting a reading source of image datum in an embodiment of image printing system according to this invention.

Fig. 14 is a guidance screen of the smart media insertion method in an embodiment of image printing system according to this invention.

Fig. 15 is a guidance screen of the compact flash card insertion method in an embodiment of image printing system according to this invention.

Fig. 16 is a guidance screen of the flexible disk insertion method in an embodiment of image printing system according to this invention.

Fig. 17 is a guidance screen of the PC card insertion method in an embodiment of image printing system according to this invention.

Fig. 18 is a guidance screen of the CD-ROM insertion method in an embodiment of image printing system according to this invention.

Fig. 19 is a thumb nail image display screen which enumerates images read out for a digital photo in an embodiment of image printing system according to this invention.

Fig. 20 is an operation screen for selecting a reading size of the scanner in an embodiment of image printing system according to this invention.

Fig. 21 is an operation screen which guides the manuscript setting method to the scanner in an embodiment of image printing system according to this invention.

Fig. 22 is a display screen of the image read out by the scanner for the digital photo in an embodiment of image printing system according to this invention.

Fig. 23 is operation screen for setting the number of printing sheets for an image read by the scanner for the digital photo in an embodiment of image printing system according to this invention.

Fig. 24 is operation screen for selecting instantaneous printing or backyard printing in an embodiment of the image printing system according to this invention.

Fig. 25 is guidance screen of the fee payment displayed when the digital photo in an embodiment of image printing system according to this invention is performed.

Fig. 26 is the guidance screen of the confirmation of the fee which is displayed when the digital photo in an embodiment of the image printing system according to this invention is performed.

Fig. 27 is guidance screen of the smart media detaching method in an embodiment of image printing system according to this invention.

Fig. 28 is guidance screen of the compact flash card detaching method in an embodiment of image printing system according to this invention.

Fig. 29 is guidance screen of the flexible disk detaching method in an embodiment of image printing system according to this invention.

Fig. 30 is guidance screen of the PC card detaching method in an embodiment of image printing system according to this invention.

Fig. 31 is guidance screen of the CD-ROM detaching method in an embodiment of image printing system according to this invention.

Fig. 32 is guidance screen of the scanner manuscript detaching method in an embodiment of image printing system according to this invention.

Fig. 33 is guidance screen during the execution of instantaneous printing in an embodiment of image printing system according to this invention.

Fig. 34 is the end screen in an embodiment of image printing system according to this invention.

Fig. 35 is operation screen for inputting personal information ( name ) in an embodiment of image printing system according to this invention.

Fig. 36 is operation screen which inputting personal information ( telephone number ) in an embodiment of image printing system according to this invention.

Fig. 37 is a printing example of a fee and order receipt note in an embodiment of image printing system according to this invention.

Fig. 37a is a printing example of an order receipt note in an embodiment of image printing system according to this invention.

Fig. 38 is a printing example of an index sheet in an embodiment of image printing system according to this invention.

Fig. 38a is a printing example of a shop side collation sheet in an embodiment of image printing system according to this invention.

Fig. 39 is a thumb nail image display screen for showing frames used in frame synthesis and seal printing in an embodiment of image printing system according to this invention.

Fig. 40 is an enlarged display screen in chosen frame in an embodiment of image printing system according to this invention.

Fig. 41 is a thumb nail image display screen which enumerates images read out for the frame synthesis and seal printing in an embodiment of the image printing system according to this invention.

Fig. 42 is an operation screen for adjusting the synthesis image in frame synthesis and seal printing in an embodiment of image printing system according to this invention.

Fig. 43 is an operation screen for selecting a image reading source for the index printing in an embodiment of image printing system according to this invention.

Fig. 44 is a guidance screen for the confirmation of the print image of the index printing in an embodiment of image printing system according to this invention.

Fig. 45 is a guidance screen of the charge payment of the index printing in an embodiment of image printing system according to this invention.

Fig. 46 is an operation screen for selecting the print type of certification photograph in an embodiment of image printing system according to this invention.

Fig. 47 is a guidance screen of the charge payment of the certification photograph in an embodiment of image printing system according to this invention.

Fig. 48 is a thumb nail image display screen which enumerates images read out for a certification photograph in an embodiment of image printing system according to this invention.

Fig. 49 is operation screen for selecting a submenu of the post card printing in an embodiment of image printing system according to this invention.

Fig. 50 is guidance screen of the charge payment which is displayed when a post card datum for the post card printing is prepared in an embodiment of image printing system according to this invention.

Fig. 51 is the guidance screen for seeking an agreement to the automatic choice of the backyard printing in an embodiment of image printing system according to this invention.

Fig. 52 is an explanatory drawing which shows the outline of the second image printing system according to this invention.

Fig. 53 is an explanatory drawing which shows configuration example of the second image printing system according to this invention.

Fig. 54 is an explanatory drawing which shows another configuration example of the second image printing system according to this invention.

Fig. 55 is a perspective view which shows an example of the storage means for the second image printing system according to this invention.

Fig. 56 is a perspective view which shows the another example of the storage means for the second image printing system according to this invention.

Fig. 57 is a block diagram which shows an embodiment of the second image printing system according to this invention.

Fig. 58 is a flowchart which shows the procedure of the digital photo in an embodiment of the second image printing system according to this invention.

Fig. 59 is a flowchart which shows the procedure for backyard output part in an embodiment of the second image printing system according to this invention.

Fig. 60 is a guidance screen for inputting the collation information ( password ) in an embodiment of the second image printing system according to this invention.

Fig. 61 is a guidance screen for the confirmation of the order content in an embodiment of the second image printing system according to this invention.

Fig. 62 is a front view of printing apparatus of this invention.

Fig. 63 is a side view of printing apparatus of this invention.

Fig. 64 is condition explanatory drawing of the insertion port of various recording media.

Fig. 65 is flowchart which shows the flow of the printing operation in using PC card as a recording media.

Fig. 66 is a front view of an image adjustment screen provided for the image printing apparatus.

Fig. 67 is a front view of an image display screen within the image adjustment screen in the condition before the image adjustment

Fig. 68 is a front view of an image display screen within the image adjustment screen in the condition after the image adjustment

Fig. 69 is a front view of pre-cut seal after the image adjustment.

Fig. 70 is a front view of pre-cut seal in the state of having a transfer deviation

Fig. 71 is a reverse face view of a pre-cut seal.

Fig. 72 is a view of the essential part configuration of the printer.

Fig. 73 is an explanatory drawing of detecting condition of a detection mark.

Fig. 74 is the operation flowchart of the printer.

Fig. 75 is a front view of a conventional monitor screen of the image printing apparatus.

Fig. 76 is a front view which shows the condition that the image has come out from the cut line of a seal of pre-cut seal.

Fig. 77 is a view which explains an embodiment of information terminal table and information output system according to this invention.

Fig. 78 is a view of the upper surface of top board 13.

Fig. 79 is a view of a modified embodiment of the above embodiment.

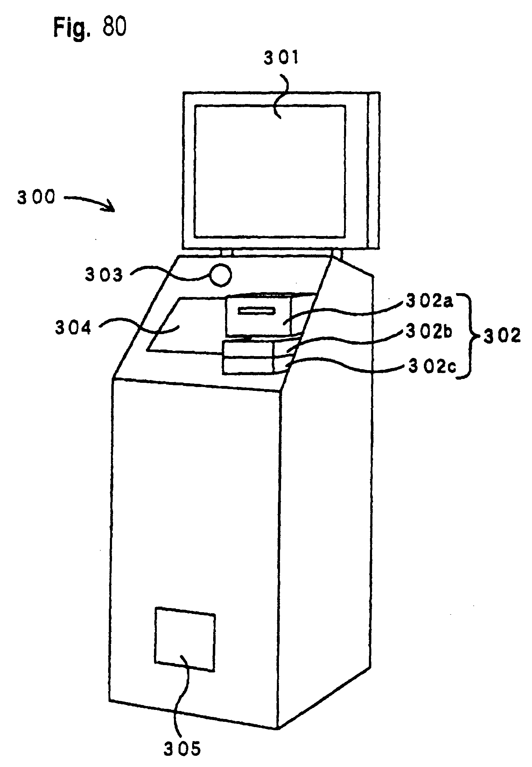

Fig. 80 is a view of an embodiment of the conventional information output machine.

### Description of the Preferred Embodiments

Now, the present invention will be explained in detail below with reference to some concrete embodiments. However, the present invention is not limited to such embodiments.

### Image Printing System of the First Aspect

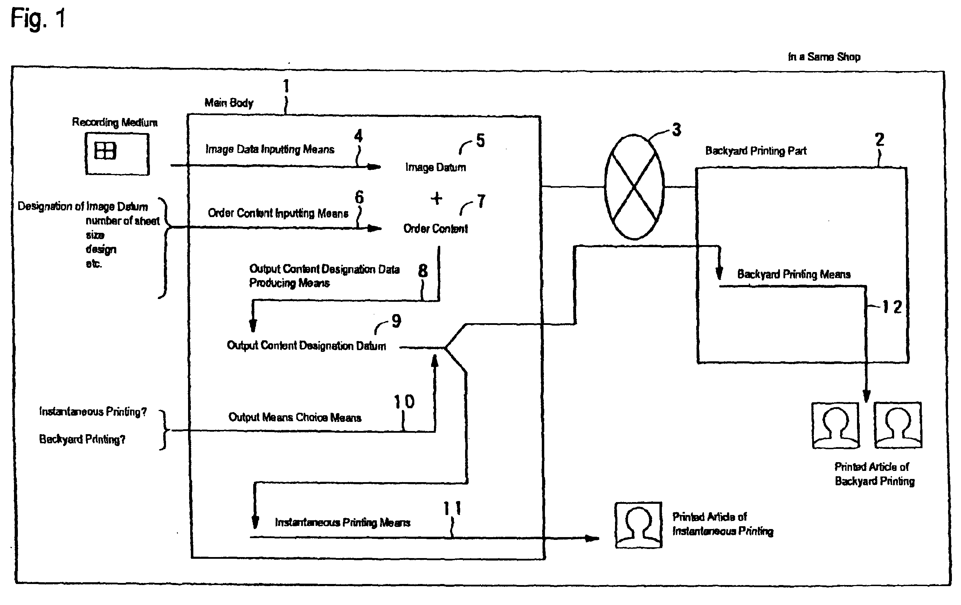

First, the outline of the present invention will be explained with reference to Fig. 1. An image printing system according to the present invention comprises a main body 1 capable of accepting an image printing (output) order and printing the same instantaneously and a backyard printing part 2 capable of receiving the image datum to be printed from the main body and backyard-printing the same, wherein the main body 1 and backyard printing part 2 are connected to each other via line 3. The line 3 may be an exclusive or open network line of various scales such as Internet, intranet, LAN. Alternatively, it may be a line which simply connects one main body with one backyard print part. In the embodiment shown in Fig. 1, the main body 1 and backyard print part 2 each store a separate housing independently, and thus they constitutes two physically separated apparatuses, and they are set at separate places (for example, the main body 1 is at the entrance of shop and the backyard print part 2 is at a side of cash counter of the shop ) in a same shop, and they are connected by the LAN.

The main body 1 comprises at least the following means, that is:
(1) an image data inputting means for inputting image data,
(2) an order content inputting means for inputting orders for an image to be output,
(3) an output content designation data producing means for preparing an output content designation datum which records the image to be output and appendix conditions for the image on the basis of the input image and the input orders,
(4) an output method choice means for selecting one of instantaneous printing and backyard printing, and
(5) an instantaneous printing means which prints out an printed article of the image in accordance with the output content designation datum when the choice at the output method choice means is the instantaneous printing.

On the other hand, the backyard printing part 2 at least comprises a backyard printing means which prints out an printed article of the image in accordance with the output content designation datum when the choice at the output method choice means of the main body 1 is the backyard printing.

In order to print a desired image utilizing an image printing apparatus according to the present invention, first, image data with a photograph image recorded, are inputted in a main body 1 by an image data inputting device 4. The image data to be inputted are mainly a photograph image taken by a digital camera or the like, and recorded in a recording medium as digital data, but it is not limited thereto. For example, a computer graphic image produced by a personal computer, digital image data of a synthesized image produced by the editing process of a photography by a personal computer, a photograph image provided already as a printed article, a synthesized image, a computer graphic image, a handwritten illustration or the like, can be used as well.

As the image data inputting device 4, for example, reading machines corresponding to each recording medium, such as a compact flash memory (CF), a smart medium, a compact disc (CD), a magneto-optic disc (MO), a flexible disc (FD), and a PC card, a connector to be connected with a digital camera, capable of reading image data from a memory of the digital camera, can be used. As the image data inputting device 4, a reading device such as a scanner for reading an image from a hard copy, a film, or another printed article so as to convert the same to digital data, can be used as well. By including an image reading device capable of directly scanning an image together with a recording medium reading device in the image data inputting device 4, even in case the digital image data are not provided, the image printing apparatus according to the present invention can be utilized. For example, in case the negative film is lost, additional prints can be provided easily from the printed photograph. It is preferable to include a plurality of reading devices of different kinds in the image data inputting device 4 in order to improve the applicability of the image printing apparatus of the present invention.

Next, the order content concerning the image to be output is inputted in the main body 1 using an order content inputting device 6. The order content is prepared preliminarily on the image printing device side so that a user can select one from the prepared content freely. It is preferable that the order content to be selected is shown to the user according to a display device (not shown) for guiding the inputting operation of the order content. As the display device, a color or monochrome CRT, a liquid crystal display or the like, are used commonly, but it can be a simpler device such as a display panel with the operation method shown in items. In addition thereto, a substitute display device such as various kinds of screen panels, plasma displays or the like, can be used as well.

As choices to be selected for the order content, for example, specification of at which frame the image to be printed is among the image data inputted for a plurality of frames, determination of the number of prints and the size, determination of whether or not special printing such as pre-cut seal or the like, is executed, and in addition, in case the printing system comprises the device or the function of processing the inputted images, such as trimming, enlargement/reduction, synthesis with a frame or the like, the design including the kind of the frame, the layout or the like, and other materials can be prepared.

As the order content inputting device 6, for example, various kinds of pointers such as a touch panel provided integrally with a display device such as a CRT, and a liquid crystal panel, a keyboard, a mouse, and a track ball, can be used. Moreover, the DPOF function (digital print order format) provided in a digital camera can be used as well.

When an image data 5 and an order content 7 are inputted, an output content designation data producing means 8 is driven in the main body 1. As a result, based on the image data 5 and the order content 7, output content designation data 9 including the image to be output, and the appendix conditions are produced. The output content designation data denote the data including the content to be commanded to a instantaneous printing device or backyard printing device, both mentioned below, for outputting a printed article as ordered, and which comprises the data for specifying the image to be output among the inputted image data, or the data for reproducing the image to be output, such as the image data processed based on the inputted image data, and the order content data other than the data of the image to be output, such as the number of prints, the size, and the kind of the paper.

In case the output content designation data 9 are produced according to the drive of the output content designation data producing device 8, the printed article of the image can be output by driving an instantaneous printing means 11 provided in the main body 1 or a backyard printing means 12 connected to the main body 1, based on the output content designation data 9.

In image print system of this invention, since the main body 1 has an output method choice means 10. the customer, or the owner or administrator of the image print system can freely choose either the instantaneous printing means 11 or backyard printing means 12 by using the output method choice means of 10 in order to output the printed article by the output means chosen.

In this invention, it may be set to deliver a printed article to the customer instantaneously by using the instantaneous printing means 11 of the main body 1, in case the printed article is of relatively high frequent orders, for example, standard size photo or pre-cut seal. It is advantageous to print out in the instantaneous printing means 11 in case the printed articles wanted is of such high frequent orders and the number of printed articles is relatively low, for example, in case one or few per each image photographed by the digital camera and recorded in the form of digital data in the storage media, or in case only one pre-cut seal is to be printed out.

On the other hand, it may be set to deliver a printed article to the customer by using the backyard printing means 12 , in case the printed article is of special kinds which is impossible to be printed by the instantaneous printing means 11, or in case it is possible to service the order with the instantaneous printing means 11, but not brings efficiency. For example, as the backyard printing means 12, the used is a printing device that is possible to print in a large size or to special articles such as mug and T-shirt, or a high-speed printer which is suitable for the case that a large number of the same designed printed articles are continuously printed out, for example, the printing of season greeting cards such as New year's cards or hot season cards.

Typically, in this invention, it is possible for the customer to choose freely the instantaneous printing means 11 or backyard printing means 12 by using the output method choice means 10.

When the system is made so that the customer can use the output method choice means 10, first, by displaying "instantaneously printing?", "backyard print ?", etc. in display means (not shown) such as liquid crystal panel and CRT, alternatives are indicated to the customer. Then, by making the customer who decides one of the alternatives operate an order content inputting means such as the touch panel and an common input means or exclusive selective buttons, the choice is input.

In the cases that the customer feels any inconvenience about the execution of the instantaneously printing, such case that there are many prints number of sheet, and case that the customer wants to return early after finishing only the order, etc., he can choose the backyard print. In case the backyard printing part is installed in the same shop, he may wait the backyard printing in the store, or he may once return and come up again. When the customer orders a special print such as large size print or print to a mug or T shirt, regardless of the customer's will, the output method choice means 10 automatically chooses the backyard printing. From the viewpoint of the customer, usually, the instantaneous printing would be more convenient. However, in case of large volume prints, by using the backyard printing, the waiting time may be shorten, or a choice of once return and coming up again would be given to the customer. Thus, in such case, the backyard printing is more advantageous to the customer. In addition, even when the customer wishes to obtain the special print which can not be processed by the immediate printing means, once the order is sent to the backyard print, he can obtain the specialty article. Thus, it is convenient.

On the other hand, when owner or administrator of the image printing system uses the output method choice means 10, at the administrator mode in which only the manager is operable, a branch condition for choosing whether the instantaneous printing means or the backyard printing may be set. Then, it is possible that the output method choice means 10 will automatically choose one of output means in accordance to the order content of the customer. Alternatively, at the administrator mode, the output means to be used may be fixed either as the instantaneous printing means or as the backyard printing, and the output method choice means 10 will activate only the output means fixed so as to do the printing.

As the branch condition for choosing whether the instantaneous printing means or the backyard printing, for instance, the number of sheets to be printed, time zones, types of desired print, etc. may be used. More concretely, it is possible to set the branch condition at the output method choice means 10 so as to select the backyard printing automatically when the ordered number of printings is more than the set number, when the order is issued in the busy hour, or when the order is of a special article such as a large print. In case the both of main body 1 and backyard printing part 2 are installed in the same shop, since it is possible to divide the orders between the instantaneous printing means and backyard printing means by using as the branch condition a predetermined print number, the customers may be automatically led into the printing means of lesser time for waiting. Thus, it is also advantageous to the customer. Even if the instantaneous printing means in the main body 1 has broken down, it is possible to work the main body 1, by setting the output method choice means 10 so that it gives directions for output only to the backyard printing means.

As described above, once the output method choice means 10 are driven in accordance with the choice input by the customer on the usual operational mode, or the choice input by the administrator of the system on the administrator mode, either of the instantaneous printing and backyard printing is chosen. Upon the choice of instantaneous printing, the instantaneous printing means 11 is activated, and the printing of the image printed article is performed instantaneously in accordance with the output content indication data 9. Similarly, upon the choice of backyard printing, the backyard printing means 11 is activated, and the printing of the image printed article is performed at backyard in accordance with the output content indication data 9. By the way, it is preferable to drive the output method choice means 10 after the driven of the order content inputting means. Because, it would be difficult to decide accurately whether the appropriated is immediate printing or backyard printing until the all of order contents are present out.

As the instantaneous printing means 11, a printer set corresponding to the printed article most frequently ordered is installed in consideration of the instant property capable of maximally performing the handiness of a post type image outputting apparatus, and the compactness capable of executing in the housing of the post type image outputting apparatus. In case the space for installing two or more printing devices is provided in the housing of the post type image outputting apparatus, it is preferable to add. for example, a printer set corresponding to a pre-cut seal printed article in order to maximally perform the handiness of the post type image outputting apparatus.

As the backyard printing means 12, various printers may be used in order to deal with the orders which are impossible to be processed with the instantaneous printing means 11 installed in the housing of the post type image outputting apparatus. For example, it is possible to use a high-speed printer or use an increased number of the same printers as that installed in the housing of the post type image outputting apparatus, in order to deal with the case of large volume prints. Further, it is possible to install an exclusive printer in order to deal with the case that a special printed article such as large size printed article, or article printed on mug, T-shirt or the like is required. It is possible to use as the backyard print means 12 a relatively large size printer, because it can be installed external to the housing of the post type image outputting device, and it is also comparatively easy to install a plurality of printers.

In case the housing of the post type image output device is amply large, the backyard printing means 12 may be installed in the housing in conjunction with the instantaneous printing means 11. When both the backyard printing means 12 and instantaneous printing means 11 are present in one housing of the post type image output device, by locating a discharge port for printed articles of the instantaneous printing mean 11 in front of the main body and locating a discharge port for printed articles of the backyard printing mean 12 at a side of main body, it is possible to move the customer who chooses the backyard print to the side in the main body division. Therefore, it is possible that the next customer will utilize the main body immediately, and the effect equal to that of the case in which the backyard print means of 12 is installed in housing out of the main body division would be attained.

As a concrete outputting method of the printing device 11 and backyard printing means 12, for example, an outputting method suitable for printing based on digital image data, such as the sublimation type thermal transfer method, the melting type thermal transfer method, and the ink jet, can be utilized.

In the main body 1 of the printing apparatus of the present invention, a fee charging means (not shown) may be provided for collecting the fee for outputting and providing an image. In case the fee charging means is provided, the fee charging means is driven after driving the order content inputting device, more preferably after driving the outputting method selecting device and before outputting a printed article by the drive of the instantaneous printing means or backyard printing means. It is preferable to show the amount to be collected by the fee charging means to a user on the display device (not shown) together with the order content. When the user inserts a bill and/or a coin in the fee charging means according to the guide of the amount display by the display device, the fee charging means calculates the accepted amount and returns the change if any. A fee receipt producing means may be provided in the fee charging means. The fee receipt producing means automatically produces the receipt having the collected amount and the order content printed thereon after completing the fee collection by the fee charging means. The receipt producing means may comprise a receipt producing eliminating means so that the producing of the receipt can be eliminated selectively in case the user does not need the receipt. In this case, after completing the collection of the fee, an operation guidance "Would you like a receipt published?" or the like is displayed on the display device (not shown) so that the user presses a corresponding touch panel button or keyboard for executing the choice of producing or not producing.

In the main body 1 of the printing apparatus of the present invention, an order receipt note producing means (not shown) may be provided for confirming the customer to be handed the printed article at the backyard, when the customer chooses the backyard printing at the output method choice means. In the order receipt note, information for identifying a customer who comes to receive the printed article with the customer who orders the printing article (the customer identification information) is mentioned. For example, the customer identification information may be receipt number, receipt date and time, ordered print menus, order picture-frame number, order number of printings, names, telephone numbers, etc. It is preferable that place and time for the delivery are mentioned in the order receipt note in addition to the customer identification information. For example, by combining optionally the information on the schedule for delivery such as schedule time for delivery, delivery place, with the customer identification information such as name, telephone number of the customer, receipt number, receipt date and time, the order receipt note is printed out. The clerk (supplier of the image print system) in the backyard print division is possible to surely deliver the printed article to the ordered customer by confirming the content of the order receipt note which the customer brings along. In case the order receipt note producing means is provided, the order receipt note producing means is driven after the backyard print is chosen by the output method choice means.

Further, In case the order receipt note is thus produced, it is desirable to provide the backyard printing part 2 with a collation sheet printing means so as to print out a collation sheet which functions as a shop side's stub. In the collation sheet, at least a part of or all of the customer identification information mentioned in the order receipt note is mentioned, It is desirable that the collation sheet printing means is driven just before or just after the backyard printing means is driven, or concurrently with the backyard printing. When the customer who comes to the backyard print part to receive the printed articles shows the brought order receipt note to the clerk, then the clerk identifies the customer identification information in the order receipt note with that of the collation sheet which is attached to and stored with the printed article. The customer cannot receive the printed article until the clerk can confirm the identity between these. It is possible for the clerk to confirm very easily the identity of the customer who comes to receive the printed article, by checking the content of the order receipt note as a customer side's stub with the collation sheet as a shop side's stub. The order receipt note and collation sheet may have only the customer identity information which is given by the image printing system on its own authority, such as receipt number, receipt time, and ordered print menu. It is preferable, however, they also have as the customer identity information a personal information which is unknown until the customer provides, such as the name and phone number of the customer in order to confirm more surely the identity of the customer who comes to receive the printed article. Further, once the phone number or other contact address of the customer is obtained, it is possible to deal with query appropriately, even when the customer does not come to receive the printing articles. It is also possible to decrease the possibility of false delivery when the collation sheet has an at-a-glance chart for a part of or all of ordered printings (scaled-down printings).

In case the offer of personal information from the customer is desired, the system have the personal information from the customer at the personal information inputting means by his input operation after the backyard printing is selected by implementation of the output means choice means. Then, the order receipt note producing means would be driven. For example, after the backyard print is chosen by the implementation of the output method choice means, a guide screen which displays the items of the private information to be required appears in a display means (not shown), and then, by making the customer operate an order content inputting means 6 such as the touch panel and an common input means, the personal information to be printed in the order receipt note is input. Once the input of the personal information is completed by the implementation of such personal information inputting means, the order receipt note producing means prints out the receipt note that has the customer identification information including the personal information. In case the offer of the personal information may not be required, however, the order receipt note producing means prints out the receipt note immediately after the backyard print is chosen by the implementation of the output method choice means, since there is no necessity of receiving the personal information from the customer.

The order receipt note producing means and fee charging means may be cooperated. For example, the following procedure may be adapted. Namely, at first, the system allows the customer to input the personal information at the personal information inputting means, then, allows the customer to pay the fee, and at last, prints out a fee and order receipt note that has the information to be printed in the above order receipt note for confirmation of the customer and also has the information to be printed in the above fee receipt sheet such as the amount of collected fee.

In the image printing system according to this invention, in order to supplement the printing ability without detriment to the easiness as the post type image outputting apparatus, it is preferable to install the main body 1 and backyard printing part 2 in the same shop so that the orders which are impossible, or are not of efficient to process with the main body 1 can be treated with the backyard printing part 2 which locates by the side of the main body 1. However, the backyard printing means 2 may be installed at a distance from the main body 1 with any line for connecting therebetween.

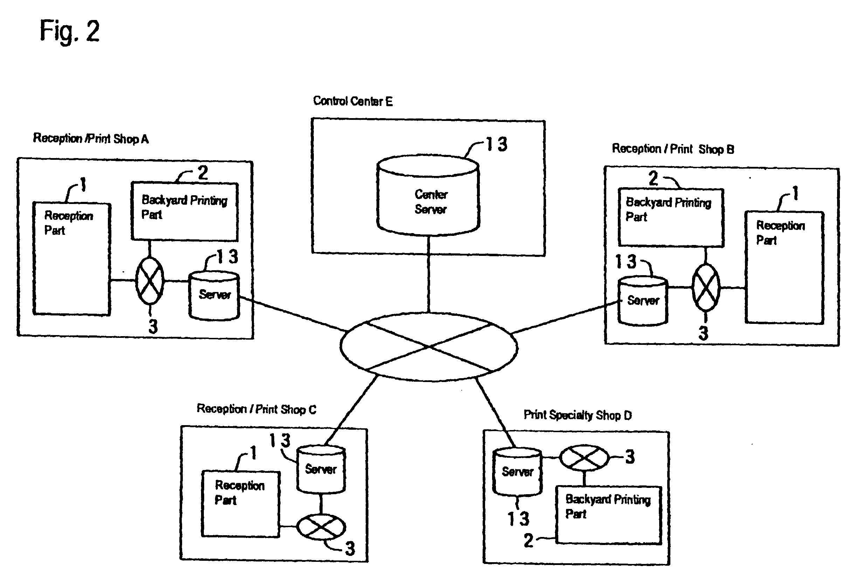

Further, in the image print system according to this invention, as shown in Fig. 2, it is possible to connect a sole main body, a sole backyard printing part, and some units each having a main body and a backyard printing part, which are far away from each other, via network such as intranet or Internet. In this case, the customer may order at any one of the reception /print shop A, the reception /print shop B, the reception specialty shop C as shown in Fig.2, and then receive the printed article at any one of the reception /print shop A, the reception /print shop B, and the print specialty shop D. It is possible to control with the center server 13 in the control center E the order situation and printing situation of the shops connected via network. Therefore, it is possible that the customer does receive the printed article at a place which is completely far away from the place where the customer orders the printing articles, and that is convenient. In addition, the system owner or administrator may install various shops at various locations so as to respond to the customer needs, by selecting optimally from the modes of the shop having both reception 1 and backyard output part 2, the shop having only reception, and the shop having only backyard printing part, since in such construction all of shops are not necessitated to have both the reception 1 and backyard output part 2.

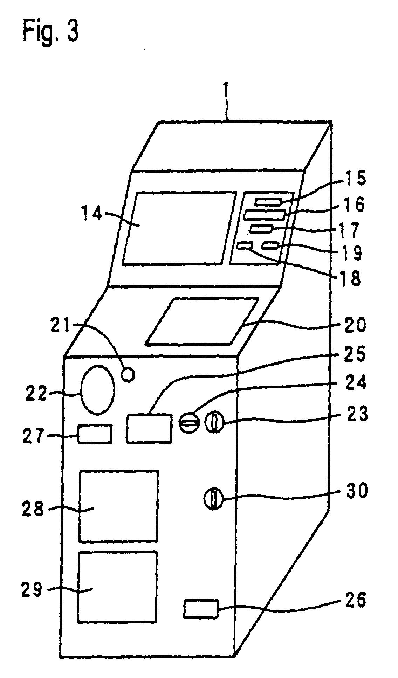

Next, an embodiment according to the present invention will be explained with reference to the drawings. Fig. 3 shows the external appearance of the main body used in the embodiment of the image printing system according to the present invention. In Fig. 3, a screen of a monitor 14 with a touch panel is disposed on the upper front surface of the main body 1. The monitor 14 with a touch panel may be a CRT or liquid crystal panel. The monitor 14 with a touch panel performs as a display device for displaying the operation guidance, the operation state, the read out image or the processed image or the like as well as a device for the inputting operation for inputting an order content, inputting an output method chosen, producing an order receipt note, inputting personal information or the like.

Insertion ports 15 to 19 for various recording media are provided sideways to the monitor 14 with a touch panel . A scanner reading surface 20 is provided on a horizontal part dividing the upper part and the lower part for reading the image of a printed article and processing the same to digital data. In this embodiment, these are a part of the image data inputting means. In this embodiment, as the insertion ports for the various recording media, specifically, a flexible disc insertion port 15, a CD-ROM insertion port 16, a PC card insertion port 17, a smart medium insertion port 18, and a compact flash insertion port 19 at a position on the whole. Moreover, the main bodies of each reading device are installed inside the housing of the main body 1 corresponding to the insertion port of each recording medium. A shutter (not shown) may be provided on each insertion port so that the recording medium cannot be taken out until collection of the fee is completed.

In the lower part of the main body 1, a maintenance key 21, a speaker 22, a coin insertion port 23, a coin return lever 24, a bill insertion port 25, a change return port 26, a receipt outlet port 27, a printed article (for standard printing) outlet port 28, a printed article (for pre-cut seal) outlet port 29, and a front door port/closing key 30 are disposed. The maintenance key 21 is a key for switching an ordinary drive mode capable of accepting a customer, and an administration mode for setting the image printing system or maintenance by an administrator. The speaker is for reproducing the sound, BGM, effect sound or the like while waiting or operation.

In this embodiment, the coin insertion port 23, the coin return lever 24, the bill insertion port 25, and the change return port 26 constitutes a part of the fee charging means. A customer would pay for the fee by inserting a coin in the coin insertion port 23 and/or inserting a bill in the bill insertion port 25. In case there is a change, it is discharged from the change return port 26 so that it is received by the customer. Moreover, In case a coin is choked, it is discharged from the change return port 26 by turning the coin return lever 24 so that it is received by the customer.

In this embodiment, the receipt outlet port 27 constitutes a part of the fee receipt producing means and the order receipt note producing means. When the customer selects the instantaneous printing, a fee receipt with the collected amount and the order content printed is discharged from the receipt outlet port 27. When the customer selects the backyard printing, a fee and order receipt where the items mentioned for fee receipt such as the collected amount and the order content as well as the items mentioned for order receipt such as the receipt number, customer's phone number, and the time possible to receive the article are printed is discharged from the receipt outlet port 27.

In this embodiment, the printed article (for standard printing) outlet port 28 and the printed article (for pre-cut seal) outlet port 29 constitute the instantaneous printing means. In case the customer designates the instantaneous printing, after inputting the command, the customer waits completion of the printing process in front of the main body 1 so as to receive a printed article discharged from the printed article outlet port 28 or the printed article outlet port 29. In case the customer designates the backyard printing, the customer leaves from the front of the main body 1, and go to the backyard printing part 1 which is at a place apart from the main body to receive the printed article, after the customer finished the order.

By turning the front door port/closing key 30, the front door is opened so that the maintenance work for each device installed inside the housing can be executed. In the housing of the main body 1, each main body is installed corresponding to the screen of the monitor with a touch panel, the insertion port, and the scanner reading surface. A volume adjusting part is installed corresponding to the speaker 22. Corresponding to the coin insertion port 23, the coin return lever 24, the bill insertion port 25, and the change return port 26, a coin mech (coin processing device) for identifying the coins, storing, and returning the change, a bill bari (bill processing device) for identifying the bills, and storing, and a safe for storing the coins In case the coin mech is fill, are installed. Corresponding to the receipt outlet port 27, a receipt printer is installed. Furthermore, corresponding to the printed article outlet port 28, and the printed article outlet port 29, a printer is installed.

Moreover, although it is not apparently recognized by the external appearance, inside the housing of the main body 1, a personal computer including a control unit for controlling each device in the main body 1, a power source box for converting the voltage, an interruptible power supply device for preventing breakage of the CPU, the hard disc or the like in the control unit at the time of blackout or the like are installed.

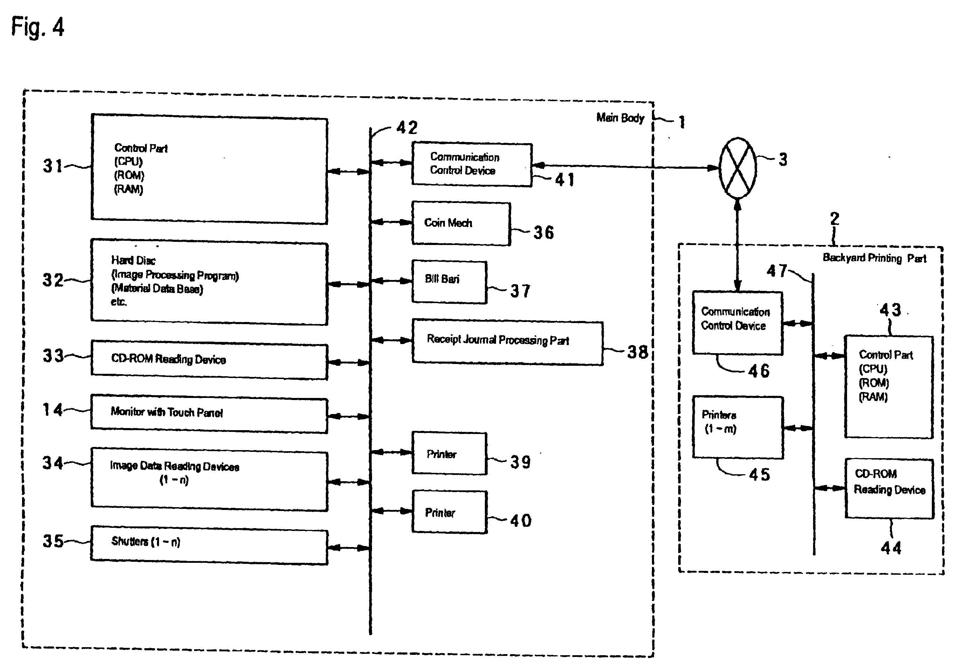

Fig. 4 shows a block diagram according to an embodiment of an image printing system having the main body 1 shown in Fig. 3. In this embodiment, the main body 1 comprises a control unit 31, a hard disc 32, a CD-ROM reading device 33, a monitor 14 with a touch panel , n sets of image data reading devices 34, n sets of shutters 35, a coin mech 36, a bill bari 37, a receipt journal processing part 38, two sets of printers 39, 40, and a communication control device 41, connected via a bus 42. The backyard printing part 2 comprises a control unit 43, a CD-ROM reading device 44, m sets of printer 45, and a communication control device 46, connected via a bus 47. The main body 1 and backyard printing part 2 each are connected to line 3 via their respective communication control device 41 and 46.

The control unit 31 of the main body 1 comprises a CPU, a ROM, and a RAM for controlling the drive of the devices connected via the bus according to a program stored in the hard disc 32 as a large scale memory medium. In the hard disc 32, programs for controlling the drive of the devices, such as a reading program corresponding to each recording medium, an port/closing control program for the shutters, a fee charging program or the like, as well as an image processing program for processing an inputted image, a material data base storing information of frames to be used for the image synthesis, a branch condition for selecting automatically the backyard printing as the method for output of the ordered image, or the like, are stored so as to be read out as needed and stored in the RAM for driving various devices. The CD-ROM reading device 33 is used for upgrading the version of programs or any information stored in the ROM or the hard disc of the main body 1 such that a CD-ROM for upgrading the version is inserted in the CD-ROM reading device 33 for rewriting the data with the main body switched to the administration mode by the maintenance key.

In Fig. 4, by selecting and executing the touch panel buttons displayed on the monitor 14 with a touch panel according to the operation guidance displayed on the monitor 14 with a touch panel of the main body 1, a series of the operation for reading the image data to the output of a printed article can be executed. In this embodiment, first, the menu of the printed article is selected according to the operation guidance displayed on the monitor 14 with a touch panel , and In case the touch panel button is pressed, an operation screen for guiding the input of the image data is shown on the monitor 14 with a touch panel .

The image data reading devices 34 include various reading devices 1 to n corresponding to various kinds of recording media so that the customer can input photography image data recorded in a recording medium he or she has into the main body 1 using the corresponding reading device. The image data reading devices 34 also include a scanner so that an image can be read out from a printed article, processed to be digital data, and inputted into the main body 1. In case the image data reading devices 34 are not dedicated for reading but also they can record image data in a recording medium, the customer can store the image data of the processed image produced by operating the main body 1 and take it home with the customer. The shutters 35 are provided at the recording medium insertion ports of the reading devices 1 to n so that the taking out operation of the recording medium can be prohibited during the reading process, or until the fee charging process is completed by port or closing the recording medium insertion port.

When the images provided by the customer are inputted as digital data using the image data reading devices 34 according to the operation guidance on the monitor 14 with a touch panel , the inputted image is shown on the monitor 14 so that an image can be selected according to the operation guidance of the monitor 14 with a touch panel . At the time, it is convenience to show the images as a thumb nail image or the like, and select an image by the touch panel method.

When an image is selected, an image processing program is executed according to a printing menu already selected. The customer can process the image, such as reduction, enlargement, rotation, deformation, synthesis with another image or the like according to the operation guidance on the monitor 14 with a touch panel . At the time, image materials stored in the material data base, such as picture frames can be utilized as well.

After completion of the process or synthesis of the image, according to the operation guidance on the monitor 14 with a touch panel , the order content other than the printing menu and the process content, such as the number of prints, the print size or the like, is inputted. Also at the time, the order content can be inputted by pressing a button or ten keys displayed on the touch panel. In case a printing menu not requiring the process or synthesis of an image is selected at the time of the start, the operation screen for guiding the process or synthesis operation is eliminated so that the operation guidance for guiding the other order content is displayed immediately.

After all the order content is inputted, in monitor 14 with the touch panel, the screen for selecting whether the ordered image is to be printed instantaneously or at the backyard is displayed, and the output method desired is selected from the two by pushing one touch panel button which represents the output method desired. Still, there is a case in which the ordered print article cannot be processed by the printers of 39 or 40 installed in main body 1. Further, there is a case in which the system is set by the supplier of the system so that certain printing articles ordered are automatically processed with the backyard printing means in accordance with the fixed branch condition, or so that all of printing articles ordered are automatically processed with the backyard printing means. In these cases, the screen for selecting whether the ordered image is to be printed instantaneously or at the backyard is not displayed. Instead of this, a notice screen that the order is automatically sent to the backyard printing means, or a confirmation screen for acquiring an agreement for the backyard printing of the order would be displayed.

In accordance with the above selection of the instantaneous printing or of the backyard printing, the following operation procedure is varied.

When the instantaneous printing command is provided according to the operation guidance on the monitor 14 with a touch panel , the charged fee is displayed on the monitor 14 together with the order content and the fee payment is requested. When a coin is inserted and/or a bill is inserted to the main body 1 according to the payment request, the coin mech 36 and/or the bill bari 37 is driven so as to execute the fee charging process such as judgment of genuineness of the coin or bill inserted to the main body 1 for the fee payment, the judgment of the kind thereof, the amount calculation, the discharge of the change or the like. In case the instantaneous printing operation is commanded, after finishing the fee charging process, the receipt journal part 38 prints the printing menu. the collected fee amount or the like on a receipt paper and discharges the receipt. The system can be set so as to eliminate the drive of the fee charging means In case request of the fee payment is not needed.

After the discharge of the receipt, the shutter is opened so as to enable taking out of the inserted recording medium so that the operation screen for guiding the take-out of the recording medium is displayed on the monitor 14 with a touch panel. When the recording medium is taken out, a printed article is output by the printer 39 or 40. The printer 39 can output a standard size printed article with a standard image quality, and the printer 40 can output a pre-cut seal printed article.

When the backyard printing command is provided according to the operation guidance on the monitor 14 with a touch panel , the input of the personal information which is necessitated for the identification of the customer upon the receipt of the printing articles at the backyard printing part is required, and then it is provided from the customer by his pushing operation of the touch panel buttons or ten-key numerical pad according to the operation guidance on the monitor 14 with a touch panel . After the completion of the input of personal information, the charged fee is displayed on the monitor 14 together with the order content and the fee payment is requested. The charging process in this case is similar with that of the above mentioned instantaneous printing case. In case the backyard printing is selected, after finishing the fee charging process, the receipt journal part 38 prints the items mentioned for fee receipt and the items mentioned for the customer identification information on a receipt paper and discharges the fee and order receipt note. Similar as the instantaneous printing case, the system can be set so as to eliminate the drive of the fee charging means in case request of the fee payment is not needed.

After the discharge of the fee and order receipt note, the shutter is opened so as to enable taking out of the inserted recording medium so that the operation screen for guiding the take-out of the recording medium is displayed on the monitor 14 with a touch panel. When the recording medium is taken out, the order content indicating data recorded at RAM, hard disc in the main body 1 or another storage region (not shown) is sent to the backyard printing part 2 through the communication control device 41 of the main body and network 3. To the backyard printing part 2, the customer identification information including the personal information and other data to be described in the collation sheet are also sent to the backyard printing part 2.

The control unit 43 of the backyard printing part 2 comprises a CPU, a ROM, and a RAM for controlling the drive of the devices connected via the bus according to a program stored in ROM or another storage region (not shown). The backyard printing part is also provided with a CD-ROM reading device 44 and the device is used for upgrading the version of programs in the ROM of the backyard printing part 2.

The order content indicating data and customer identification information data transmitted from the main body 1 are read out through the communication control device 46 for the backyard printing part 2, and it is transmitted to any of m set of printers 45 that driving is controlled by control unit 43 to output the printed article. It is possible that printers 45 of backyard printing part 2 meet the order which can not be processed by the instantaneous print, and it is possible that for example, it is high-speed, and that the large printed article is output within the short time and that it outputs special printed articles such as the large size one. In case of the backyard printing with the printer 45, it is preferable that an index print (shop side's stub) is also printed out. The index print has the same information as at least a part of, preferably all of, the customer identification information mentioned in the fee and order receipt note (customer side's stub) in order to confirm the customer to be handed the printed articles.

Next, the procedure of the order accept process and the printing process according to an embodiment of an image printing apparatus of the present invention will be explained with reference to a flow chart and the indication on the monitor 14 with a touch panel.

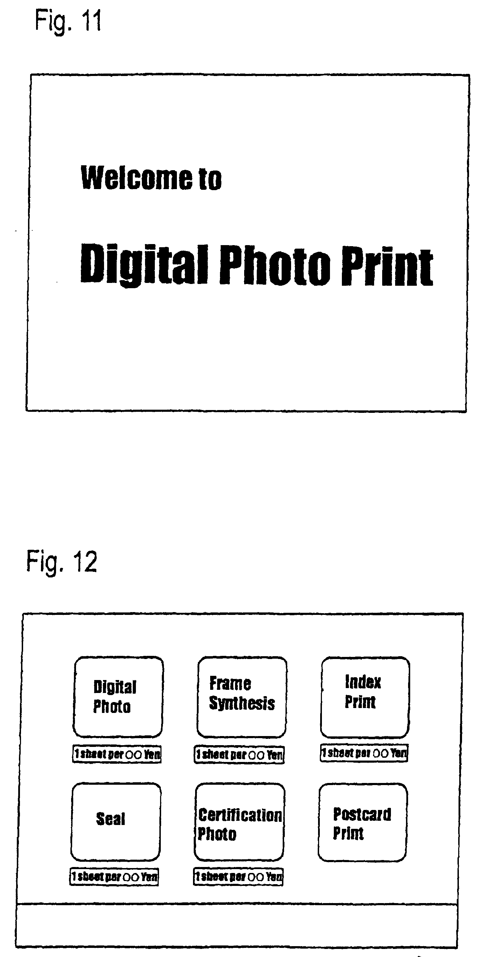

In the embodiment of the image printing apparatus according to the present invention, a start screen as shown in Fig. 11 is displayed on the screen of the monitor 14 with a touch panel in the main body. In case an optional position of the start screen is touched by a hand, a main menu screen as shown in Fig. 12 is indicated. In case the main menu screen is left for a predetermined time, it returns to the start screen. In the main menu screen, the kinds of the printed articles to be selected are shown. Specifically, touch panel buttons for the "digital photo", the "frame synthesis", the "index print", the "seal", the "certification photograph", and the "postcard print" are shown in the upper and lower two rows.

In case the "digital photo" is selected in the main menu screen and the touch panel button thereof is touched, a print out can be provided by reading the image data from a smart medium, a PC card, a compact flash card, a CD-ROM, or a flexible disc (FD), or reading the image data from a printed article such as a photograph using a scanner.

In case the "frame synthesis" is selected, a print out can be provided by reading the image data from a smart medium, a PC card, a compact flash card, a CD-ROM, or a flexible disc (FD), or reading the image data from a printed article such as a photograph using a scanner, and synthesizing the read out image and a frame prepared by the system side.

In case the "index print" is selected, an index print with a thumb nail image displayed can be printed out by reading the image data from a smart medium, a PC card, a compact flash card, a CD-ROM, or a flexible disc (FD).

In case the "seal" is selected, a pre-cut seal can be printed out by reading the image data from a smart medium, a PC card, a compact flash card, a CD-ROM, or a flexible disc (FD), or reading the image data from a printed article such as a photograph using a scanner, and synthesizing the read out image and a frame prepared by the system side. In the pre-cut seal, a plurality of small screens (frames) of the same image are printed, with each small screen divided by half cut.

In case the "certification photograph" is selected, an image for the certification photograph is taken by a digital camera in the shop so as to be stored in a flexible disc, and then, the stored image data are read out by the main body so that they can be printed out after selecting the size from the driver's license size, the curriculum vitae size, the passport size, and the visa size, and selecting color or monochrome.

In case the "post card print" is selected, a print can be provided by reading the image data from a smart medium, a CF card, a flexible disc (FD), a PC card. or a CD-ROM, or reading the image data from a printed article such as a photograph using a scanner, producing the postcard data by processing the read out image, and reading the postcard data from the recording medium storing the same.

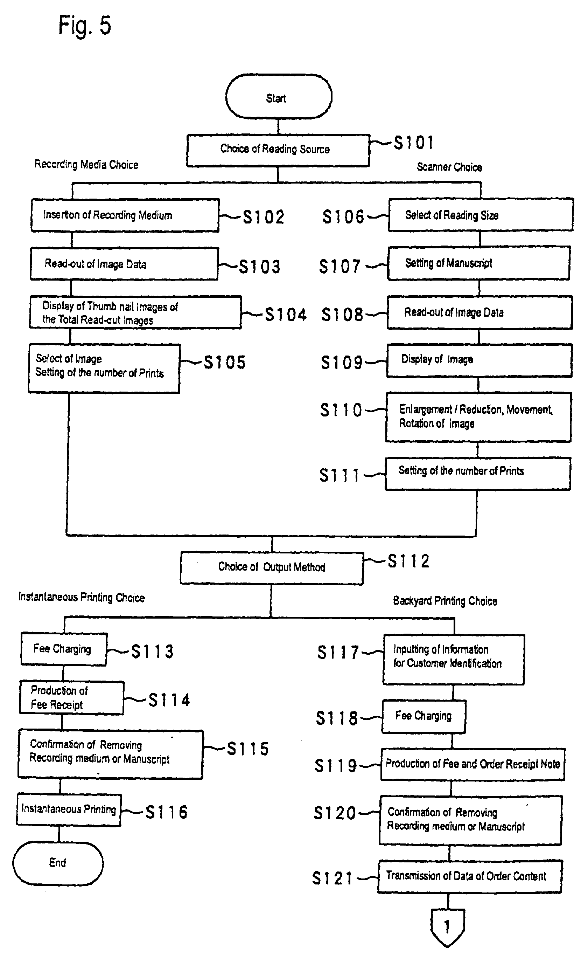

First, the procedure in case the "digital photo" is selected will be explained. In the main menu screen, if the "digital photo" position is touched by a hand, the "digital photo" procedure shown in Fig. 5 is started. In each operation screen to be indicated after the start of the "digital photo" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

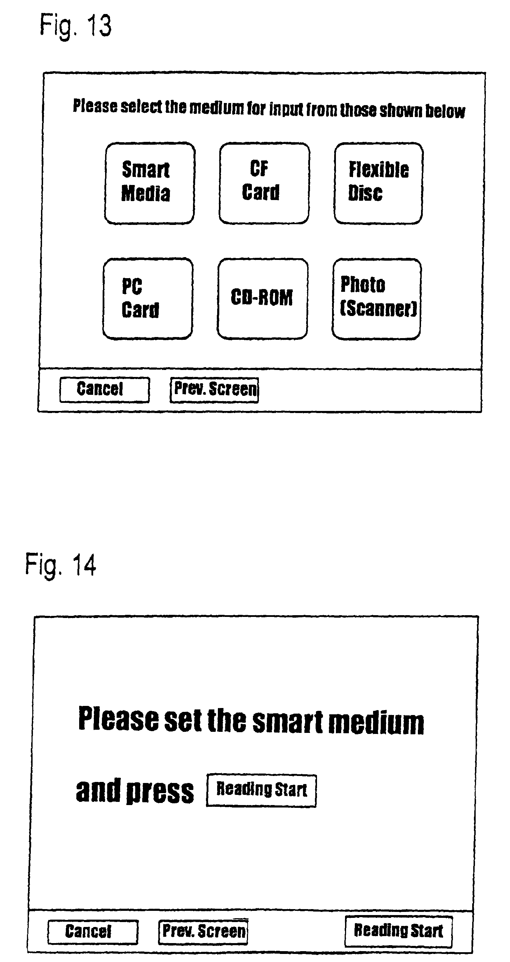

In case the "digital photo" procedure is started, as shown in Fig. 13. an operation screen with the image data reading sources shown is indicated so that a reading source can be selected (S101). In the operation screen at the time, the message "please select the medium for input from those shown below" is shown laterally in the uppermost row, and therebelow, the touch panel buttons each with the name of the smart medium. the compact flash card (CF card), the flexible disc, the PC card, the CD-ROM, and the photograph (scanner) are shown. In the operation screen, in case a touch panel button is touched by a hand, the corresponding reading source is selected.

If any of the reading sources is selected from the smart medium, the CF card, the flexible disc, the PC card, and the CD-ROM, the operation screen showing the inserting method corresponding to the selected recording medium is indicated so that the recording medium can be inserted (S102). Thereafter, the procedure of S103 to S105 follows.

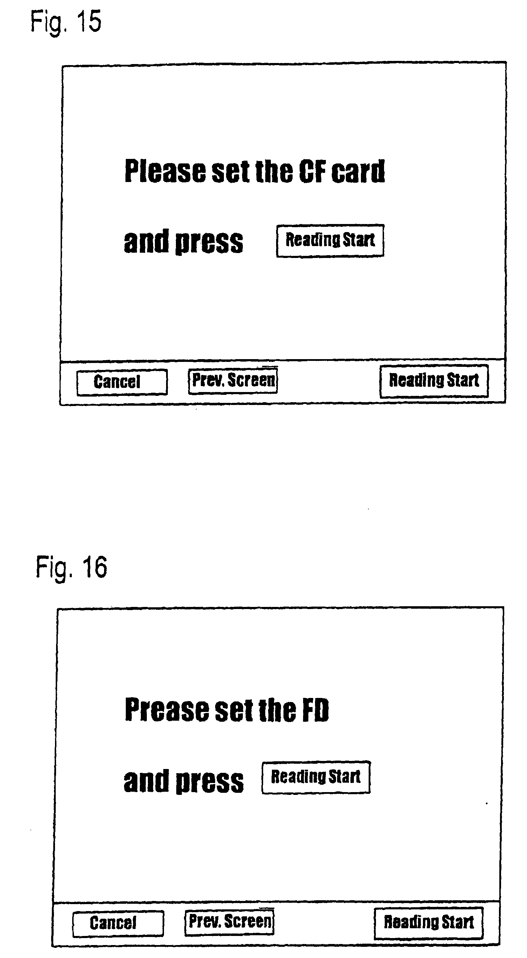

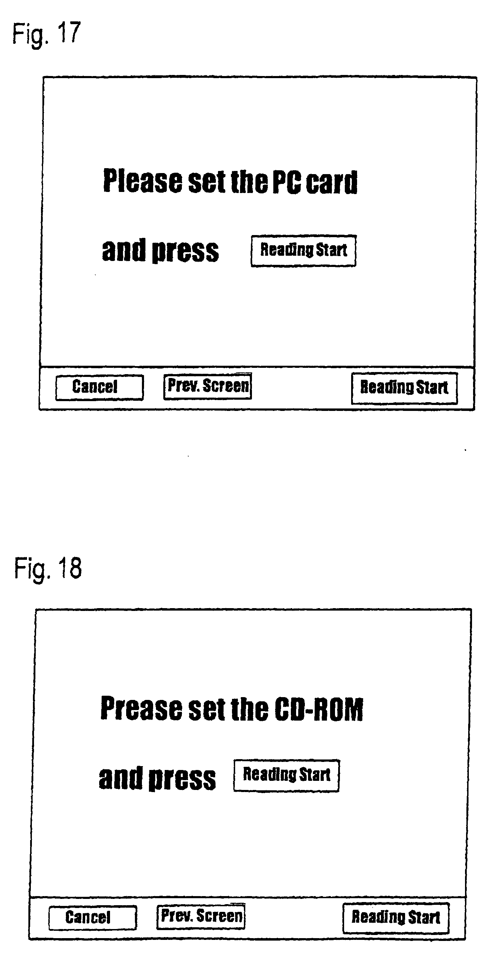

In the operation screen in case the smart medium is selected, as shown in Fig. 14, the message "please set the smart medium and press the reading start" is shown laterally in the uppermost row, and a "reading start" button is provided in the lowermost row together with the "cancel" button and the "return to the previous screen" button. Similarly, in case the CF card is selected, the operation screen shown in Fig. 15 appears. In case the flexible disc is selected, the operation screen shown in Fig. 16 appears. In case the PC card is selected, the operation screen shown in Fig. 17 appears. And in case the CD-ROM is selected, the operation screen shown in Fig. 18 appears.

In case a recording medium is inserted in the predetermined insertion port according to the guidance of the operation screen (S102) and the reading start button on the touch panel is touched by a hand, the insertion port with the recording medium inserted is closed by the shutter so as to start the reading operation of the image data (S103).

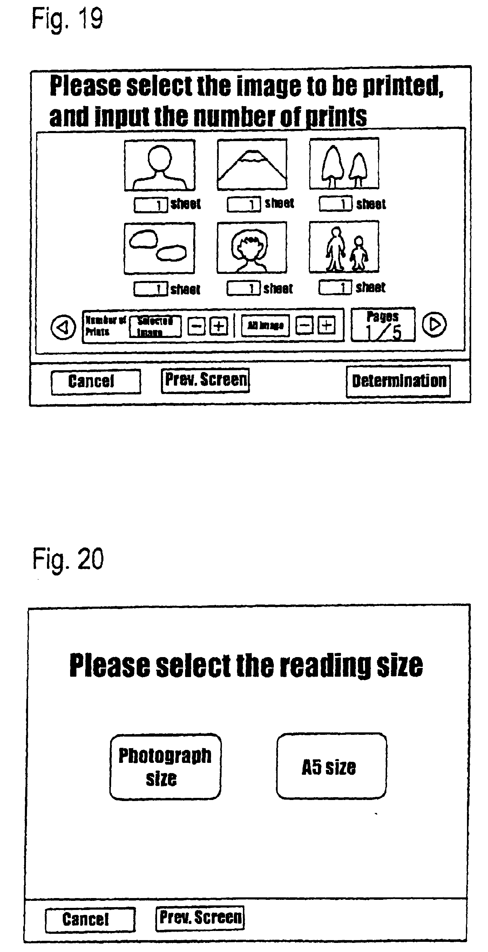

As shown in Fig. 19, the operation screen with the thumb nail images of the total read out images shown appears (S104) after the reading operation is completed. In the operation screen at the time, the message "please select the image to be printed, and input the number of prints" is shown laterally in the uppermost row, and therebelow, total 6 thumb nail images are shown in the two rows laterally, with the column for inputting the number of prints provided to each thumb nail image. Below the thumb nail images, "+" and "-" buttons for increasing or reducing the number of prints, and "+" and "-" buttons for the total images are provided. By selecting a thumb nail image on the screen for selecting the image, and touching the "+" and "-" buttons for the "selected image", the number of prints for the selected image can be increased or reduced individually. In contrast, by touching the "+" and "-" buttons for the total images, the number of prints can be increased or reduced for all the images displayed on the screen.

In case the number of the thumb nail images so large than they cannot be shown on one screen, all the thumb nail images are shown, divided in a plurality of pages. The page number currently appearing on the screen and triangular scroll buttons for moving forward or backward among the pages are displayed on the screen in the same row as the buttons for increasing or reducing the number of prints. Moreover, in the lowermost row of the operation screen at the time, a "determination" button is provided together with the "cancel" button and the "return to the previous stage" button. By selecting the images to be printed in the operation screen, setting the number of prints for each image, and pressing the determination button, the order content is set (S105).

In the "digital photo" procedure, it is also possible to select the "photograph (scanner)" as the reading source so that the image data are read out from a printed article such as a photograph using a scanner (S106 to S111). In the operation screen shown in Fig. 13, in case the "photograph (scanner)" is selected as the reading source, as shown in Fig. 20, the operation screen for selecting the reading size appears (S106). In the operation screen at the time, the message "please select the reading size" is shown laterally in the uppermost row, and therebelow a button for selecting the photograph size and a button for selecting the A5 size are provided. In case the photograph size is selected, a manuscript of a size within the ordinary photograph size of vertically 89 mm × laterally 127 mm can be read. In case the A5 size is selected, a manuscript of a size over the ordinary photograph size up to vertically 148.5 mm × laterally 210 mm can be read.

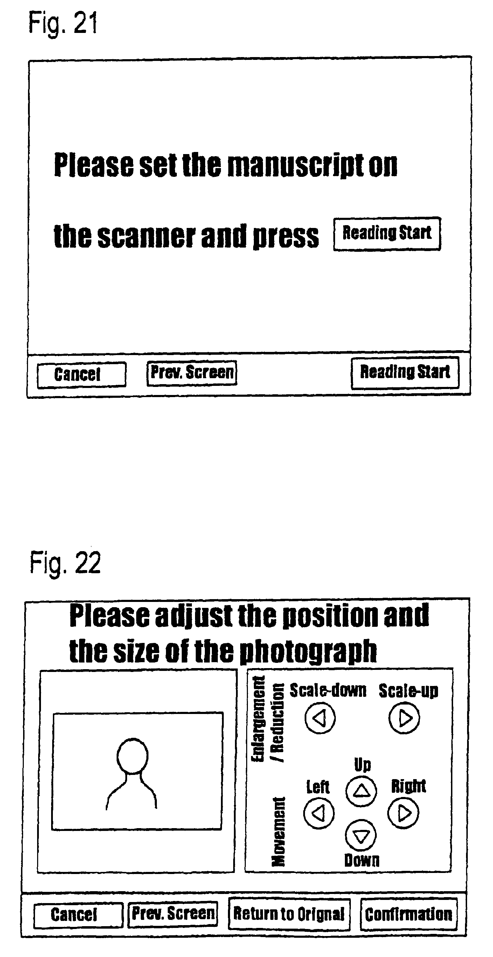

In case the button for the photograph size or A5 size is touched, the corresponding reading size is selected so that the operation screen for reading the manuscript by a scanner appears as shown in Fig. 21 (S107). In the operation screen at the time, the message "please set the manuscript on the scanner and press the reading start" is shown laterally in the uppermost row, and the "reading start" button is provided in the lowermost row together with the "cancel" button and the "return to the previous screen" button.

In case the manuscript is set on the scanner and the reading start button is touched according to the operation screen shown in Fig. 21, the manuscript is scanned and read so as to obtain the image data (S108). When the reading operation is finished, as shown in Fig. 22, an operation screen is appeared with displaying the read out image. In the operation screen at the time, the message "please adjust the position and the size of the photograph" is shown laterally in the uppermost row, and below the message on the half side, the read out image is displayed, and on the other half side, operation panels for the enlargement/reduction, and the movement are disposed in two rows vertically. In the lowermost row, the "cancel" button, the "return to the previous screen" button, the "return to the original" button, and the "confirmation" button are provided.

In the enlargement/reduction panel, a scale-up button and a scale-down button are provided so that the size of the read out image can be changed by touching these buttons. In the movement panel, movement buttons for upward, downward, leftward and rightward are provided so that the position of the image can be adjusted by touching these buttons. In case the return to the original button is pressed, it returns to the original image size and the position. In case the confirmation button is touched after finishing the image adjustment, the image adjustment is completed (S110).

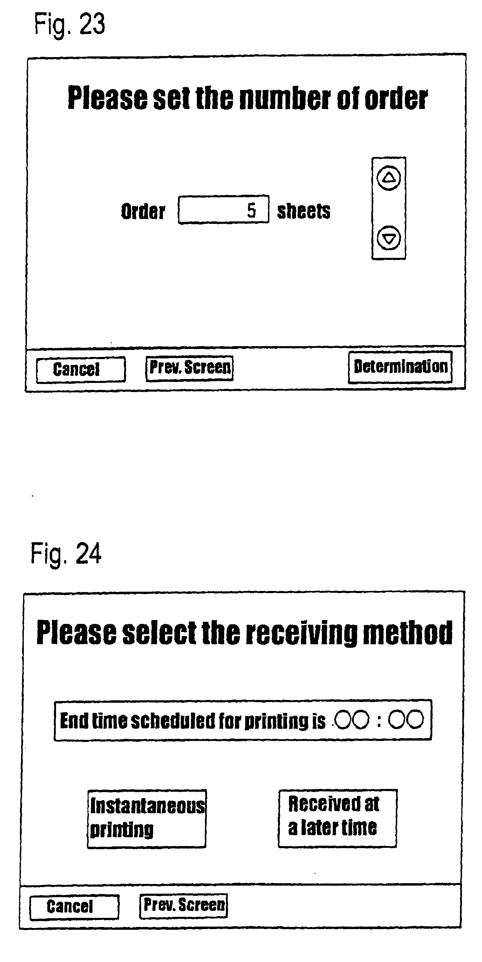

In case the image adjustment is completed, as shown in Fig. 23, the operation screen for setting the number of prints for the image appears (S111). In the operation screen at the time, the message "please set the number of order" is shown laterally in the uppermost row, and below the message, a column for inputting the number of order and input buttons for increasing or reducing the number of order are provided. In the lowermost row, the "cancel" button, the "return to the previous screen" button, and the "determination" button are provided. The input buttons include a number increase button of an upward triangle, and a number reduction button of a downward triangle. By touching these, the number of order can be increased or reduced. By touching the determination button after finishing the input operation, the order content including the number of order can be set (S111).

When the order content is set by reading the image data from a recording medium (S105), or the order content is set by reading the image data from a printed article such as a photograph by a scanner (S111), as shown in Fig. 24, an operation screen for selecting the output method appears. In the operation screen at the time, the message "please select the receiving method" is shown laterally in the uppermost row, and below the message, an end time scheduled for printing is shown, and below the message, the "instantaneous printing" button which would be selected when the customer wishes to receive the printed article instantaneously at the receipt part, and the "received at a later time" button which would be selected when the customer wishes to receive the printed article at the backyard printing part are provided. In the lowermost row, the "cancel" button, and the "return to the previous screen" button are provided.

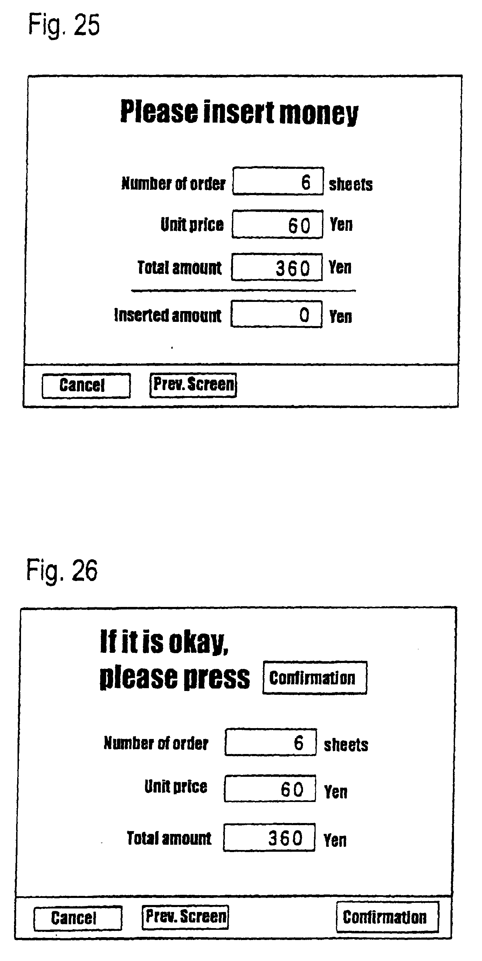

When the instantaneous printing is selected in this screen, as shown in Fig. 25, the guidance screen for charging the fee appears for executing the fee charging process (S113). Thereafter, the procedure of S114 to S116 follows.

In the guidance screen for the fee charging process, the message "please insert money" is shown laterally in the uppermost row, and therebelow, the number of order, the fee for one sheet (unit price), the total amount (sum of the charged amount), and the inserted fee (inserted amount) are shown laterally from above successively in four rows. When the amount inserted in the coin insertion port and/or the bill insertion port according to the explanation on the guidance screen reaches or exceeds the total charged amount, in case it is a mode for only confirming the total amount, the change is discharged from the change discharging port as needed, and the guidance screen for requesting the fee charge content appears as shown in Fig. 26. In the guidance screen at the time, the message "if it is okay, please press the confirmation button" is shown laterally in the uppermost row, and therebelow, the number of order, the fee for one sheet, and the total amount are shown laterally from above successively in three rows. In the lowermost row, the "confirmation" button is provided together with the "cancel" button and the "return to the previous screen" button. In the guidance screen, in case the confirmation button is touched, the fee charging process is completed so as to move to the next step.

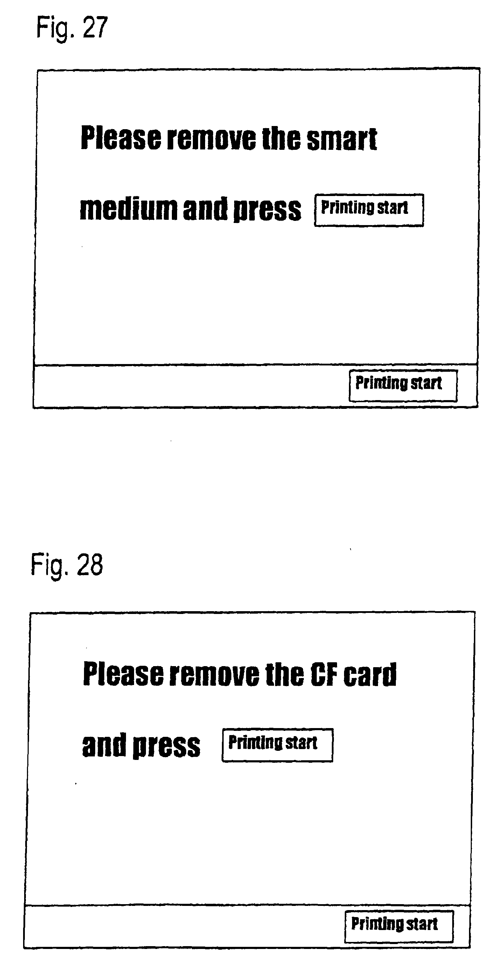

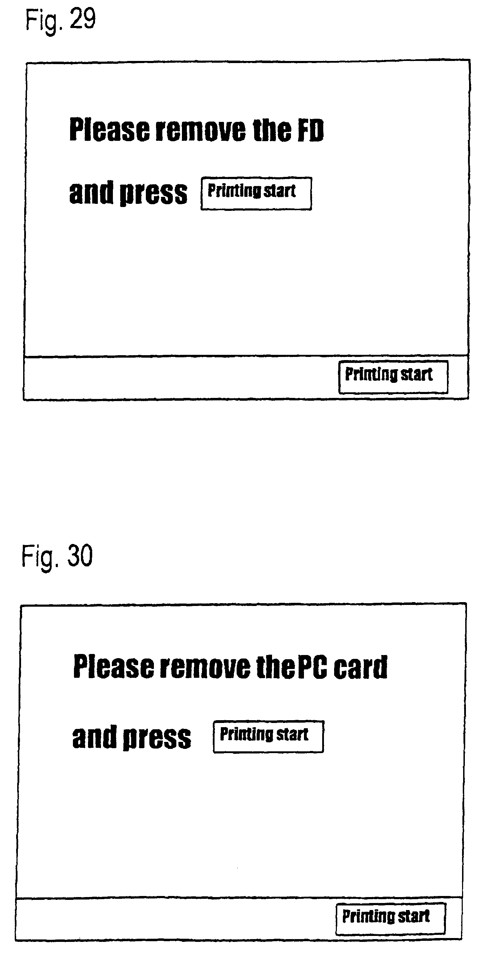

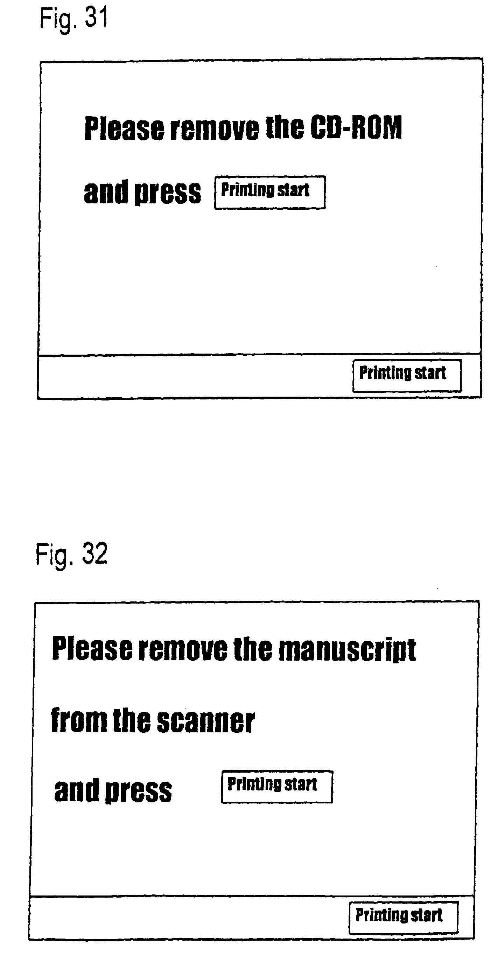

When the fee charging process is completed, the fee receipt is published so as to be discharged from the receipt outlet port (S114). After producing the receipt, the operation screen for removing the recording medium or the manuscript, which is the reading source of the image data, appears, and furthermore, in case the recording medium is inserted in the reading machine, the shutter of the insertion port is opened (S115). As shown in Fig. 27, in the operation screen in case the smart medium is inserted, the message "please remove the smart medium and press the printing start" is shown laterally, and the "printing start" button is provided in the lowermost row. Similarly, in case the CF card is inserted, the operation screen as shown in Fig. 28 appears. In case the flexible disc is inserted, the operation screen as shown in Fig. 29 appears. In case the PC card is inserted, the operation screen as shown in Fig. 30 appears. And in case the CD-ROM is inserted, the operation screen as shown in Fig. 31 appears.

Moreover, in the operation screen in case the printed article such as a photograph is read out by the scanner, as shown in Fig. 32, the message "please remove the manuscript from the scanner and press the printing start" is shown laterally in the uppermost row, and the "printing start" button is provided in the lowermost row.

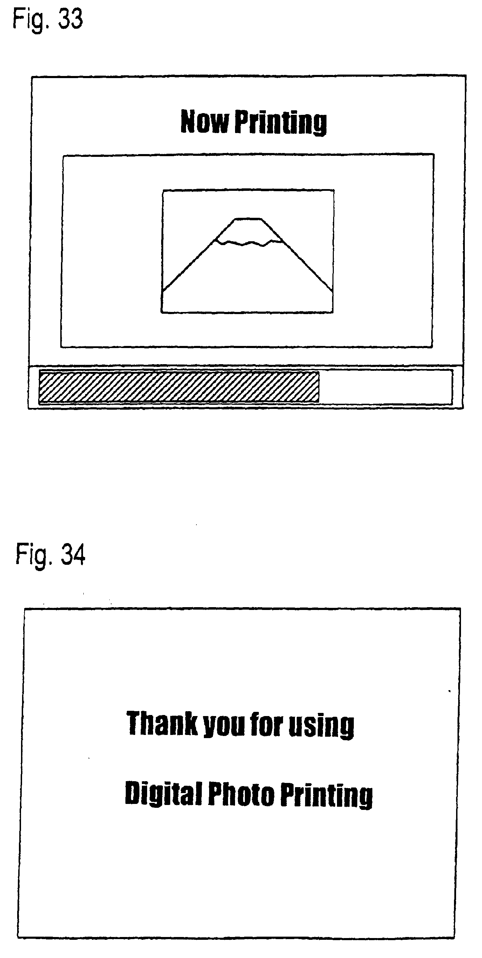

In case the recording medium inserted in the reading machine or the manuscript placed on the glass surface of the scanner is removed and the printing start button is touched according to the guidance on the operation screen, the instantaneous printing is started by the printer installed in the main body. During the printing process, the guidance screen as shown in Fig. 33 appears. In the guidance screen at the time, the message "now printing" is shown laterally in the uppermost row, therebelow, the image being printed is shown, and below the image, a time line roughly indicating the proceeding state of the printing process is lit. When the printing process is finished, the printed article is discharged from the printed article outlet port (standard printing) of the main body, and the finish screen as shown in Fig. 34 appears. The finish screen in the meantime returns to the start screen.

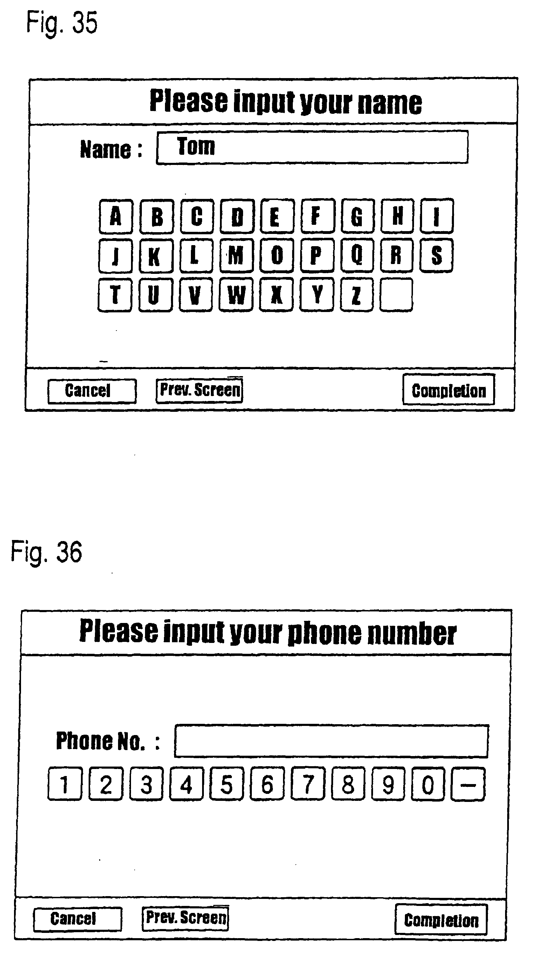

On the other hand, when the backyard printing is chosen by touching "received at the later" button in stage (S112) of the operation screen for selecting the output method (Fig. 24 ), operation screens for inputting personal information for confirming the customer appear (S117), as shown Fig. 35, and Fig. 36. In this stage, the screen of Fig. 35 appears at first. In the operation screen at the time, the message "please input your name" is shown laterally in the uppermost row, and therebelow, the column for inputting the name are provided, and therebelow, alphabet keys for input operation of name are arranged. Moreover, in the lowermost row of the operation screen at the time, a "completion" button is provided together with the "cancel" button and the "return to the previous stage" button. When the name is input and the "completion" button is touched in this screen, next, the screen of Fig. 36 appears. In the operation screen at the time, the message "please input your phone number" is shown laterally in the uppermost row, and therebelow, the column for inputting the phone number are provided, and therebelow, ten keys for input operation of the phone number are arranged. In the lowermost row of the operation screen at the time, a "completion" button is provided together with the "cancel" button and the "return to the previous stage" button. When the phone number is input and the "completion" button is touched in this screen, the input operation at this stage is completed.

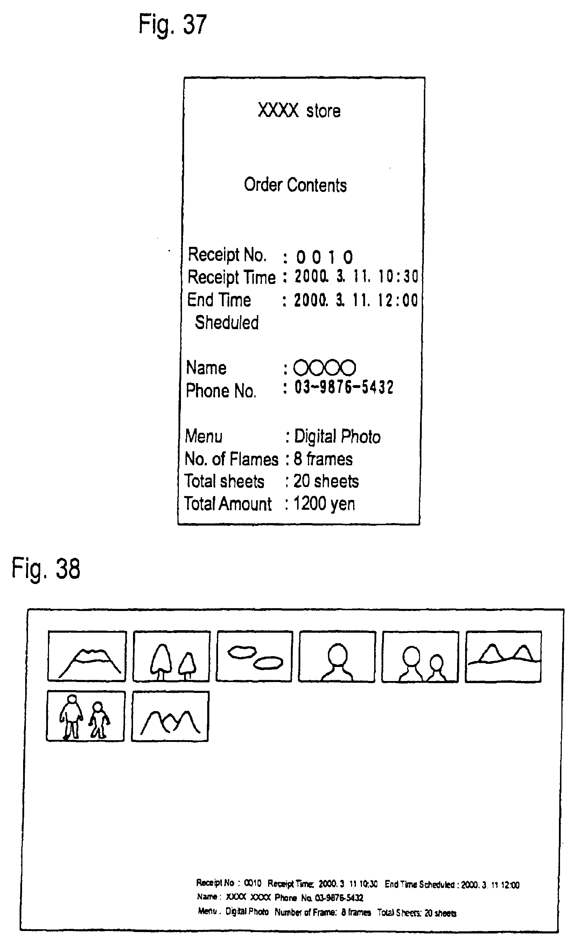

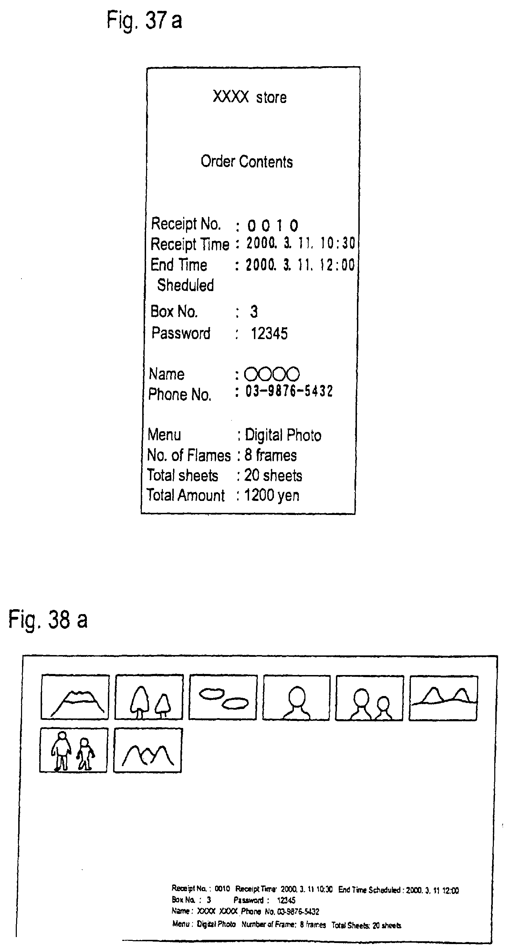

When the input of the name and phone number is completed, similar with the case of fee charging process (S113) in the instantaneous printing, the guidance screen for charging the fee, as shown in Fig. 25, appears for executing the fee charging process (S118). When the fee charging process is completed, the fee and order receipt note as shown in Fig. 37 is published so as to be discharged from the receipt outlet port (S119). In the fee and order receipt, the items being relatively concerned to fee receipt such as menu, picture frame number, total number of sheet(number of printing), total charge (fee), as well as the customer identification information such as the receipt number, the receipt time, the time and date possible to receive the article, and customer's name and phone number which are of personal information, are printed.

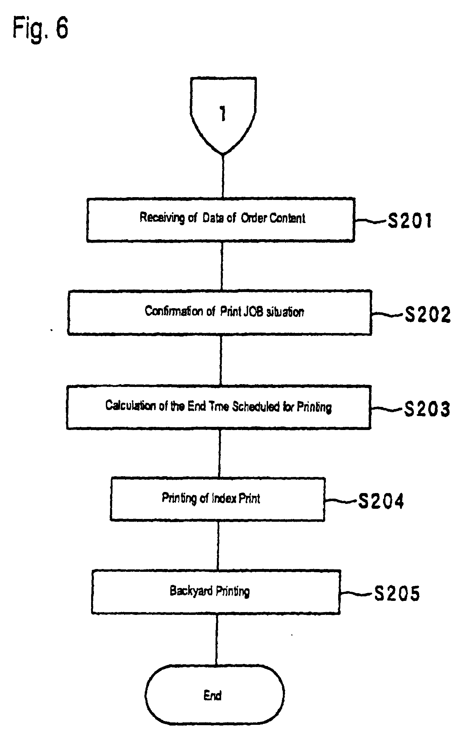

After producing the fee and order receipt note, the operation screen for removing the recording medium or the manuscript, which is the reading source of the image data, appears, and furthermore, in case the recording medium is inserted in the reading machine, the shutter of the insertion port is opened (S120). Similar with the procedure of instantaneous printing in the step S115, one of operation screen of Figs.27 to 35 appears in accordance with the used recording medium. When the recording medium inserted in the reading machine or the manuscript placed on the glass surface of the scanner is removed and the printing start button is touched according to the guidance on the operation screen, the data of ordered content and data to be described in the collation sheet are sent from the main body to the backyard printing part (S121). When the transmission of the data is completed, the procedure of backyard print shown in Fig. 6 starts at the backyard printing part, and the end screen shown in Fig. 34 appears in the monitor 14 of the main body.

Since the backyard printing part is in the order monitoring condition, when the ordered data is transmitted from the main body division, the backyard printing part is able to receive it(S201). After receiving, the backyard output part confirms the print JOB situation in the backyard output part (S202), and calculates the end time scheduled for the printing of the data newly received (S203). It is possible to change the order of print JOBs according to the circumstances, when the calculated end time is too late. For example, in case a print processing of the certification photograph is sent to the backyard printing by the customer's will or by the system automatically, it is possible to give high priority to this print and service it as an interrupt.

After the calculation of the end time, an index print (shop side's stub) which has the customer identification information corresponding to that mentioned in the fee and order receipt note (customer side's stub) and is for the confirmation of the customer to be handed the printed article of the backyard print is output(S204), Fig. 38 is an example of the index print as shop side's stub. In this example of the index print, thumb nail images of eight photos ordered are arranged as divided into two rows at the upper side, and the same content as that disclosed in the fee and order receipt note shown in Fig. 37 are printed at the lower side.

After completion of the index print, the print as ordered is done from a printer installed in the backyard. The customer who come to the backyard printing part can receive his printed articles, when the fee and order receipt note shown by the customer is checked with the index print as the shop side's stub by the clerk of the backyard printing part and the identity of information mentioned in both the receipt and index print is confirmed by the clerk.

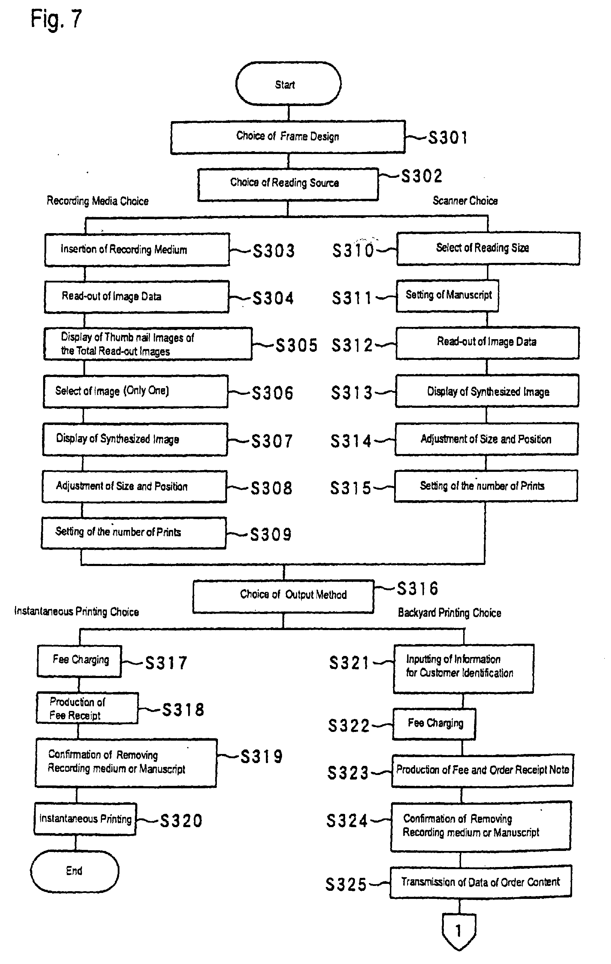

Next, the procedure in case the "frame synthesis" is selected will be explained. In the main menu screen, if the "frame synthesis" position is touched by a hand, the "frame synthesis" procedure shown in Fig. 7 is started. In each operation screen to be indicated after the start of the "frame synthesis" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

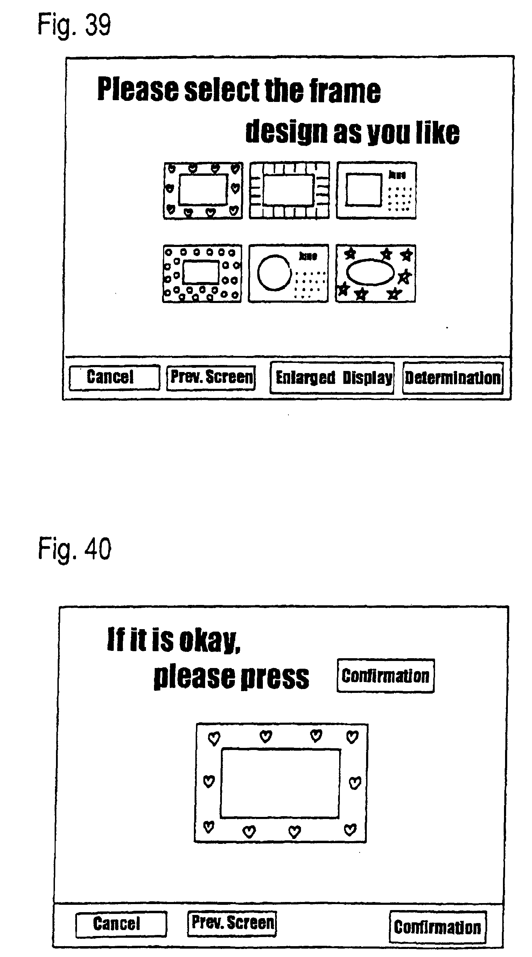

In case the "frame synthesis" procedure is started, as shown in Fig. 39, an operation screen with the picture frames shown is indicated so that a frame can be selected (S301). In the operation screen at the time, the message "please select the frame design as you like" is shown laterally in the uppermost row, and below the message, frame designs are shown. In the lowermost row, the "cancel" button, the "return to the previous screen" button, the "enlarged display" button, and the "determination" button are provided. The frame designs are provided from the material data base so as to be indicated on the screen.

In case the enlarged display button is touched after touching one of a frame displayed on the screen, as shown in Fig. 40, the enlarged image of the selected frame is shown. In the operation screen at the time, the message "if it is okay, please press the confirmation button" is shown laterally in the uppermost row, and below the message, the enlarged frame design is shown. In the lowermost row, the "confirmation button" is provided together with the "cancel" button, and the "return to the previous screen" button. In case the customer does not like the enlarged frame, by touching the return to the previous screen button, the screen with the frames listed can be shown so that another frame can be selected.

In case the determination button is touched immediately after selecting the frame in the screen of Fig. 39, or in case the confirmation button is touched after indicating the enlarged image in the screen of Fig. 40, the frame to be used is set.

In case the frame is set, as shown in Fig. 13, the operation screen for selecting the reading source appears (S302). In the operation screen, in case a touch panel button is touched by a hand, the corresponding reading source is selected.

If any of the reading sources is selected from the smart medium, the CF card, the flexible disc, the PC card, and the CD-ROM, the operation screen showing the inserting method corresponding to the selected recording medium (Fig. 14 to Fig. 18) is indicated so that the recording medium can be inserted (S303). Thereafter, the procedure of S304 to S309 follows.

In case a recording medium is inserted in the predetermined insertion port according to the guide of the operation screen (S303) and the reading start button on the touch panel is touched by a hand, the insertion port with the recording medium inserted is closed by the shutter so as to start the reading operation of the image data (S304).

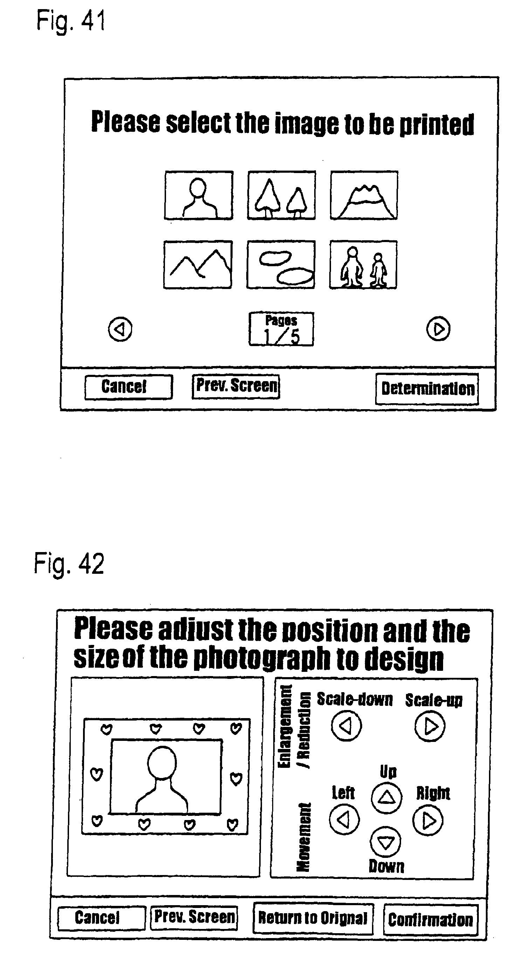

After finishing the reading operation, as shown in Fig. 41, the operation screen with the thumb nail images of the total read out images shown appears (S305). In the operation screen at the time, the message "please select the image to be printed" is shown laterally in the uppermost row, and below the message, total 6 thumb nail images are shown in the two rows laterally. Below the thumb nail images, the number of pages of the thumb nail images shown in the operation screen, the forward scroll button, and the backward scroll button are shown. In the lowermost row, the "determination" button is provided together with the "cancel" button and the "return to the previous stage" button.

When selecting only one image to be printed from the listed thumb nail images, and pressing the determination button(S306), as shown in Fig. 38, the operation screen showing the image with the selected image and the frame synthesized appears (S307) so that the synthesized image can be adjusted (S308). In case of the privacy protection mode, the image shown at the time is in the state with the process applied. In the operation screen at the time, the message "please adjust the position and the size of the photograph according to the design" is shown laterally in the uppermost row, and below the message on the half side, the synthesized image is displayed, and on the other half side, the operation panels for the enlargement/reduction, and the movement are disposed in two rows vertically. In the lowermost row, the "cancel" button, the "return to the previous screen" button, the "return to the original" button, and the "confirmation" button are provided.

In the enlargement/reduction panel, the enlargement button and the reduction button are provided so that the size of the read out image can be changed so as to be fit to the frame by touching these buttons, In the movement panel, the movement buttons for upward, downward, leftward and rightward are provided so that the position of the image can be adjusted to the frame by touching these buttons. In case the return to the original button is touched, it returns to the original image size and the position. In case the confirmation button is touched after finishing the image adjustment, the synthesized image is set.

In case the synthesized image is set, as shown in Fig. 23, the operation screen for setting the number of prints (S309). In the operation screen at the time, the message "please set the number of order" is shown laterally in the uppermost row, and below the message, a column for inputting the number of order and input buttons for increasing or reducing the number of order are provided. In the lowermost row, the "cancel" button, the "return to the previous screen" button, and the "determination" button are provided. The input buttons include the number increase button of the upward triangle, and the number reduction button of the downward triangle. By touching these, the number of order can be increased or reduced. By touching the determination button after finishing the input operation, the order content including the number of order can be set.

In the "frame synthesis" procedure, it is also possible to select a printed article such as a photograph as the reading source so that the image data are read out using the scanner (S310 to S312). The procedure of reading the image data using the scanner is same as the digital photo procedure S106 to 108. That is, in case the photograph (scanner) is selected as the reading source (S302) in the operation screen (Fig. 13) for selecting the image data reading source. the operation screen for selecting the reading size (Fig. 20) appears so that the photograph size or the A5 size can be selected (S310). In case the reading size is selected, the operation screen for reading the manuscript by the scanner (Fig. 21) appears. In case the manuscript is set on the scanner and the reading start button is touched according to the operation screen (S311), the manuscript is scanned and read so as to obtain the image data (S312).

After finishing the reading operation of the image data, as shown in Fig. 42, the operation screen showing the image with the selected image and the frame synthesized appears (S313) so that the synthesized image adjustment (S314) and the setting of the number of prints (S315) can be executed. The adjustment of the image read by the scanner and the setting of the number of prints (S313 to S315) are same as the procedure S307 to S309 in the case of reading the image by the recording medium.

After setting the order content in the procedure S309 or S315. the output method is selected (S316) similar to the case of the digital photo so as to execute the instantaneous printing or backyard printing operation. Namely, the selection of the output method (S316) is same as the step S112 of the digital photo, the procedure of the instantaneous printing (S317 to S320) is same as S113 to S116, and the procedure of the backyard printing (S321 to S325 and the procedure after the data transmission) is same as S117 to S121 and S201 to S205 of Fig. 6.

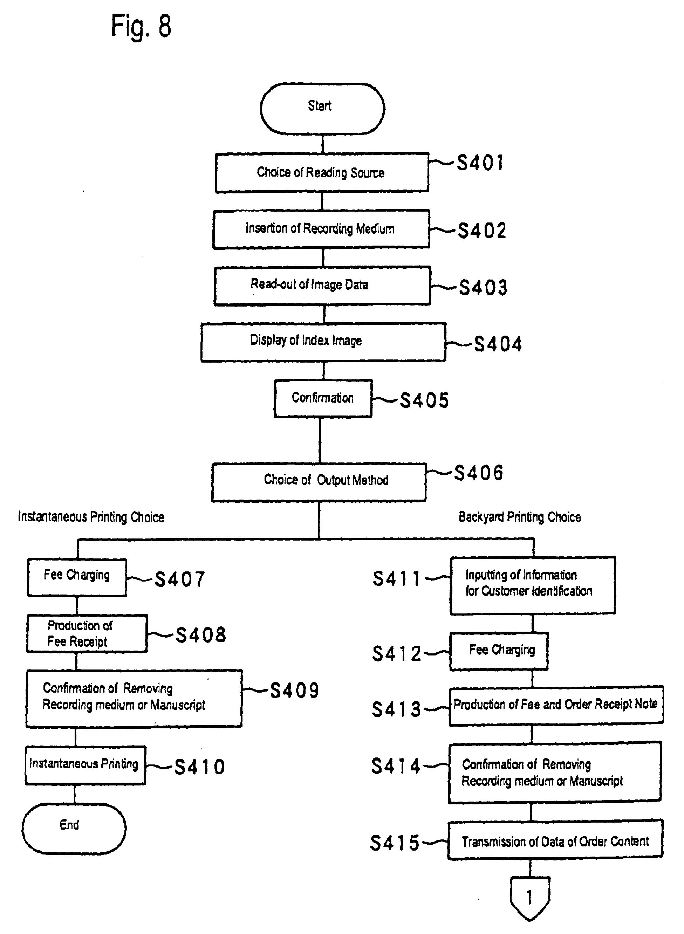

Next, the procedure in case the "index printing" is selected will be explained. In the main menu screen, if the "index printing" position is touched by a hand, the "index printing" procedure shown in Fig. 8 is started. In each operation screen to be indicated after the start of the "index printing" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

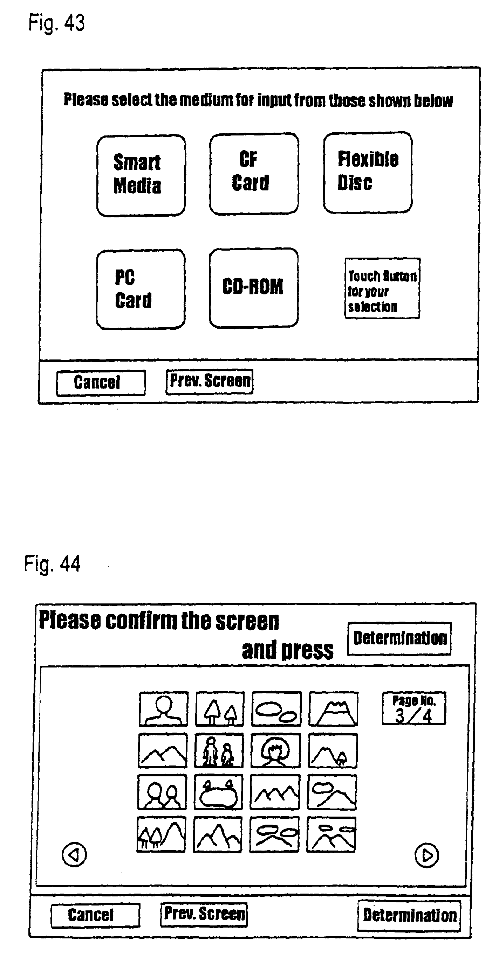

In case the "index printing" procedure is started, as shown in Fig. 43, the operation screen with the image data reading sources shown is indicated so that a reading source can be selected (S401). In the operation screen at the time, the message "please select the medium for input from those shown below" is shown laterally in the uppermost row, and therebelow, the touch panel buttons each with the name of the smart medium, the CF card, the flexible disc, the PC card, and the CD-ROM are shown. In the operation screen, in case a touch panel button is touched by a hand, the corresponding reading source is selected. In the "index printing" procedure, the image such as a photograph (scanner) cannot be selected as the reading source.

In the operation screen, in case a touch panel button is touched by a hand, the corresponding reading source is selected so that the operation screen showing the inserting method for the selected recording medium (Figs. 14 to 18) appears. According to the guidance on the operation screen, a recording medium is inserted in the predetermined insertion port (S402), and the reading start button of the touch panel is touched by a hand so that the insertion port with the recording medium inserted is closed by the shutter so as to start the reading operation of the image data (S403).

After finishing the reading operation, as shown in Fig. 44, the operation screen showing the image with all the read out images shown as the index appears (S404). In the operation screen at the time, the message "please confirm the screen and press the determination" is shown laterally in the uppermost row, and below the message, the index image is displayed. In the right upper margin of the index image, the number of the page is shown. In the right and left margins of the index image, the forward scroll button, and the backward scroll button are provided. In the lowermost row, the "determination" button is provided together with the "cancel" button and the "return to the previous screen" button.

In case the number of frames of the images is large, the index is divided into a plurality of pages, with the number of the page of the index shown on the screen indicated. By touching the forward scroll button or the backward scroll button, it can move to another page. After confirming the index image of each page using the scroll buttons, by touching the confirmation button, the order content is set (S405).

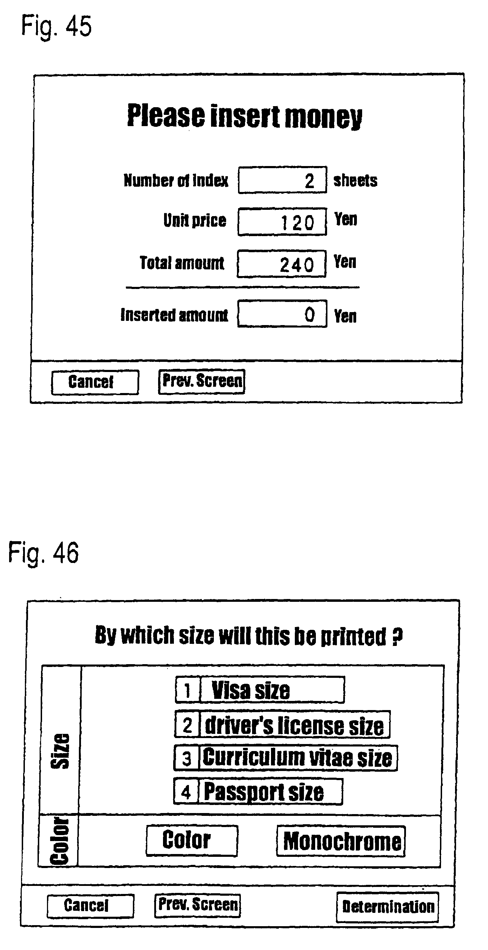

After setting the order content in the procedure S405, in the same manner as in case of the digital photo, the output method is selected (S406) so as to execute the instantaneous printing or backyard printing operation. Namely, the selection of the output method (S406) is same as the step S112 of the digital photo, the procedure of the instantaneous printing (S407 to S410) is same as S113 to S116, and the procedure of the backyard printing (S411 to S415 and the procedure after the data transmission) is same as S117 to S121 and S201 to S205 of Fig. 6. In the fee charging process of the steps S407 and S412, the guidance screen of Fig. 45 appears instead of the guidance screen of Fig. 25. In case the fee is inserted, the payment confirmation screen corresponding to the guidance screen of Fig. 45 appears instead of the guidance screen of Fig. 26. In the guidance screen of the fee charging process in the index printing, the "number of indexes" is shown instead of the "number of order". In the index printing, all the pages of the index images shown in the screen in the step S404 are printed as a set. The number of indexes denotes the total number of pages of the index images. Therefore, the number of order in the digital photo can be changed according to the intention of the customer.

Next, the procedure in case the "seal" is selected will be explained. In the main menu screen, by touching the "seal" position by a hand, similar with the case of frame synthesis, the "seal" procedure as shown in Fig. 7 starts so that a pre-cut seal divided into a plurality of small screens can be obtained by the instantaneous printing or backyard printing.

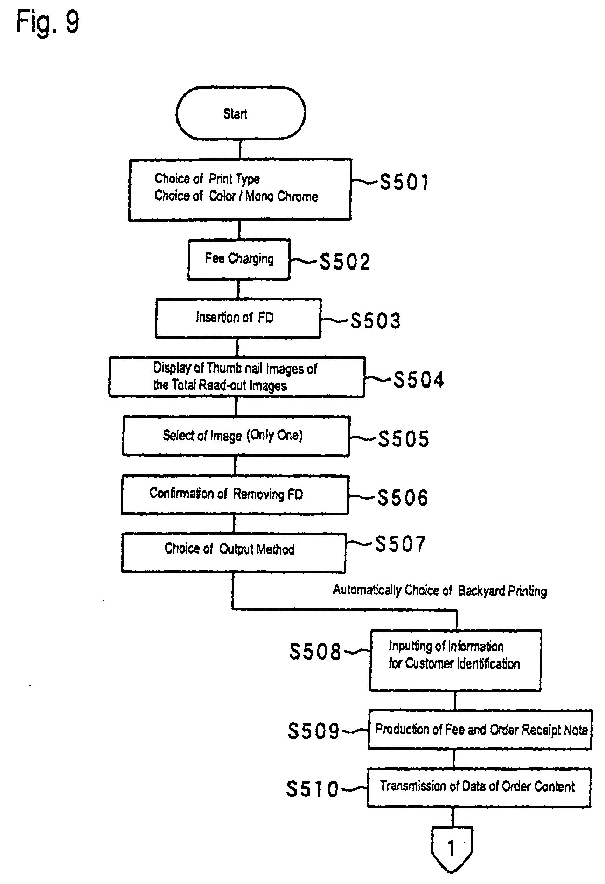

Next, the procedure in case the "certification photograph" is selected will be explained. In the main menu screen, if the "certification photograph" position is touched by a hand, the "certification photograph" procedure shown in Fig. 9 is started. In each operation screen to be indicated after the start of the "certification photograph" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

In case the "certification photograph" procedure starts, as shown in Fig. 46, the operation screen for selecting the printing type appears (S501). In the operation screen at the time, the message "by which size will this be printed" is shown laterally in the uppermost row, and therebelow, a size designation panel and a color designation panel are disposed in two rows. In the lowermost row, the "cancel" button, the "return to the previous screen" button, and the "determination" button are provided. In the size designation panel, touch panel buttons for the "visa size", the "driver's license size", the "curriculum vitae size", and the "passport size" are shown in the vertical direction. In the color designation panel, touch panel buttons for color and monochrome are provided in the lateral direction. In case the determination button is touched after designating the size and the color by touching the touch panel buttons, the printing type can be set.

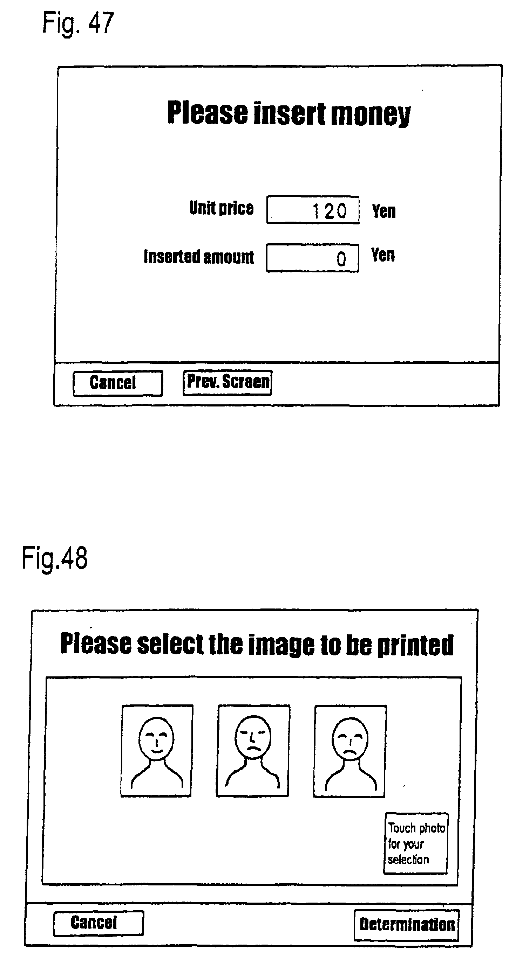

In case the printing type is set, as shown in Fig. 47, the guidance screen for requesting the fee payment appears so as to execute the fee charging process (S502). In the guidance screen of the fee charging process in the certification photograph, the message "please insert money" is shown laterally in the uppermost row, and therebelow, the fee for one sheet (unit price), and the inserted amount are shown laterally in upper and lower two rows. In the lowermost row, the "cancel" button and the "return to the previous screen" button are provided. Although only one sheet of a certification photograph having one or a plurality of the same image is printed out for one order in this embodiment, it is also possible to set an optional number for printing out before charging. In case the amount inserted in the coin insertion port and/or the bill insertion port according to the explanation on the guidance screen reaches or exceeds the total charged amount, the change is discharged from the change discharging port as needed so as to complete the fee charging process.

In case the fee charging process is completed, the operation screen shown in Fig. 16 appears so that the flexible disc (FD) with the certification photograph image recorded is requested to be inserted in the reading device. In this embodiment, a photography space comprising a blank background is provided in the shop with the main body installed so that a clerk shoots the customer by a digital camera for production of the certification photograph, and hands to the customer the FD with the taken image data stored. Since process of the certification photograph image is not permitted, an image with the blank background, taken in a size appropriate for the certification photograph is handed to the customer. In contrast, the main body is set such that the image data can be read out only from the FD in the certification photograph procedure. It is also possible to enable reading the image data for the certification photograph from any recording medium by optionally setting the main body.

In case the customer inserts the FD with the image for the certification photograph into the FD reading device of the main body according to the guidance of the operation screen (S503), as shown in Fig. 48, the operation screen with the thumb nail images of the certification photograph images stored in the floppy appears (S504). In the operation screen at the time, the message "please select the image to be printed" is shown laterally in the uppermost row, and therebelow, the thumb nail images of all the read out images are shown. In the right downward margin of the thumb nail image indication area, the message for explaining the image selection method "please touch a photograph for selection" is shown. In the lowermost row, the "cancel" button and the "determination" button are provided. By selecting only one image in the operation screen, touching the image, and touching the determination button, the image to be printed is set.

When the image to be printed is set, the operation screen for taking out the FD appears. According to the guidance on the operation screen, the FD is removed (S506). After the FD is removed, the guidance screen for advising the customer that the ordered certification photograph is provided for the backyard printing. In this embodiment, since the printing out operation of the certification photograph cannot be dealt with by the main body printer, the system is set such that the backyard printing is selected automatically to all the certification photograph orders.

In the guidance screen at the time, the message "please receive photo at counter " is shown laterally in the uppermost row, and below the message, an end time scheduled for printing is shown, and below the message, the "confirmation" button is provided. In the lowermost row, the "cancel" button, and the "return to the previous screen" button are provided.

In the guidance screen, in case the confirmation button is touched, operation screens for inputting personal information appear (S508), as shown Fig. 35, and Fig. 36. When the input of personal information is completed, the fee and order receipt note as shown in Fig. 37 is published and discharged from the receipt outlet port (S509). After producing the fee and order receipt note, the data of ordered content is sent from the main body to the backyard printing part (S510), the end screen (Fig. 34) appears in the monitor 14, and the procedure of backyard print starts. The each procedure after selecting the backyard printing is same as the corresponding procedure in the case of digital photo. Namely, the input of personal information (S508) is same as the step S117 of the digital photo, the procedure of producing the fee and order receipt note (S509) is same as S119, and the procedure of the transmission of ordered content (S510) is same as S121, and the procedure after the transmission is same as S201 to S205.

It is preferable that cut marks are provided on the four corners of the image to each small screen of the certification photograph printed out according to the above-mentioned procedure so that the image portions can be cut by the size according to the purpose and application.

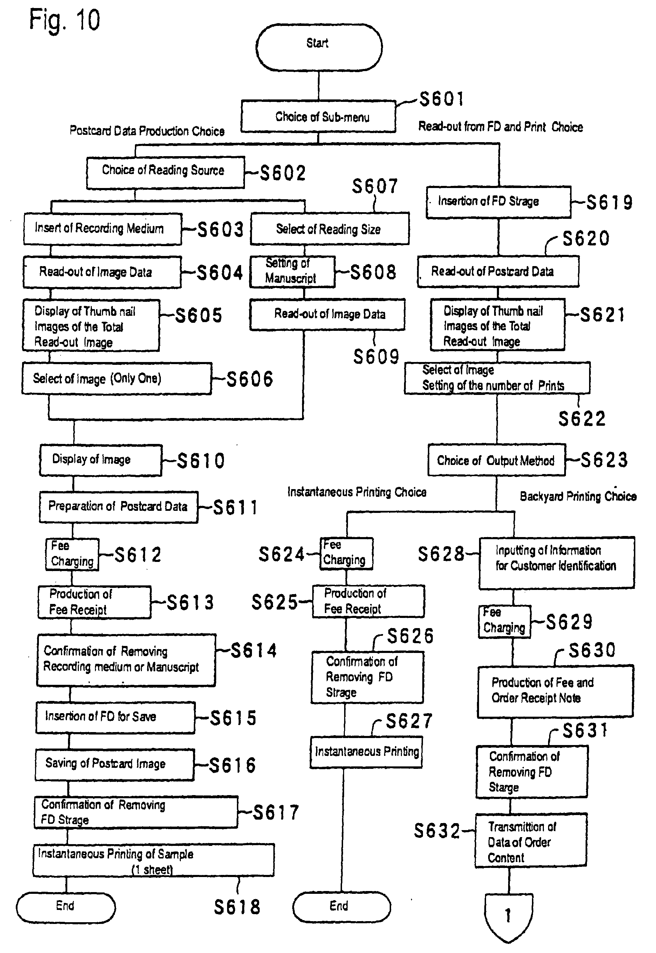

Next, the procedure in case the "postcard printing" is selected will be explained. In the main menu screen, if the "postcard printing" position is touched by a hand, the "postcard printing" procedure shown in Fig. 10 is started. In each operation screen to be indicated after the start of the "postcard printing" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

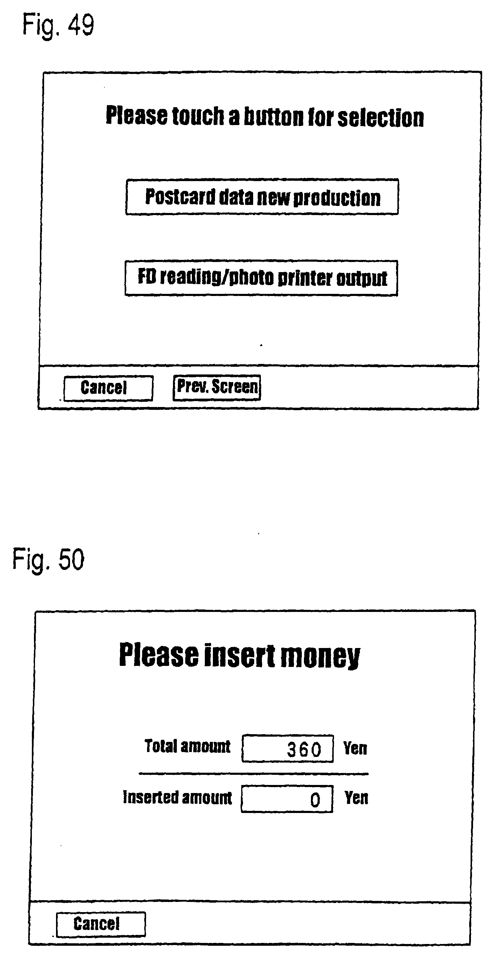

In case the "postcard printing" procedure starts, the guidance screen for indicating the sub menu as shown in Fig. 49 appears so that the "postcard data new production" or the "FD reading/photo printer output" can be selected (S601). In the operation screen at the time, the message "please touch a button for selection" is shown laterally, and therebelow, the "postcard data new production" and the "FD reading/photo printer output" button are provided in the up and down rows. In the lowermost row, the "cancel" button and the "return to the previous screen" button are provided.

In the procedure of the postcard data new production, the image data such as a photograph are read out from a recording medium or a printed article, and processed so as to produce the postcard data and recorded in a flexible disc (FD). A sample is printed so as to be added to the stored FD. In contrast, in the procedure of the FD reading/photo printer output, the postcard data produced by the postcard data new production procedure can be read out from the FD so as to be printed out. In the sub menu screen, by touching a touch panel button of a procedure, the corresponding procedure is selected.

In case the postcard data new production is selected, as shown in Fig. 13, the operation screen with the image data reading sources listed is shown. By touching a reading source button, the corresponding reading source is selected (S602). In the operation screen, in case any of the smart medium, the CF card, the flexible disc, the PC card, and the CD-ROM is selected as the reading source, the operation screen showing the insertion method corresponding to the selected recording medium (Figs. 14 to 18) is indicated. In case a recording medium is inserted in a predetermined insertion port (S603) and the reading start button on the touch panel is touched by a hand according to the guidance of the operation screen, the insertion port with the recording medium inserted is closed by the shutter so as to start reading the image data (S604). When the reading operation is completed, the operation screen with the thumb nail images of all the read out images listed (not shown) appears (S605). By selecting only one image to be used for the postcard production from the listed thumb nail images, the image is selected (S606). The procedure S602 to S606 in the postcard data new production is same as the procedure S302 to S306 in the frame synthesis.

In contrast, in case the photograph (scanner) is selected as the reading source (S602) in the operation screen (Fig. 13) for selecting the image data reading source, the operation screen (Fig. 20) for selecting the reading size appears so that the photograph size or the A5 size can be selected (S607). When the reading size is selected, the operation screen for reading the manuscript by the scanner (Fig. 22) appears. In case the manuscript is set on the scanner according to the operation screen and the reading start button is touched (S608), the image data are read from the manuscript (S609). The procedure S602, S607 to S609 in the postcard data new production is same as the procedure S302, S310 to S312 in the frame synthesis.

Next, the image selected in S606 or read in S609 is displayed on the operation screen (not shown) so that the image can be processed and the postcard data can be produced in the operation screen (S611). When the postcard data production is finished, the guidance screen as shown in Fig. 50 appears so that the fee charging process is executed. In case an amount as charged or more than that is inserted according to the guidance screen explanation, the change is discharged from the change discharging port as need, and the fee charging process is completed (S612). In case the fee charging process is completed, the receipt is published so as to be discharged from the receipt outlet port (S613).

After producing the receipt, the operation screen for removing the recording medium or the manuscript as the image data reading source (Figs. 27 to 32) appears. Furthermore, in case the recording medium is inserted in the reading machine, the insertion port shutter is opened (S614). In case the recording medium or the manuscript is taken out according to the operation screen explanation, the operation screen (not shown) for requesting the storage FD insertion appears. In this embodiment, only the produced postcard data can be stored in the FD, but it is also possible to set the main body optionally so that the postcard data can be stored in any recording medium. When the storage FD is inserted and the storage start button is touched (S615) according to the operation screen explanation, the postcard data are stored in the FD (S616). In case the postcard data storage is completed, the operation screen (not shown) for removing the storage FD appears so that the storage FD can be taken out according to the operation screen explanation (S617). In case the storage FD is removed, the guidance screen (not shown) for printing a sample appears so that only one sheet of the sample is printed instantaneously. After finishing the sample printing operation, the finish screen shown in Fig. 34 appears.

In case the FD reading/photo printer output is selected in the postcard printing sub menu, the operation screen (not shown) for inserting the FD with the postcard data produced in the postcard data new production procedure stored appears (S619). When the storage FD is inserted in the reading machine and the reading start button is touched according to the operation screen explanation, the postcard data are read (S620). The operation screen (not shown) with the thumb nail images of the read out postcard data listed appears. By selecting one or a plurality of the thumb nail images of the postcards to be printed out in this screen, and inputting the number of prints for each of the selected postcard data, the order content is set as well as the image display process is executed (S622).

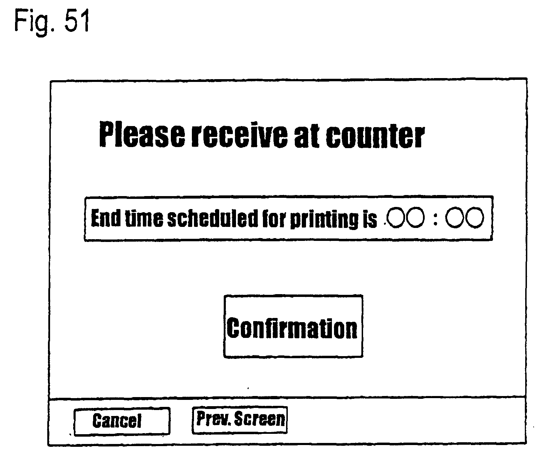

When the order content is set, an operation screen for selecting the output method appears (S623). In case it is possible to print the ordered postcard datum with the printer of the main body, the operation screen as shown in Fig. 24 will appear so as to allow the customer to select one from the instantaneous printing and backyard printing freely, In case it is impossible to print it with the printer of the main body, the operation screen as shown in Fig. 51 will appear so as to advise the customer that the ordered postcard printing is provided for the backyard printing.

In the operation screen of Fig. 24, when the touch panel button of "instantaneous printing" is touched by a hand, the instantaneous printing is chosen, and the procedure of S624 to S627 is performed. After completion of the instantaneous printing, the finish as shown in Fig. 34 appears. On the other hand, when the touch panel button of "backyard printing" in the operation screen of Fig. 24 is touched by a hand, or when the touch panel button of "confirmation" in the operation screen of Fig. 51 is touched by a hand, the backyard printing is chosen, and the procedure of S628 to S632 is performed. Once the data of ordered content is sent to the backyard printing part, the finish screen as shown in Fig. 34 appears in the monitor 14, and the postcard printing in the backyard printing part starts.

Each procedure after selecting the output method is same as that in case of the digital photo. Namely, the procedure of the instantaneous printing (S624 to S627) is same as S113 to S116 of the digital photo, and the procedure of the backyard printing (S628 to S632 and the procedure after the data transmission) is same as S117 to S121 and S201 to S205 of Fig. 6.

As described above, according to the first aspect of this invention, it is possible to deliver printed article to the customer instantaneously by using the instantaneous printing means of the main body, when the printed article is of relatively high frequent orders. On the other hand, it is possible to deliver printed article to the customer by using the backyard printing part in accordance with the customer's order or the pre-setting by the administrator of the apparatus, in case the printed article is impossible to be printed by the instantaneous printing means, or in case is possible to service with the instantaneous printing means, but not brings efficiency. Therefore, it is possible to supplement the shortage in the print performance with the backyard print part, without detriment to the easiness as the post type image outputting apparatus owned by the main body.

According to the first aspect of this invention, it is possible to print out not only a digital image data photographed by the digital camera or made by the computer graphics but also an already printed photo image or images other than photo with ease and effectively. Further, any special printed articles such as large size print, or special image effected from the original image are also printable with ease.

According to the first aspect of this invention, it is possible to enjoy the most of facilities belonging to the post type image outputting apparatus, when the orders which are impossible to be processed with the main body or inefficient in processing with the main body can be undertaken by the backyard printing part which is set near the main body in the same shop.

According to the first aspect of this invention, it is possible that the customer will receive printed articles at a place completely away from another place at which he makes an order of the printed articles, when the main body and the backyard print part is connected through a network.

According to the first aspect of this invention, when giving to the customer an order receipt note which has a customer identity information, it is possible that the supplier of the image print system surely delivers the articles printed in the backyard to the ordered customer.

According to the first aspect of this invention, when giving to the customer the order receipt note and printing an collation sheet which has the corresponding customer identity information at the backyard printing part, it is possible that the supplier of the image print system will very easily confirm the identity of the customer who comes to receive the printed article, by checking the content of the order receipt note of the customer side with the collation sheet of the shop side.

According to the first aspect of this invention, when the order receipt note and collation sheet have the customer identity information which includes a personal information which is unknown until the customer provides, it is possible that the supplier of the image print system will confirm more surely the identity of the customer who comes to receive the printed article.

### Image Printing System of the Second Aspect

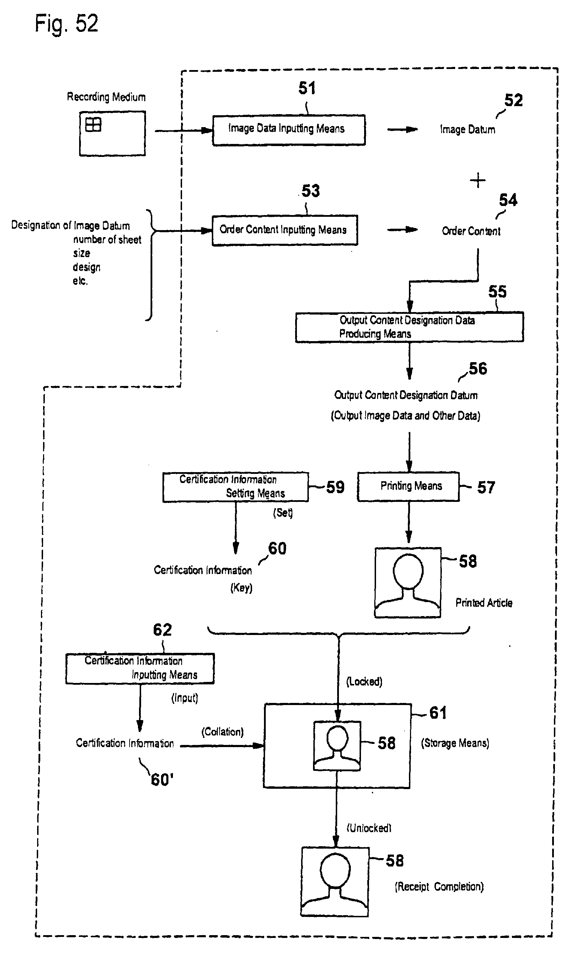

Next, the outline of the present invention will be explained with reference to Fig. 52. An image printing system according to the second aspect of this invention comprises at least the following means, that is:
(1) an image data procurement means 51 for obtaining image data,
(2) an order content inputting means 53 for inputting orders for an image to be output,
(3) an output content designation data producing means 55 for preparing an output content designation datum which records the image to be output and appendix conditions for the image on the basis of the input image and the input orders,
(4) a printing means 57 which prints out an printed article of the image in accordance with the output content designation datum,
(5) a certification information setting means 59 for setting a certification information which certifies the identity of the customer to be handed the printed article
(6) a storage means 61 which stores the printed article therein and which is possible to be locked with the certification information, and
(7) a certification information inputting means 62 for inputting the certification information to open the locked storage means.

In the image printing system according to the second aspect of this invention, at first, image datum 52 is obtained from image sources such as recording medium which the customer brought, database, etc., by the data procurement means 51, while an order content 54 including the print number of sheet, print size or indication of the image editing, etc. is input by the order content inputting means 53. Next, dealing with the image datum 52 and order content 54 at the output content designation data producing means 55, the data necessary for printing the image for the order is arranged in order to prepare an output content designation datum 56. The output content designation data comprises an image data of the image to be output and an data where appendix conditions such as the number of sheet, size and etc. are recorded.

Next, in accordance with the content of output content designation data 56, the image is printed out by printing means 57 to obtain the printed article 58. To a part of or all of produced printed articles, peculiar certification information 60 such as the password is set by certification information setting means 59 per each order unit, and the articles are stored every order units in storage means 61 such as the storing box with the locking door which key is the certification information. It is not possible to freely take out printed article 58 once stored, since the storage means 61 is locked by the certification information 60 in the condition that printed article 58 is stored. Afterwards, when the right certification information 60' is given to the system via certification information inputting means 62, the input information is checked with the certification information set at storage means 61 at the locking so that the input information functions as a key, then the storage means will undo a lock in order that the customer receives the stored printing article.

It is convenient to prepare some alternatives considering the needs of customer and supplier of the image print service for the delivery method of the printed article produced by the printing means 57. For example, as the print means, it is possible to provide an instantaneous printing means and a backyard printing means. As mentioned in detail in the explanation of the first aspect of this invention, when the customer utilizes the instantaneous printing means, the customer can receive the printed article immediately after he orders the print of image by operating the post type image outputting apparatus as an ordering terminal unit without moving from the place. In other hand, when the customer utilizes the backyard printing means, the customer can receive the printed article at another delivery place.

In such constitution, except the printed article produced by the instantaneous printing means, the printed article produced by the backyard printing means may be locked in the storage means to be stored. Once it is set that the printed article printed by the backyard print is stored in the storage means at every cases including the case when the article would be received immediately, and of course the case when it would be received later, the clerk's work of confirming the identity of customer can be omitted. It can contribute to the rationalization of the service. Further, it is possible for the customer to receive always the printed article through 24 hours when the shop installs the storage means and the certification information inputting means at a place where the customer is easy of access even after the business hour of the shop.

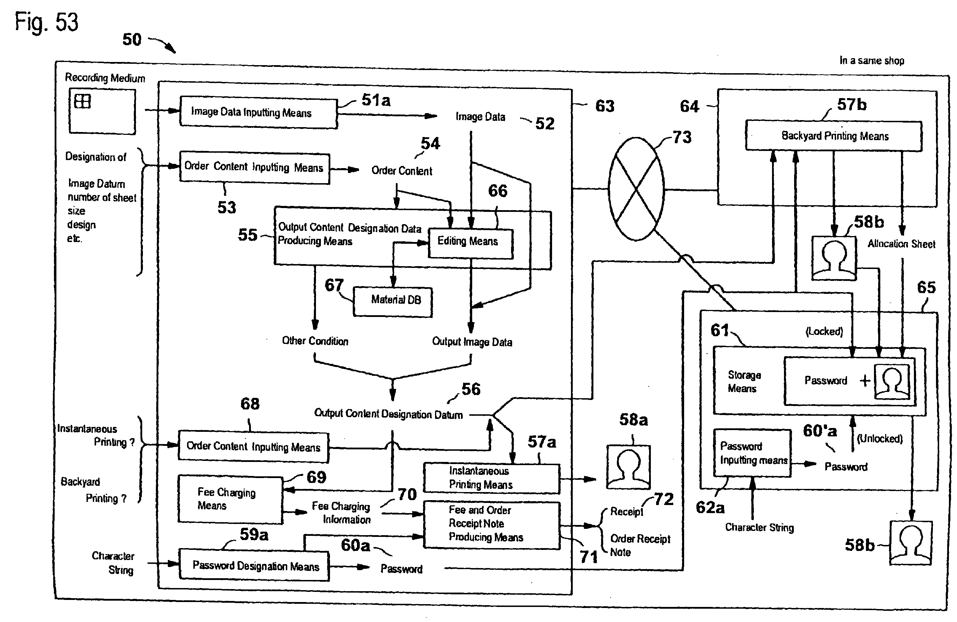

Fig. 53 shows an embodiment of the image print system 50 of the second aspect of this invention. The image printing system 50 comprises a main body 63 capable of accepting an image printing (output) order and printing the same instantaneously, a backyard printing part 64 capable of receiving the image datum to be printed from the main body and backyard-printing the same, and stocker part 65 which stores the printed article printed by the backyard printing means with locking, wherein the main body 63, backyard printing part 64 and the stocker part 65 are connected to each other via line 73. The line 73 may be an exclusive or open network line of various scales such as Internet, intranet, LAN. In the embodiment shown in Fig. 53, the main body 63, backyard printing part 64 and the stocker part 65 each store a separate housing independently, and thus they constitutes three physically separated apparatuses, and they are set at separate places (for example, the main body 63 is at the entrance of shop, the backyard print part 64 is at a side of cash counter of the shop, and the stocker part 65 is in the front of shop and facing to the street) in a same shop, and they are connected by the LAN.

The main body 63 comprises at least the following means, that is:
(1) an image data inputting means 51a for inputting image data,
(2) an order content inputting means 53 for inputting orders for an image to be output.
(3) an output content designation data producing means 55 for preparing an output content designation datum which records the image to be output and appendix conditions for the image on the basis of the input image and the input orders (including the editing means 66 for input image),
(4) a material data base 67 which stocks image materials for synthesizing with the input image.
(5) an output method choice means for selecting one of instantaneous printing and backyard printing,
(6) an instantaneous printing means which prints out an printed article of the image in accordance with the output content designation datum when the choice at the output method choice means is the instantaneous printing,
(7) a password designation means 59a for inputting any password when choice at the output method choice means is the backyard printing, (8) a fee charging means 69 for calculating the fee of printing service and collecting it, and
(8) a fee and order receipt note producing means for giving fee and order receipt note to the customer after the collection of fee.

As the main body, the post type image outputting apparatus 1 as shown in Fig. 3 as mentioned above may be used.

On the other hand, the backyard printing part 64 at least comprises a backyard printing means which prints out an printed article of the image in accordance with the output content designation datum when the choice at the output method choice means of the main body 63 is the backyard printing. As the backyard printing means, various printers may be installed as needed.

The stocker part 65 comprises at least the following means;
that is:
(1) a storage means 61 which stores the printed article therein and which is possible to be locked with the password, and
(2) a password inputting means 62a for inputting the true password to open the locked storage means.

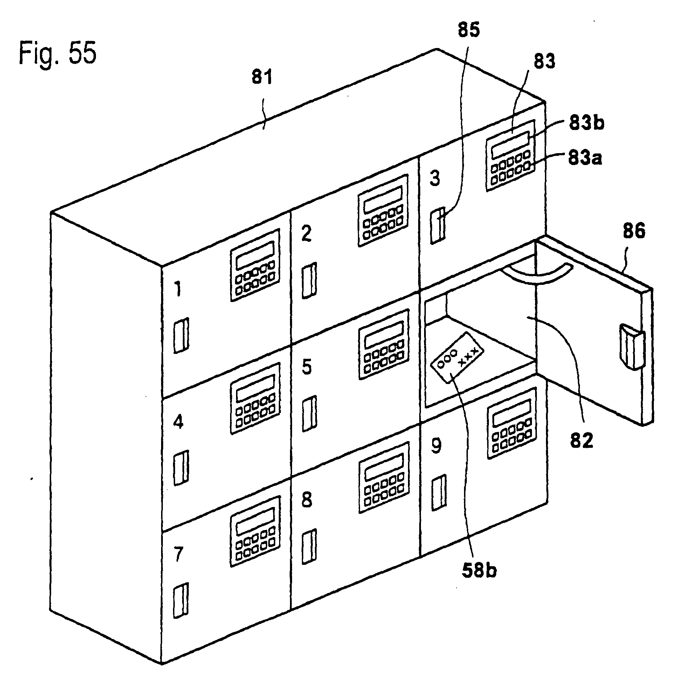

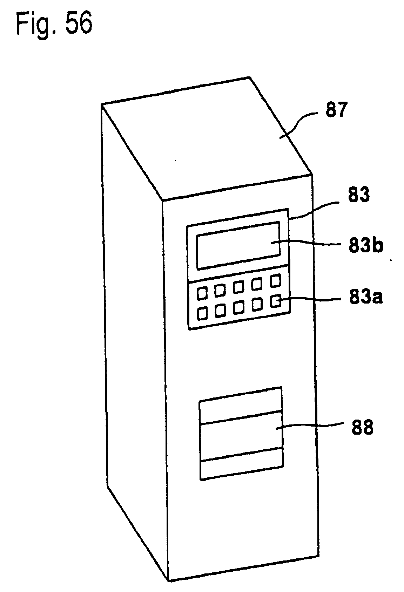

As such stocker part 65, it is possible to use the storing box 81 having a door with a lock as shown in Fig. 55, the supplying system as shown in Fig. 56 which comprises a plural of storing spaces and a common ejection port, wherein the each storing space can be locked independently and separately, and wherein the common ejection port is designed for discharging printed articles stored in any of the storing spaces. Details of these devices will be described later.

In order to print a desired image utilizing an image printing apparatus according to the present invention, first, image data with a photograph image recorded, are inputted in a main body 63 by the image data inputting device 51a as an image data procurement means. The image data to be inputted are mainly a photograph image taken by a digital camera or the like, and recorded in a recording medium as digital data, but it is not limited thereto. For example, a computer graphic image produced by a personal computer, digital image data of a synthesized image produced by the editing process of a photography by a personal computer, a photograph image provided already as a printed article, a synthesized image, a computer graphic image, a handwritten illustration or the like, can be used as well.

As the image data inputting device 51a, for example, reading machines corresponding to each recording medium, such as a compact flash memory (CF), a smart medium, a compact disc (CD), a magneto-optic disc (MO), a flexible disc (FD), and a PC card, a connector to be connected with a digital camera, capable of reading image data from a memory of the digital camera, can be used. As the image data inputting device 51a, a reading device such as a scanner for reading an image from a hard copy, a film, or another printed article so as to convert the same to digital data, can be used as well. By including an image reading device capable of directly scanning an image together with a recording medium reading device in the image data inputting device 4, even in case the digital image data are not provided, the image printing apparatus according to the present invention can be utilized. For example, in case the negative film is lost, additional prints can be provided easily from the printed photograph. It is preferable to include a plurality of reading devices of different kinds in the image data inputting device 51a in order to improve the applicability of the image printing apparatus of the present invention.

The image data procurement means is the means which is able to obtain image data from any place. Thus, as the means, other than the above image data inputting device 51a, an image database that memorizes one or more image data and is possible to take out the desired moving image data properly, etc. may be established. The image database may be installed in the this print system, or it may be constructed to the center server, etc., as an image source which is independent from the this print system.

Next, the order content concerning the image to be output is inputted in the main body 63 using an order content inputting device 53. The order content is prepared preliminarily on the image printing device side so that a user can select one from the prepared content freely. It is preferable that the order content to be selected is shown to the user according to a display device (not shown) for guiding the inputting operation of the order content. As the display device, a color or monochrome CRT, a liquid crystal display or the like, are used commonly, but it can be a simpler device such as a display panel with the operation method shown in items. In addition thereto, a substitute display device such as various kinds of screen panels, plasma displays or the like, can be used as well.

As choices to be selected for the order content, for example, specification of at which frame the image to be printed is among the image data inputted for a plurality of frames, determination of the number of prints and the size, determination of whether or not special printing such as pre-cut seal or the like, is executed, and in addition, in case the printing system comprises the device or the function of processing the inputted images, such as trimming, enlargement/reduction, synthesis with a frame or the like, the design including the kind of the frame, the layout or the like, and other materials can be prepared.

As the order content inputting device 53, for example, various kinds of pointers such as a touch panel provided integrally with a display device such as a CRT, and a liquid crystal panel, a keyboard, a mouse, and a track ball, can be used. Moreover, the DPOF function (digital print order format) provided in a digital camera can be used as well.

When an image data 52 and an order content 54 are inputted, an output content designation data producing means 55 is driven in the main body 63. As a result, based on the image data and the order content, output content designation data 56 including the image to be output, and the appendix conditions are produced. The output content designation data denote the data including the content to be commanded to a instantaneous printing device or backyard printing device, both mentioned below, for outputting a printed article as ordered, and which comprises the data for specifying the image to be output among the inputted image data, or the data for reproducing the image to be output. such as the image data processed based on the inputted image data, and the order content data other than the data of the image to be output, such as the number of prints, the size, and the kind of the paper.

When no editing order is present in the order content, the input image data 52 itself is recognized as image data to be output at the output content designation data producing device 55. Alternatively, when an editing order is present in the order content, the editing means 66 which provides in the output content designation data producing device 55 processes the input image, for example, synthesis with materials such as frames stored in the material database 67, enlargement, reduction, translocation, rotation, deformation, or the like in accordance with the order content so as to obtain the desired image data to be output.

The image printing system 50 has an instantaneous printing means 57a provided in the main body 63 and a backyard printing means 53 provided at the backyard printing part. Thus, the printed article of the image can be output by driving an instantaneous printing means 57a provided in the main body 63 or a backyard printing means 57b, based on the output content designation data 56.

In image print system of this invention, since the main body 63 has an output method choice means 68, the customer, or the owner or administrator of the image print system can freely choose either the instantaneous printing means 57a or backyard printing means 57b by using the output method choice means 68 in order to output the printed article by the output means chosen.

In this invention, it may be set to deliver a printed article to the customer instantaneously by using the instantaneous printing means 57a of the main body 63, in case the printed article is of relatively high frequent orders, for example, standard size photo or pre-cut seal. It is advantageous to print out in the instantaneous printing means 57a in case the printed articles wanted is of such high frequent orders and the number of printed articles is relatively low, for example, in case one or few per each image photographed by the digital camera and recorded in the form of digital data in the storage media, or in case only one pre-cut seal is to be printed out.

On the other hand, it may be set to deliver a printed article to the customer by using the backyard printing means 57b, in case the printed article is of special kinds which is impossible to be printed by the instantaneous printing means 57a, or in case it is possible to service the order with the instantaneous printing means 57a, but not brings efficiency. For example, as the backyard printing means 57b, the used is a printing device that is possible to print in a large size or to special articles such as mug and T-shirt, or a high-speed printer which is suitable for the case that a large number of the same designed printed articles are continuously printed out, for example, the printing of season greeting cards such as New year's cards or hot season cards.

Typically, in this invention, it is possible for the customer to choose freely the instantaneous printing means 57a or backyard printing means 57b by using the output method choice means 68.

For example, by displaying "instantaneously printing?", "backyard print ?", etc. in display means (not shown) such as liquid crystal panel and CRT, alternatives are indicated to the customer, Then, by making the customer who decides one of the alternatives operate an order content inputting means such as the touch panel and an common input means or exclusive selective buttons, the choice is input.

In the cases that the customer feels any inconvenience about the execution of the instantaneously printing, such case that there are many prints number of sheet, and case that the customer wants to return early after finishing only the order, etc., he can choose the backyard print.

When the customer orders a special print such as large size print or print to a mug or T shirt, regardless of the customer's will, the output method choice means 68 automatically chooses the backyard printing.

On the other hand, when owner or administrator of the image printing system uses the output method choice means 68, at the administrator mode in which only the manager is operable, a branch condition for choosing whether the instantaneous printing means or the backyard printing may be set. Then, it is possible that the output method choice means 68 will automatically choose one of output means in accordance to the order content of the customer. Alternatively, at the administrator mode, the output means to be used may be fixed either as the instantaneous printing means or as the backyard printing, and the output method choice means 68 will activate only the output means fixed so as to do the printing.

As the branch condition for choosing whether the instantaneous printing means or the backyard printing, for instance, the number of sheets to be printed, time zones, types of desired print, etc. may be used.

As described above, once the output method choice means 68 are driven in accordance with the choice input by the customer on the usual operational mode, or the choice input by the administrator of the system on the administrator mode, either of the instantaneous printing and backyard printing is chosen. Upon the choice of instantaneous printing, the instantaneous printing means 57a is activated, and the printing of the image printed article 58a is performed instantaneously in accordance with the output content indication data 56. Upon the choice of backyard printing, the output content indication data 56 is sent to the backyard printing part 64, then the backyard printing means 57b is activated, and the printing of the image printed article 58b is performed at backyard in accordance with the output content indication data 56. By the way, it is preferable to drive the output method choice means 68 after the driven of the order content inputting means. Because, it would be difficult to decide accurately whether the appropriated is immediate printing or backyard printing until the all of order contents are present out.

As the instantaneous printing means 57a, a printer set corresponding to the printed article most frequently ordered is installed in consideration of the instant property capable of maximally performing the handiness of a post type image outputting apparatus, and the compactness capable of executing in the housing of the post type image outputting apparatus. In case the space for installing two or more printing devices is provided in the housing of the post type image outputting apparatus, it is preferable to add, for example, a printer set corresponding to a pre-cut seal printed article in order to maximally perform the handiness of the post type image outputting apparatus.

As the backyard printing means 57b, various printers may be used in order to deal with the orders which are impossible to be processed with the instantaneous printing means 57a installed in the housing of the post type image outputting apparatus. For example, it is possible to use a high-speed printer or use an increased number of the same printers as that installed in the housing of the post type image outputting apparatus, in order to deal with the case of large volume prints. Further, it is possible to install an exclusive printer in order to deal with the case that a special printed article such as large size printed article, or article printed on mug, T-shirt or the like is required. It is possible to use as the backyard print means 57b a relatively large size printer, because it can be installed external to the housing of the post type image outputting device, and it is also comparatively easy to install a plurality of printers.

As a concrete outputting method of the printing device 57a and backyard printing means 57b, for example, an outputting method suitable for printing based on digital image data, such as the sublimation type thermal transfer method, the melting type thermal transfer method, and the ink jet, can be utilized.

When the backyard print is chosen by the output method choice means 68, any character string as the customer pleases is input using password designation means 59a as the certification information setting means, and this character string is set as password 60a. As needed, the password designation means 59a decides and allocates a storing space which should store the print article among the multiple storing spaces in storage means 61 of stockers part 65, while it sets the password 60a in relation to the printed article. As inputting device of the password designation means 59a, it is possible to use any inputting devices such as the touch panel united with display device such as CRT and liquid crystal display, key board, mouse or track ball, etc., which are common with the order content inputting means 53.

The password designation means 59a is usually operated, after the backyard print is chosen by the output method choice means 68 and before the output content indication data 56 is transferred to backyard print division 64. For example, the input is carried out by indicating a guidance for the input method of the password to the customer by using a dynamic display means such as CRT and liquid crystal panel, or a static display means such as bulletin board, after the selection of the backyard printing. After the completion of the password inputting, the output content designation data 56 is transferred to the backyard print part 64, while the order receipt note is given to the customer.

In the order receipt note, collation information which is needed for receiving the printed articles, for example, the receipt number of the ordered printed articles, the number which specifies storage position in the storage means of stockers part 65, and the password set, etc., are described. The collation information described in the order receipt note is also necessary information for storing the printed article 58b at the backyard print into the stocker part 56, thus a part of or all of the collation information is attached as a storage information to the output content designation data 56 in order to transfer the backyard printing part 64, and further, optionally to transfer the stocker part 65. The password may be transferred only to stockers part 65 in order to prevent the leakage of the password, and it may be decided not to include the password to the collation information transferred to backyard print division 64.

As the certification information setting means, any of which can set an information which is possible to confirm the identity of the customer to be handed to the printed article and which is also utilized as a key for the lock and open of the storage means in the stocker division may be used.

For example, a password providing means which is capable of creating password automatically and providing it to each order, a voice recording means which synthesizes sonagram pattern from a given voice of the customer and utilize it as the identification information, a fingerprint registration means which utilizes a given fingerprint of the customer as the identification information, a certification card producing means which produces a magnetic or IC card which has an embedded visually unrecognizable password, may be used instead of the password designation means 59a.

In the main body 63 of the image printing system 50 of the present invention, a fee charging means 69 may be provided for collecting the fee for outputting and providing an image. In case the fee charging means is provided, the fee charging means is driven after driving the order content inputting device, more preferably after driving the outputting method selecting device and the password designation means and before outputting a printed article by the drive of the instantaneous printing means or backyard printing means. It is preferable to show the amount to be collected by the fee charging means to a user on the display device (not shown) together with the order content. When the user inserts a bill and/or a coin in the fee charging means according to the guide of the amount display by the display device, the fee charging means calculates the accepted amount and returns the change if any.

A fee and order receipt note producing means 71 may be provided in the fee charging means. The fee and order receipt note producing means automatically produces a receipt having the collected amount and the order content printed thereon after completing the fee collection by the fee charging means when the instantaneous printing is selected at the output method choice means. The fee and order receipt note producing means may comprise a receipt producing eliminating means so that the producing of the receipt can be eliminated selectively in case the user does not need the receipt. In this case, after completing the collection of the fee, an operation guidance "Would you like a receipt published?" or the like is displayed on the display device (not shown) so that the user presses a corresponding touch panel button or keyboard for executing the choice of producing or not producing.

When the backyard printing is selected at the output method choice means, the fee and order receipt note producing means 71 may produce an order receipt note 72 separated from the fee receipt, or an order receipt note 72 having both items mentioned for fee receipt and the collation information.

After the fee charging by the fee charging mean 69 is finished and a fee receipt or order receipt note is produced by the fee and order receipt note producing means 71 and it is discharged from the outlet port provided into the main body 63, the instantaneous printing or backyard printing is performed. In case of the instantaneous printing, output content designation data is sent to the instantaneous printing mean 57a, then, the printed articles 58a is printed from the instantaneous printing means and taken out from the outlet port (not shown) in the main body 63.

In case of the backyard printing, output content designation data is sent to the backyard printing mean 57a in the backyard printing part 54, then, the printed article 58b is printed from the backyard printing means . After attachment of a collation information for storing, the printed articles 58b is transferred to the stocker part 65. Thus transferred printed article 58b is stored to a predetermined position in the stocker part 65 in accordance of the collation information attached thereto, and the stored position is locked with the password or other identification information. The transfer of printed article from the backyard printing part 64 to stocker part 65, and the storage into the storage means 61 of the stocker part may be done by hands, or may be done automatically by the machinary control.

For example, while print article 58b is produced by the printer as a backyard print means, an allocation sheet having the receipt number of the printed article, the number which specifies an allocated storage position in the storage means of stockers division 65, the collation information such as set password, and the thumb nail image of ordered images, etc. is printed out by the same printer or by a different printer. The clerk of the shop transports the allocation sheet with this printed article 58b into the stocker part 65, and then can confirm the content of the printed article, store it to the designated storage position, and lock away it with the designated password in accordance with the description of the allocation sheet. Alternatively, print article 58b which is produced by the printer as a backyard print means may be transferred to the stocker part 65 via a transferring means such as a belt conveyor without using manpower, while the collation information of the transferred printed article is sent from the backyard printing part 64 to the stocker part 65 via line 73. In this case, the control device (not shown) installed in the stocker part 65 allocates the printed article 58b to the designated position in the stoker part and locks away it with the password.

By transferring the collation information of individual printed articles to the stockers division 65 directly from the password designation means 9a of the main body 63 and confirming it with the collation information transferred from the backyard printing part, even in either cases, it comes to be possible to heighten the efficiency of the storage working , and to reduce frequency of errors in the storage work.

It is possible to receive the printed article 58a stored in the storage means 61 , when inputting the true password 10' using password input means 12a in the stocker part in order to open the lock of the storage means 61 of stocker part 65. It is possible to set at the password inputting means so that the password may be input, after inputting of the information, for example, the receipt number or the number of the storing box. which specifies the position where the ordered printed article is stored.

As password inputting means 12a, it is possible to use numerals or character input keys and liquid crystal touch panel, etc. In case the things except for the password is used as the certification information, a proper inputting device may be adopted according to the type of certification information. For example, when the sonagram pattern is used as the certification information, a microphone would be preferable as the inputting device. In case of the fingerprint, a scanner may be used, and in case of magnetic or IC card having an embedded certification information, a card reader may be used.

In the image printing system according to the second aspect of this invention, in order to supplement the printing ability without detriment to the easiness as the post type image outputting apparatus, it is preferable to install the main body 63, backyard printing part 64 and stocker part 65 in the same shop so that the orders which are impossible, or are not of efficient to process with the main body 63 can be treated with the backyard printing part 64 which locates by the side of the main body 63.

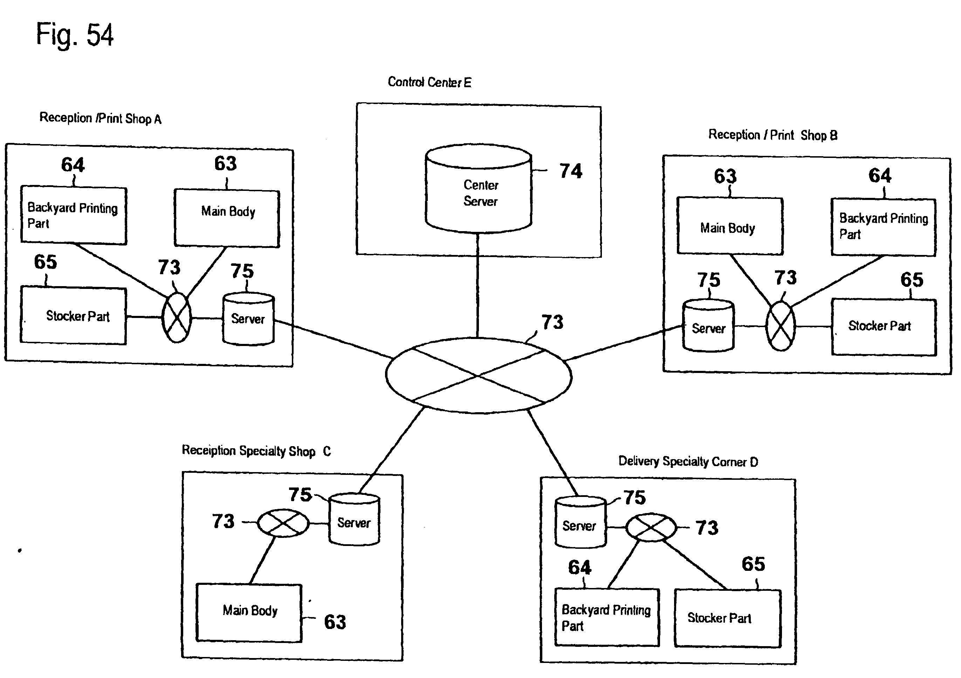

Further, in the image printing system according to this invention, as shown in Fig. 54, it is possible to connect a main body which serves for accepting function , a combination of a backyard printing part and stocker part which serve for delivery function, and some units of image printing systems each having a main body, a backyard printing part and stocker part, which are far away from each other, via network such as intranet or Internet. In this case, the customer may order at any one of the reception /print shop A, the reception /print shop B, the reception specialty shop C as shown in Fig.2, and then receive the printed article at any one of the reception /print shop A, the reception /print shop B, and the print specialty shop D. It is possible to control with the center server 74 in the control center E the order situation and printing situation of the shops connected via network. Therefore, it is possible that the customer does receive the printed article at a place which is completely far away from the place where the customer orders the printing articles, and that is convenient. In addition, the system owner or administrator may install various shops at various locations so as to respond to the customer needs, by selecting optimally from the modes of the shop having both ordering and delivering functions , the shop having only ordering function, and the shop having only delivering function , since in such construction all of shops are not necessitated to have all the reception 63 and backyard outputting part 64 and stocker part 65.

Next, an embodiment according to the present invention will be explained with reference to the drawings. Fig. 3 shows the external appearance of the post type image outputting device which can be used as the main body 63 used in the embodiment of the image printing system according to the present invention.

Although this device has been described above in relation to the image printing system of the first aspect according to this invention, it described here again in relation to the system of the second aspect.

In Fig. 3, a screen of a monitor 14 with a touch panel is disposed on the upper front surface of the main body 1. The monitor 14 with a touch panel may be a CRT or liquid crystal panel. The monitor 14 with a touch panel performs as a display device for displaying the operation guidance, the operation state, the read out image or the processed image or the like as well as a device for the inputting operation for inputting an order content, inputting an output method chosen, producing an order receipt note, inputting personal information, designating a password or the like.

Insertion ports 15 to 19 for various recording media are provided sideways to the monitor 14 with a touch panel. A scanner reading surface 20 is provided on a horizontal part dividing the upper part and the lower part for reading the image of a printed article and processing the same to digital data. In this embodiment, these are a part of the image data inputting means. In this embodiment, as the insertion ports for the various recording media, specifically, a flexible disc insertion port 15, a CD-ROM insertion port 16, a PC card insertion port 17, a smart medium insertion port 18, and a compact flash insertion port 19 at a position on the whole. Moreover, the main bodies of each reading device are installed inside the housing of the main body 1 corresponding to the insertion port of each recording medium. A shutter (not shown) may be provided on each insertion port so that the recording medium cannot be taken out until collection of the fee is completed.

In the lower part of the main body 1, a maintenance key 21, a speaker 22, a coin insertion port 23, a coin return lever 24, a bill insertion port 25, a change return port 26, a receipt outlet port 27, a printed article (for standard printing) outlet port 28, a printed article (for pre-cut seal) outlet port 29, and a front door port/closing key 30 are disposed. The maintenance key 21 is a key for switching an ordinary drive mode capable of accepting a customer, and an administration mode for setting the image printing system or maintenance by an administrator. The speaker is for reproducing the sound, BGM, effect sound or the like while waiting or operation.

In this embodiment, the coin insertion port 23, the coin return lever 24, the bill insertion port 25, and the change return port 26 constitutes a part of the fee charging means. A customer would pay for the fee by inserting a coin in the coin insertion port 23 and/or inserting a bill in the bill insertion port 25. In case there is a change, it is discharged from the change return port 26 so that it is received by the customer. Moreover, In case a coin is choked, it is discharged from the change return port 26 by turning the coin return lever 24 so that it is received by the customer,

In this embodiment, the receipt outlet port 27 constitutes a part of the fee and order receipt note producing means and the order receipt note producing means. When the customer selects the instantaneous printing, a fee receipt with the collected amount and the order content printed is discharged from the receipt outlet port 27. When the customer selects the backyard printing, a fee and order receipt where the items mentioned for fee receipt such as the collected amount and the order content as well as the items mentioned for order receipt such as the receipt number, storing box number, password and the time possible to receive the article are printed is discharged from the receipt outlet port 27.

In this embodiment, the printed article (for standard printing) outlet port 28 and the printed article (for pre-cut seal) outlet port 29 constitute the instantaneous printing means. In case the customer designates the instantaneous printing, after inputting the command, the customer waits completion of the printing process in front of the main body 1 so as to receive a printed article discharged from the printed article outlet port 28 or the printed article outlet port 29. In case the customer designates the backyard printing, the customer leaves from the front of the main body 1, and go to the stoker part 1 which is at a place apart from the main body to receive the printed article, after the customer finished the order.

By turning the front door port/closing key 30, the front door is opened so that the maintenance work for each device installed inside the housing can be executed. In the housing of the main body 1, each main body is installed corresponding to the screen of the monitor with a touch panel, the insertion port, and the scanner reading surface. A volume adjusting part is installed corresponding to the speaker 22. Corresponding to the coin insertion port 23, the coin return lever 24, the bill insertion port 25, and the change return port 26, a coin mech (coin processing device) for identifying the coins, storing, and returning the change, a bill bari (bill processing device) for identifying the bills, and storing, and a safe for storing the coins In case the coin mech is fill, are installed. Corresponding to the receipt outlet port 27, a receipt printer is installed. Furthermore, corresponding to the printed article outlet port 28, and the printed article outlet port 29, a printer is installed.

Moreover, although it is not apparently recognized by the external appearance, inside the housing of the main body 1, a personal computer including a control unit for controlling each device in the main body 1, a power source box for converting the voltage, an interruptible power supply device for preventing breakage of the CPU, the hard disc or the like in the control unit at the time of blackout or the like are installed.

Fig. 55 shows the appearance of storing box 81 utilized as stockers part 65 of the images printing system 50. In Fig. 55, the storing box 81 is divided in plural cabinets 82, and the serial number ( the box number ) is respectively provided to each cabinet.

To each cabinets, a doors 85 equipped with a lock 83 which key is the password and a knobs 84 is provided. The lock 83 has a liquid crystal panel 83b which displays the input character string and a ten-key pad 83a for inputting the password.

It puts print thing 58b in the cabinet of designated number, the employee of the store though it transports the classification vote to storing box of 81 with print thing got by the backyard print division, and though the classification vote is observed, the door is closed, and designated password is locked as a key.

The clerk of the shop transports the allocation sheet and printed article 58b which are obtained in the backyard printing part into the storing box 81, and then stores the printed article 51b into an cabinet 82 of the designated number, closes its door and locks the door with the designated password as the key in accordance with the description of the allocation sheet. The customer may open the cabinet 82 that the number is described in the receipt note, by inputting the true password to the lock of cabinet by using the ten-key pad , in order to receive the printed article stored in this cabinet without necessitation of meeting with the clerk. When this storing box 81 is installed in front of the shop, it becomes more convenient since the customer would be able to receive the printed article even after the business hour of the shop.

Fig. 56 shows the appearance of a supplying device 86 that may be utilized as a stocker part, instead of the storing box 81 shown in Fig. 55. The inside of the supplying device 86 is provided with plural storing spaces which individually lock up by password as a key. It is possible that the storing spaces in the supplying device 86 may be the structure where the space are divided into plural cabinets which each can store the printed article and lock its door, or the structure which have plural pinching members capable of being locked in the state of holding the printed article, for example. Further, at the front of the supplying device 86, locks 83 which each can lock and unlock the individual storing spaces and a common outlet port 87 are provided. The clerk of the shop opens the door of the supplying device 86, then stores the printed article 58b obtained from the backyard printing part into a storing space of the designated number, and locks it with the designated password as the key in accordance with the description of the allocation sheet. Alternatively, it is possible to constitute so that the supplying device 86 is directly connected to the backyard printing part through a transferring means for printed article, then the printed article is mechanically and automatically transferred from the backyard printing part, allocated into the predetermined storing space in the device 86, and reserved in locking on. The customer may open a particular storing space that the number is described in the receipt note, by inputting the true password to the lock 46 by using the ten-key pad 83a of the lock, in order to receive the printed article stored.

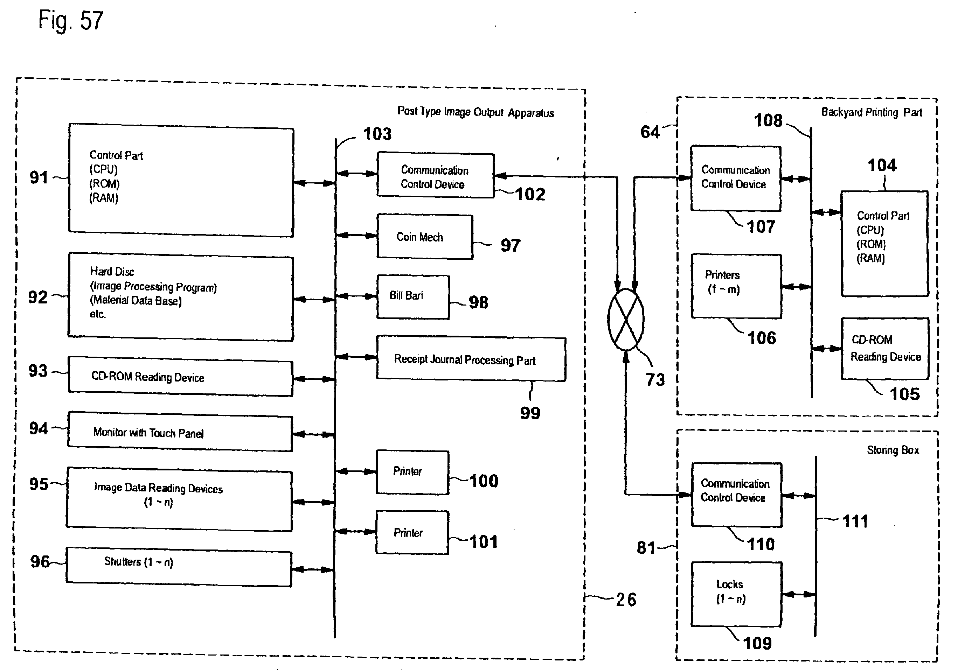

Fig. 57 shows a block diagram according to an embodiment of an image printing system utilizing the above post type image output device 1 as the main body and above storing box 81. In this embodiment, the post type image output device 1 comprises a control unit 91, a hard disc 92, a CD-ROM reading device 93, a monitor 94 with a touch panel , n sets of image data reading devices 95, n sets of shutters 96, a coin mech 97, a bill bari 98, a receipt journal processing part 99, two sets of printers 100, 101, and a communication control device 102, connected via a bus 103. The backyard printing part 64 comprises a control unit 104, a CD-ROM reading device 105, m sets of printer 106, and a communication control device 107, connected via a bus 108. The storing box 81 comprises locks (1 to n) 83, and communication control device 67, connected via a bus 111. The main body 1 and backyard printing part 64 and the storing box 81 each are connected to line 73 via their respective communication control devices 102, 67 and 71.

The control unit 91 of the main body 1 comprises a CPU, a ROM, and a RAM for controlling the drive of the devices connected via the bus according to a program stored in the hard disc 92 as a large scale memory medium. In the hard disc 92, programs for controlling the drive of the devices, such as a reading program corresponding to each recording medium, an port/closing control program for the shutters, a fee charging program or the like, as well as an image processing program for processing an inputted image, a material data base storing information of frames to be used for the image synthesis, a branch condition for selecting automatically the backyard printing as the method for output of the ordered image, a password setting condition, or the like, are stored so as to be read out as needed and stored in the RAM for driving various devices. The CD-ROM reading device 93 is used for upgrading the version of programs or any information stored in the ROM or the hard disc of the main body 1 such that a CD-ROM for upgrading the version is inserted in the CD-ROM reading device 93 for rewriting the data with the main body switched to the administration mode by the maintenance key.

In Fig. 57, by selecting and executing the touch panel buttons displayed on the monitor 94 with a touch panel according to the operation guidance displayed on the monitor 94 with a touch panel of the main body 1, a series of the operation for reading the image data to the output of a printed article can be executed. In this embodiment, first, the menu of the printed article is selected according to the operation guidance displayed on the monitor 94 with a touch panel, and in case the touch panel button is pressed, an operation screen for guiding the input of the image data is shown on the monitor 94 with a touch panel .

The image data reading devices 95 include various reading devices 1 to n corresponding to various kinds of recording media so that the customer can input photography image data recorded in a recording medium he or she has into the main body 1 using the corresponding reading device. The image data reading devices 95 also include a scanner so that an image can be read out from a printed article, processed to be digital data, and inputted into the main body 1. In case the image data reading devices 95 are not dedicated for reading but also they can record image data in a recording medium, the customer can store the image data of the processed image produced by operating the main body 1 and take it home with the customer. The shutters 96 are provided at the recording medium insertion ports of the reading devices 1 to n so that the taking out operation of the recording medium can be prohibited during the reading process, or until the fee charging process is completed by port or closing the recording medium insertion port.

When the images provided by the customer are inputted as digital data using the image data reading devices 95 according to the operation guidance on the monitor 94 with a touch panel , the inputted image is shown on the monitor 94 so that an image can be selected according to the operation guidance of the monitor 94 with a touch panel. At the time, it is convenience to show the images as a thumb nail image or the like, and select an image by the touch panel method.

When an image is selected, an image processing program is executed according to a printing menu already selected. The customer can process the image, such as reduction, enlargement, rotation, deformation, synthesis with another image or the like according to the operation guidance on the monitor 14 with a touch panel . At the time, image materials stored in the material data base, such as picture frames can be utilized as well.

After completion of the process or synthesis of the image. according to the operation guidance on the monitor 94 with a touch panel , the order content other than the printing menu and the process content, such as the number of prints, the print size or the like, is inputted. Also at the time, the order content can be inputted by pressing a button or ten keys displayed on the touch panel. In case a printing menu not requiring the process or synthesis of an image is selected at the time of the start, the operation screen for guiding the process or synthesis operation is eliminated so that the operation guidance for guiding the other order content is displayed immediately.

After all the order content is inputted, in monitor 94 with the touch panel, the screen for selecting whether the ordered image is to be printed instantaneously or at the backyard is displayed, and the output method desired is selected from the two by pushing one touch panel button which represents the output method desired. Still, there is a case in which the ordered print article cannot be processed by the printers of 100 or 101 installed in main body 1. Further, there is a case in which the system is set by the supplier of the system so that certain printing articles ordered are automatically processed with the backyard printing means in accordance with the fixed branch condition, or so that all of printing articles ordered are automatically processed with the backyard printing means. In these cases, the screen for selecting whether the ordered image is to be printed instantaneously or at the backyard is not displayed. Instead of this, a notice screen that the order is automatically sent to the backyard printing means, or a confirmation screen for acquiring an agreement for the backyard printing of the order would be displayed.

In accordance with the above selection of the instantaneous printing or of the backyard printing, the following operation procedure is varied.

When the instantaneous printing command is provided according to the operation guidance on the monitor 94 with a touch panel , the charged fee is displayed on the monitor 94 together with the order content and the fee payment is requested. When a coin is inserted and/or a bill is inserted to the main body 1 according to the payment request, the coin mech 97 and/or the bill bari 98 is driven so as to execute the fee charging process such as judgment of genuineness of the coin or bill inserted to the main body 1 for the fee payment, the judgment of the kind thereof, the amount calculation, the discharge of the change or the like. In case the instantaneous printing operation is commanded, after finishing the fee charging process, the receipt journal part 99 prints the printing menu, the collected fee amount or the like on a receipt paper and discharges the receipt. The system can be set so as to eliminate the drive of the fee charging means In case request of the fee payment is not needed.

After the discharge of the receipt, the shutter is opened so as to enable taking out of the inserted recording medium so that the operation screen for guiding the take-out of the recording medium is displayed on the monitor 94 with a touch panel . When the recording medium is taken out, a printed article is output by the printer 100 or 101. The printer 100 can output a standard size printed article with a standard image quality, and the printer 101 can output a pre-cut seal printed article.

When the backyard printing command is provided according to the operation guidance on the monitor 94 with a touch panel, the input of the password which is necessitated for the identification of the customer upon the receipt of the printing articles at the backyard printing part is required, and then it is provided from the customer by his pushing operation of the touch panel buttons or ten-key numerical pad according to the operation guidance on the monitor 94 with a touch panel . After the completion of the designation of password, the charged fee is displayed on the monitor 94 together with the order content and the fee payment is requested. The charging process in this case is similar with that of the above mentioned instantaneous printing case. In case the backyard printing is selected, after finishing the fee charging process, the receipt journal part 99 prints the items mentioned for fee receipt and the collation information which is necessitated upon the receipt of the printed article, such as the storing box's number, password, etc., on a receipt paper and discharges the fee and order receipt note. Similar as the instantaneous printing case, the system can be set so as to eliminate the drive of the fee charging means in case request of the fee payment is not needed.

After the discharge of the fee and order receipt note, the shutter is opened so as to enable taking out of the inserted recording medium so that the operation screen for guiding the take-out of the recording medium is displayed on the monitor 94 with a touch panel . When the recording medium is taken out, the order content indicating data and the collation information recorded at RAM, hard disc in the main body 1 or another storage region (not shown) is sent to the backyard printing part 64 through the communication control device 102 of the main body and network 73. The collation information is also sent to the storing box 81.

The control unit 104 of the backyard printing part 64 comprises a CPU, a ROM, and a RAM for controlling the drive of the devices connected via the bus according to a program stored in ROM or another storage region (not shown). The backyard printing part is also provided with a CD-ROM reading device 105 and the device is used for upgrading the version of programs in the ROM of the backyard printing part 64.

The order content indicating data and collation information transmitted from the main body 1 are read out through the communication control device 107 for the backyard printing part 64, and it is transmitted to any of m set of printers 106 that driving is controlled by control unit 104 to output the printed article. It is possible that printers 106 of backyard printing part 64 meet the order which can not be processed by the instantaneous print, and it is possible that for example, it is high-speed, and that the large printed article is output within the short time and that it outputs special printed articles such as the large size one. While the printed article is produced by the printer 106 of the backyard printing part 64, an allocation sheet which has the collation information and thumb nail image of ordered images is also printed out.

This printed article produced in the backyard printing part 64 is transported by the clerk into the storing box 81 along with the allocation sheet. Then, the printed article stores to the designated cabinet, and lock away it with the designated password in accordance with the thumb nail image and collation information description of the allocation sheet.

The collation information sent from the main body 1 is read into one of locks 109 which are provided at the doors of each cabinets. The clerk can compare the collation information read into the lock with the description of the allocation sheet to confirm the identity between them, thus the frequency of sorting error can be more decreased. Furthermore, in case the password input by the clerk is not match with that read into the lock in advance, it is preferable not to set to lock it. Thus, the frequency of sorting error can be more decreased.

Alternatively, when the password is omitted to the allocation sheet printed by the backyard printing part and the collation information is sent from the main body 1 to the lock 109 of the storing box so as to input the password thereto automatically, the clerk can only store the printed article to the designated cabinet according to the description of the allocation sheet. In this case, once the door of the cabinet is closed by the clerk, the door is automatically locked. Thus, it is possible to prevent the password leak, to heighten the efficiency of sorting work.

Next, the motion of the image printing system of the present invention will be explained with reference to a flow chart and the indication on the monitor with a touch panel, as the image printing system 50 shown in Fig.53.

In the embodiment of the image printing apparatus according to the present invention, a start screen as shown in Fig. 11 is displayed on the screen of the monitor 14 with a touch panel in the main body. In case an optional position of the start screen is touched by a hand, a main menu screen as shown in Fig. 12 is indicated. In case the main menu screen is left for a predetermined time, it returns to the start screen. In the main menu screen, the kinds of the printed articles to be selected are shown. Specifically, touch panel buttons for the "digital photo", the "frame synthesis", the "index print", the "seal", the "certification photograph", and the "postcard print" are shown in the upper and lower two rows.

In case the "digital photo" is selected in the main menu screen and the touch panel button thereof is touched, a print out can be provided by reading the image data from a smart medium, a PC card, a compact flash card, a CD-ROM, or a flexible disc (FD), or reading the image data from a printed article such as a photograph using a scanner.

In case the "frame synthesis" is selected, a print out can be provided by reading the image data from a smart medium, a PC card, a compact flash card, a CD-ROM, or a flexible disc (FD), or reading the image data from a printed article such as a photograph using a scanner, and synthesizing the read out image and a frame prepared by the system side.

In case the "index print" is selected, an index print with a thumb nail image displayed can be printed out by reading the image data from a smart medium, a PC card, a compact flash card. a CD-ROM, or a flexible disc (FD).

In case the "seal" is selected, a pre-cut seal can be printed out by reading the image data from a smart medium, a PC card, a compact flash card, a CD-ROM, or a flexible disc (FD), or reading the image data from a printed article such as a photograph using a scanner, and synthesizing the read out image and a frame prepared by the system side. In the pre-cut seal, a plurality of small screens (frames) of the same image are printed, with each small screen divided by half cut.

In case the "certification photograph" is selected, an image for the certification photograph is taken by a digital camera in the shop so as to be stored in a flexible disc, and then, the stored image data are read out by the main body so that they can be printed out after selecting the size from the driver's license size, the curriculum vitae size, the passport size, and the visa size, and selecting color or monochrome.

In case the "post card print" is selected, a print can be provided by reading the image data from a smart medium, a CF card, a flexible disc (FD), a PC card, or a CD-ROM, or reading the image data from a printed article such as a photograph using a scanner, producing the postcard data by processing the read out image, and reading the postcard data from the recording medium storing the same.

Since the motions of the backyard printing part and stoker part are the same in each print menu, the procedure in case the "digital photo" is selected will be explained as the typical example.

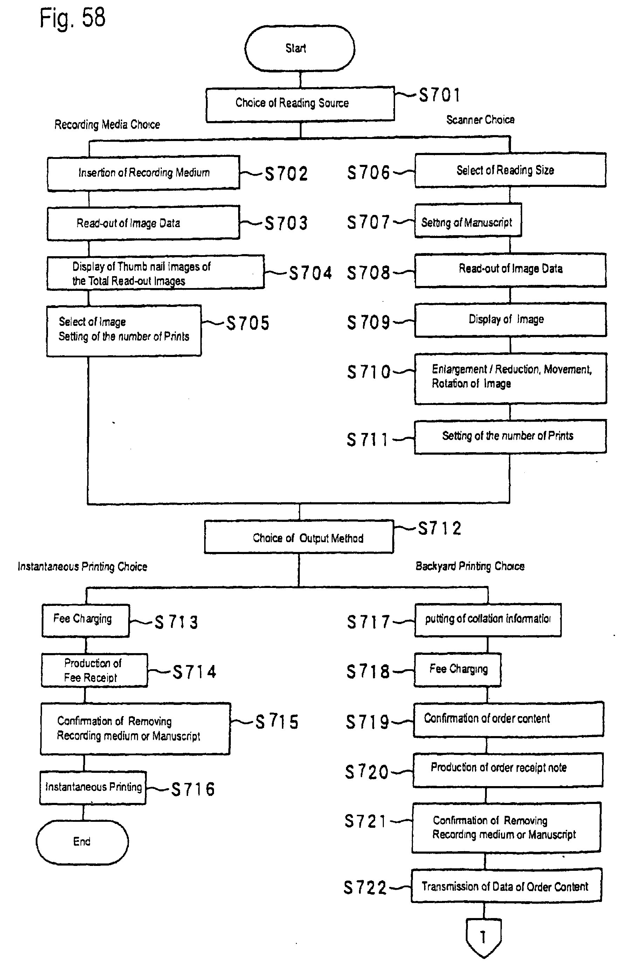

In the main menu screen, if the "digital photo" position is touched by a hand, the "digital photo" procedure shown in Fig. 58 is started. In each operation screen to be indicated after the start of the "digital photo" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

In case the "digital photo" procedure is started, as shown in Fig. 13, an operation screen with the image data reading sources shown is indicated so that a reading source can be selected (S701). In the operation screen at the time, the message "please select the medium for input from those shown below" is shown laterally in the uppermost row, and therebelow, the touch panel buttons each with the name of the smart medium, the compact flash card (CF card), the flexible disc, the PC card, the CD-ROM, and the photograph (scanner) are shown. In the operation screen, in case a touch panel button is touched by a hand, the corresponding reading source is selected.

If any of the reading sources is selected from the smart medium, the CF card, the flexible disc, the PC card, and the CD-ROM, the operation screen showing the inserting method corresponding to the selected recording medium is indicated so that the recording medium can be inserted (S702). Thereafter, the procedure of S703 to S705 follows.

In the operation screen in case the smart medium is selected, as shown in Fig. 14, the message "please set the smart medium and press the reading start" is shown laterally in the uppermost row, and a "reading start" button is provided in the lowermost row together with the "cancel" button and the "return to the previous screen" button. Similarly, in case the CF card is selected, the operation screen shown in Fig. 15 appears. In case the flexible disc is selected, the operation screen shown in Fig. 16 appears. In case the PC card is selected, the operation screen shown in Fig. 17 appears. And in case the CD-ROM is selected, the operation screen shown in Fig. 18 appears.

In case a recording medium is inserted in the predetermined insertion port according to the guidance of the operation screen (S702) and the reading start button on the touch panel is touched by a hand, the insertion port with the recording medium inserted is closed by the shutter so as to start the reading operation of the image data (S703),

As shown in Fig. 19, the operation screen with the thumb nail images of the total read out images shown appears (S704) after the reading operation is completed. In the operation screen at the time, the message "please select the image to be printed, and input the number of prints" is shown laterally in the uppermost row, and therebelow, total 6 thumb nail images are shown in the two rows laterally, with the column for inputting the number of prints provided to each thumb nail image. Below the thumb nail images, "+" and "-" buttons for increasing or reducing the number of prints, and "+" and "-" buttons for the total images are provided. By selecting a thumb nail image on the screen for selecting the image, and touching the "+" and "-" buttons for the "selected image", the number of prints for the selected image can be increased or reduced individually. In contrast, by touching the "+" and "-" buttons for the total images, the number of prints can be increased or reduced for all the images displayed on the screen.

In case the number of the thumb nail images so large than they cannot be shown on one screen, all the thumb nail images are shown, divided in a plurality of pages. The page number currently appearing on the screen and triangular scroll buttons for moving forward or backward among the pages are displayed on the screen in the same row as the buttons for increasing or reducing the number of prints. Moreover, in the lowermost row of the operation screen at the time, a "determination" button is provided together with the "cancel" button and the "return to the previous stage" button. By selecting the images to be printed in the operation screen, setting the number of prints for each image, and pressing the determination button, the order content is set (S705).

In the "digital photo" procedure, it is also possible to select the "photograph (scanner)" as the reading source so that the image data are read out from a printed article such as a photograph using a scanner (S706 to S711). In the operation screen shown in Fig. 13, in case the "photograph (scanner)" is selected as the reading source, as shown in Fig. 20, the operation screen for selecting the reading size appears (S706). In the operation screen at the time, the message "please select the reading size" is shown laterally in the uppermost row, and therebelow a button for selecting the photograph size and a button for selecting the A5 size are provided. In case the photograph size is selected, a manuscript of a size within the ordinary photograph size of vertically 89 mm × laterally 127 mm can be read. In case the A5 size is selected, a manuscript of a size over the ordinary photograph size up to vertically 148.5 mm × laterally 210 mm can be read.

In case the button for the photograph size or A5 size is touched, the corresponding reading size is selected so that the operation screen for reading the manuscript by a scanner appears as shown in Fig. 21 (S707). In the operation screen at the time, the message "please set the manuscript on the scanner and press the reading start" is shown laterally in the uppermost row, and the "reading start" button is provided in the lowermost row together with the "cancel" button and the "return to the previous screen" button.

In case the manuscript is set on the scanner and the reading start button is touched according to the operation screen shown in Fig. 21, the manuscript is scanned and read so as to obtain the image data (S708). When the reading operation is finished, as shown in Fig. 22, an operation screen is appeared with displaying the read out image(S709). In the operation screen at the time, the message "please adjust the position and the size of the photograph" is shown laterally in the uppermost row, and below the message on the half side, the read out image is displayed, and on the other half side, operation panels for the enlargement/reduction, and the movement are disposed in two rows vertically. In the lowermost row, the "cancel" button, the "return to the previous screen" button, the "return to the original" button, and the "confirmation" button are provided.

In the enlargement/reduction panel, a scale-up button and a scale-down button are provided so that the size of the read out image can be changed by touching these buttons. In the movement panel, movement buttons for upward, downward, leftward and rightward are provided so that the position of the image can be adjusted by touching these buttons. In case the return to the original button is pressed, it returns to the original image size and the position. In case the confirmation button is touched after finishing the image adjustment, the image adjustment is completed (S710).

In case the image adjustment is completed, as shown in Fig. 23, the operation screen for setting the number of prints for the image appears (S711). In the operation screen at the time, the message "please set the number of order" is shown laterally in the uppermost row, and below the message, a column for inputting the number of order and input buttons for increasing or reducing the number of order are provided. In the lowermost row, the "cancel" button, the "return to the previous screen" button, and the "determination" button are provided. The input buttons include a number increase button of an upward triangle, and a number reduction button of a downward triangle. By touching these, the number of order can be increased or reduced. By touching the determination button after finishing the input operation, the order content including the number of order can be set (S711).

When the order content is set by reading the image data from a recording medium (S705), or the order content is set by reading the image data from a printed article such as a photograph by a scanner (S711), as shown in Fig. 24, an operation screen for selecting the output method appears. In the operation screen at the time, the message "please select the receiving method" is shown laterally in the uppermost row, and below the message, an end time scheduled for printing is shown, and below the message, the "instantaneous printing" button which would be selected when the customer wishes to receive the printed article instantaneously at the receipt part, and the "received at a later time" button which would be selected when the customer wishes to receive the printed article at the backyard printing part are provided. In the lowermost row. the "cancel" button, and the "return to the previous screen" button are provided.

When the instantaneous printing is selected in this screen, as shown in Fig. 25, the guidance screen for charging the fee appears for executing the fee charging process (S713). Thereafter, the procedure of S714 to S716 follows.

In the guidance screen for the fee charging process, the message "please insert money" is shown laterally in the uppermost row, and therebelow, the number of order, the fee for one sheet (unit price), the total amount (sum of the charged amount), and the inserted fee (inserted amount) are shown laterally from above successively in four rows. When the amount inserted in the coin insertion port and/or the bill insertion port according to the explanation on the guidance screen reaches or exceeds the total charged amount, in case it is a mode for only confirming the total amount, the change is discharged from the change discharging port as needed, and the guidance screen for requesting the fee charge content appears as shown in Fig. 26. In the guidance screen at the time, the message "if it is okay, please press the confirmation button" is shown laterally in the uppermost row, and therebelow, the number of order, the fee for one sheet, and the total amount are shown laterally from above successively in three rows. In the lowermost row, the "confirmation" button is provided together with the "cancel" button and the "return to the previous screen" button. In the guidance screen, in case the confirmation button is touched, the fee charging process is completed so as to move to the next step.

When the fee charging process is completed, the fee receipt is published so as to be discharged from the receipt outlet port (S714). After producing the receipt, the operation screen for removing the recording medium or the manuscript, which is the reading source of the image data, appears, and furthermore, in case the recording medium is inserted in the reading machine, the shutter of the insertion port is opened (S715). As shown in Fig. 27, in the operation screen in case the smart medium is inserted, the message "please remove the smart medium and press the printing start" is shown laterally, and the "printing start" button is provided in the lowermost row. Similarly, in case the CF card is inserted, the operation screen as shown in Fig. 28 appears. In case the flexible disc is inserted, the operation screen as shown in Fig. 29 appears. In case the PC card is inserted, the operation screen as shown in Fig. 30 appears. And in case the CD-ROM is inserted, the operation screen as shown in Fig. 31 appears.

Moreover, in the operation screen in case the printed article such as a photograph is read out by the scanner, as shown in Fig. 32, the message "please remove the manuscript from the scanner and press the printing start" is shown laterally in the uppermost row, and the "printing start" button is provided in the lowermost row.

In case the recording medium inserted in the reading machine or the manuscript placed on the glass surface of the scanner is removed and the printing start button is touched according to the guidance on the operation screen, the instantaneous printing is started by the printer installed in the main body. During the printing process, the guidance screen as shown in Fig. 33 appears. In the guidance screen at the time, the message "now printing" is shown laterally in the uppermost row, therebelow, the image being printed is shown, and below the image, a time line roughly indicating the proceeding state of the printing process is lit. When the printing process is finished, the printed article is discharged from the printed article outlet port (standard printing) of the main body, and the finish screen as shown in Fig. 34 appears. The finish screen in the meantime returns to the start screen.

On the other hand, when the backyard printing is chosen by touching "received at the later" button in stage (S712) of the operation screen for selecting the output method (Fig. 24 ), operation screens for inputting any collation information needed for receiving later the ordered printed article from the storing box as a stocking means (S717), as shown Fig. 35, Fig. 36 and Fig. 60. In this stage, the screen of Fig. 35 appears at first. In the operation screen at the time, the message "please input your name" is shown laterally in the uppermost row, and therebelow. the column for inputting the name are provided, and therebelow, alphabet keys for input operation of name are arranged. Moreover, in the lowermost row of the operation screen at the time, a "completion" button is provided together with the "cancel" button and the "return to the previous stage" button. When the name is input and the "completion" button is touched in this screen, next, the screen of Fig. 36 appears. In the operation screen at the time, the message "please input your phone number" is shown laterally in the uppermost row, and therebelow, the column for inputting the phone number are provided, and therebelow, ten keys for input operation of the phone number are arranged. In the lowermost row of the operation screen at the time, a "completion" button is provided together with the "cancel" button and the "return to the previous stage" button. When the phone number is input and the "completion" button is touched in this screen, the input operation at this stage is completed.

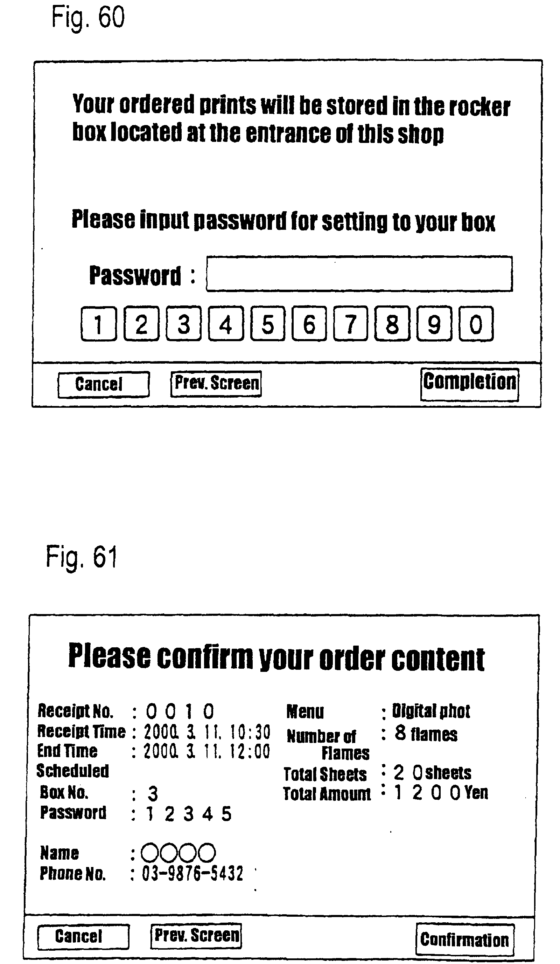

When the phone number is input and the "completion" button is touched in this screen, next, the screen of Fig.60 appears. In the operation screen at the time, the message "Your ordered prints will be stored in the rocker box located at the entrance of this shop " is shown laterally in the uppermost row, and at next, "Please input password for setting to your box", and therebelow, the column for inputting the password are provided, and therebelow, ten keys for input operation of the password are arranged. In the lowermost row of the operation screen at the time, a "completion" button is provided together with the "cancel" button and the "return to the previous stage" button. When the password is input and the "completion" button is touched in this screen, the input operation at this stage is completed.

When the input of the name, phone number and password is completed, similar with the case of fee charging process (S713) in the instantaneous printing, the guidance screen for charging the fee, as shown in Fig. 25, appears for executing the fee charging process (S718). When the fee charging process is completed, a guidance screen for confirming the order content appears as shown in Fig. 61 (S719). In the guidance screen at the time, the message "Please confirm your order content" is shown laterally in the uppermost row, and therebelow, collation information such as the customer's name, box number, password, etc., additional information such as time schedule for finishing the print, and receipt description items such as menu, charge (fee). In the lowermost row of the guidance screen at the time, a "confirmation" button is provided together with the "cancel" button and the "return to the previous stage" button. When "confirmation" button is touched in this screen, the order content is fixed.

When the order content is fixed, the order receipt note as shown in Fig. 37a is published so as to be discharged from the receipt outlet port (S720). In the order receipt note, similar to the above guidance screen of Fig. 61, collation information, additional information, and receipt description items are printed.

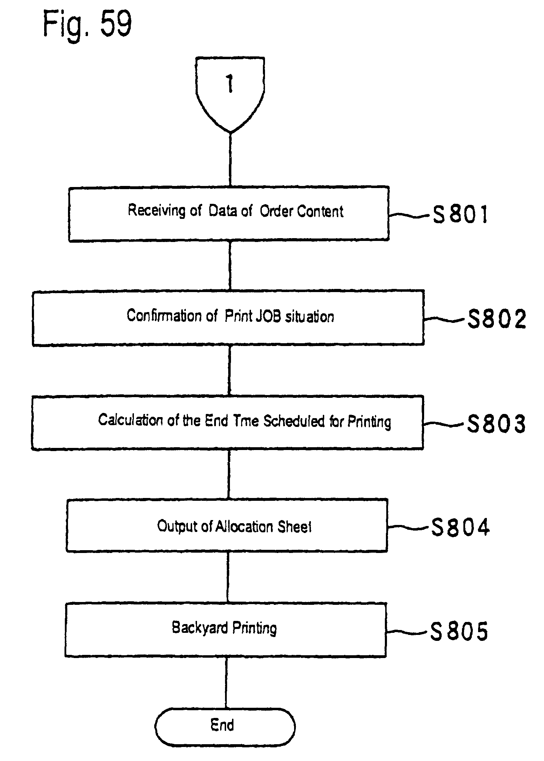

After producing the order receipt note, the operation screen for removing the recording medium or the manuscript, which is the reading source of the image data, appears, and furthermore, in case the recording medium is inserted in the reading machine, the shutter of the insertion port is opened (S721). Similar with the procedure of instantaneous printing in the step S715, one of operation screen of Figs. 27 to 35 appears in accordance with the used recording medium. When the recording medium inserted in the reading machine or the manuscript placed on the glass surface of the scanner is removed and the printing start button is touched according to the guidance on the operation screen, the data of ordered content and data to be described in the collation sheet are sent from the main body to the backyard printing part (S722). When the transmission of the data is completed, the procedure of backyard print shown in Fig. 59 starts at the backyard printing part, and the end screen shown in Fig. 34 appears in the monitor 14 of the main body.

Since the backyard printing part is in the order monitoring condition, when the ordered data is transmitted from the main body division, the backyard printing part is able to receive it(S801). After receiving, the backyard output part confirms the print JOB situation in the backyard output part (S802), and calculates the end time scheduled for the printing of the data newly received (S803). It is possible to change the order of print JOBs according to the circumstances, when the calculated end time is too late. For example, in case a print processing of the certification photograph is sent to the backyard printing by the customer's will or by the system automatically, it is possible to give high priority to this print and service it as an interrupt.

After the calculation of the end time, an allocation sheet (shop side's stub) which has the collation information and a thumb nail display of ordered images, so as to make it possible to store the printed article to a rocker box (storing box ) of the designated number and lock up the box, is output(S804). Fig. 38a is an example of the allocation sheet as shop side's stub. In this example of the allocation sheet, thumb nail images of eight photos ordered are arranged as divided into two rows at the upper side, and the same content as that disclosed in the order receipt note shown in Fig. 37a are printed at the lower side.

After completion of the allocation sheet printing, the print as ordered is done from a printer installed in the backyard. The printed articles thus obtained is stored in the storing box of the stoker part and locked as described above. The customer who come to the storing box of the storing part, located such as the front of the shop or any where, can receive his printed articles, when he inputs the true password to the lock at the door of the storing box having the box number indicated in the order receipt note, then open the door to take the printed article out.

As described above, according to the second aspect of this invention, it is possible for the customer to receive the printed article ordered without meeting with the clerk. Thus, the customer would not wait for receiving the printed article even if the clerk in charge is absent or busy.

Further, it is possible for the customer to receive always the printed article through 24 hours when the shop installs a storage means like a storing box at a place where the customer is easy of access even after the business hour of the shop, such as shopfront, and that is convenient for the customer.

In the meantime, it is possible for the shop side to improve its business efficiency, because the burden which depends on the delivery work of the clerk can be reduced.

Further it is possible to constitute the system so as to have as the printing means an instantaneous printing means and a backyard printing means, and store a part of or all of printed articles printed by the backyard printing means to a stocking means where the customer is capable of receiving the printed articles without facing to the clerk of shop. In this case, it is possible to deliver printed article to the customer instantaneously by using the instantaneous printing means of the main body, when the printed article is of relatively high frequent orders. On the other hand, it is possible to deliver printed article to the customer by using the backyard printing means in accordance with the customer's order or the pre-setting by the administrator of the apparatus, in case the ordered article is impossible to be printed by the instantaneous printing means, or in case it is possible to service with the instantaneous printing means, but not brings efficiency. Further, all of or a part of articles printed by the backyard printing means can be stored in the storage means under lock and key. Therefore, it is possible to take print menu and delivery system which can widely correspond to the requirements of the customer, without detriment to the easiness as the post type image outputting apparatus owned by the main body.

### Image printing apparatus of the third aspect

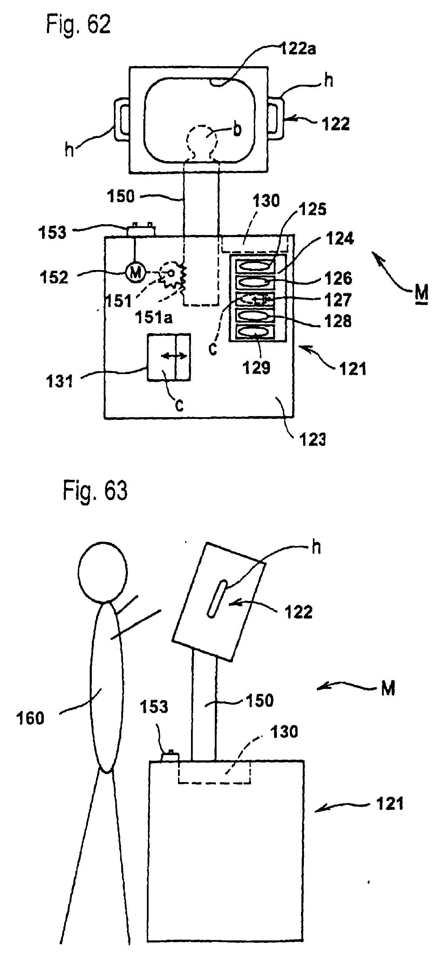

In Fig. 62, an image printing apparatus M according to the third aspect of this invention comprises main body 121 which contain the printing device and monitor 122 supported in the upper part of main body 1. The main body 121 has housing 123, and an input part 124 is provided in this front face of housing 123, and in this input part 124, various insertion ports 125, 126, 127, 128, 129 are provided for various recording media. The insertion port 125 sets for CD-ROM, insertion port 126 for flexible disk (FD), insertion port 127 for PC card, insertion port 128 for smart media, and insertion port 129 for compact flash, respectively. In main body 122, a reading division which reads information from inserted recording media, a writing division for writing information in recording media, a control section which controls each function and a printing part which prints in printing paper are contained. At front lower place of the main body 121, a print output port 131 for taking out the printed article printed in the printing part is provided. Still, in the upper surface of the main body 121, a scanners part 130 for reading printed matter such as the photograph to be set thereon, are provided. On the basis of the information read at this scanner part 130 or from various recording media at input part 124, the printing part may print out the printed articles at a ordered number of sheet and exhaust to the print output port 131.

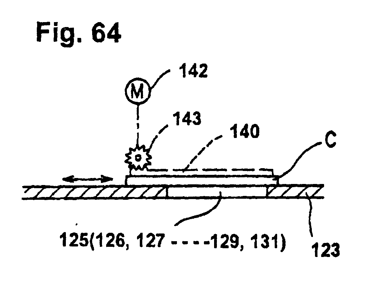

In each insertion ports 125, 126, ···129 and the back side of print output port 131, a sliding cover C is provided, as shown in Fig. 64. For example, this sliding cover C is opened and closed by a cover opening/shutting system which comprises a rack 140 which is laterally extended in the back side thereof, a pinion 141 which is located in vicinity of the edge of racks 140 and a motor 142 for rotating the pinion 141. It is possible to provide a motor 142 per each the perpendicularly arranged insertion ports, or to provide a motor 142 for all insertion ports and which motor connects to respective rack and pinion functions of each cover by clutches so as to open and close only the selected cover. In the later case, it is possible to reduce the number of motors 142.

The monitor 122 is independent of the main body 1, and is attached as height position controllably to the main body 121 by a support member 150. The rack is formed in lower end of the support member 150, and pinions 151 is engaged with the rack 150a, and this pinions 151 is rotated by motor 152. This motor 152 is being connected to buttons of keyboards 153 that is provided at the upper surface of housing 123 of main body 121. The support member 150 may be up and down along a slide support construction (not shown) by controlling the rotational frequency of motors 152 with the button's operation.

A monitor screen 122a is formed in the front area of the monitor 122. This screen 122a may be of CRT and liquid crystal panel, and in addition, equipped with touch panel function, and it displays guide of the operation, situation of the operation and read image or processed image. Ball joint b formed at the upper end of the support member 150 makes this monitor 122 controllable at any tilt angle. As shown in Fig. 63, when the screen of monitor 122 is tilted a little upwardly, for a tall user, it becomes easy to see and become easy to be touched in the finger in case of the touch panel system. At both sides of monitor 122, handles h, h are provided for making the tilting operation easy . Of course, instead of the ball joint b, any one of known mechanism for tilting may be adopted in this invention. In this embodiment, as described above, the insertion port 125,126,···129 for the recording media, is provided to the main body 121. However, if the monitor 122 is designed so as to have a large space at the side of the screen, it is also possible to provide the insertion ports at the monitor side. In addition, at the upper surface of housing of the main body 121 may have various operation mechanisms (not shown).

Next, the concrete motion of the apparatus M will be explained.

In Fig. 63, by manipulating the operation buttons of the keyboards 153, user 160 may adjust the height position of monitor 122 upwardly or downwardly. Further, the user 160 may adjust the tilt angle of monitor, by holding the handles h, h, and applying a force. After the monitor is adjusted to such suitable position, the printing operation as described below, for example, are taken.

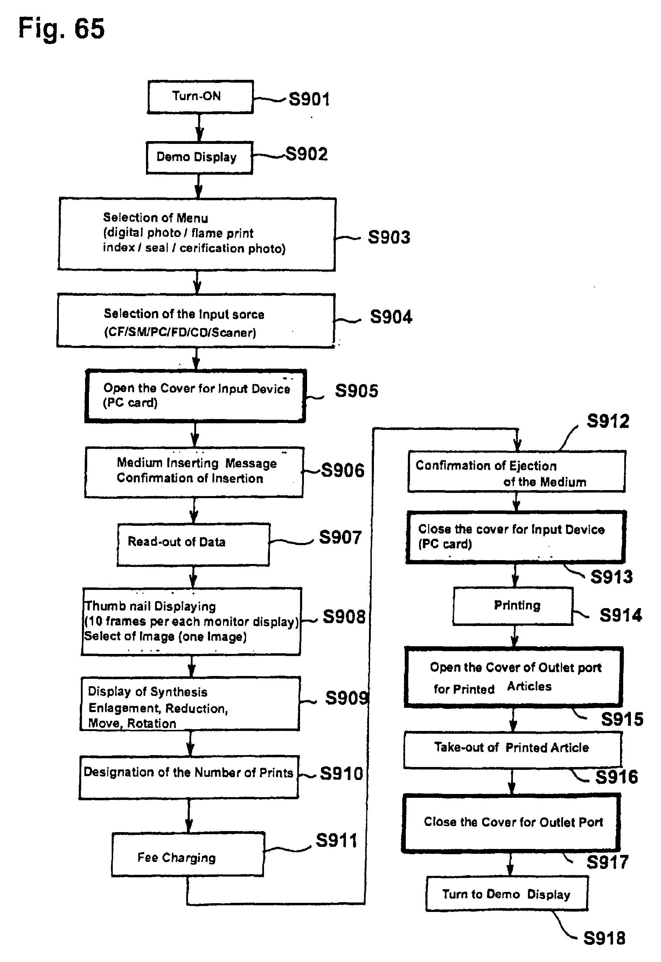

In Fig. 65, when a start switch (not shown) is turned ON(S901), monitor screen are displayed(S902). Then, among the displayed menu of digital photo, frame print, index, seal and certification photograph, the user selects one menu item by touching the display (touch panel)(S903). Thereafter, as the input resource, the user selects, a kind of recording medium to be used from compact flash memory (CF), smart media (SM), PC card, flexible disk (FD), and compact disk (CD), or selects the input using the scanners 130 (S904). When the PC card is selected, in accordance to the information from the touch panel, the control section drives the motor 142 shown in Fig. 64 to drive so as to open the cover C of insertion port 127 for PC card, wherein the cover has been closed normally until it is used. To the opened PC card insertion port 127, then, PC card is inserted (S905). In this state, since other insertion ports 125, 126, 128, 129 are closed, they can not receive the PC card in user's erred operation. Further, since all insertion port 125,126,···129 are closed in non-use, they can hardly receive any extraneous or mischievous substance. When user inserts PC card to the insertion port 127, the message of the mounting confirmation displays on the screen(S906), the reading of data in the PC card starts (S907). Then, read images is displayed per each 10 frames as thumb nail in the screen, and the user 160 chooses one among them(S908). Image processing such as enlargement, reduction, rotation, deformation, and synthesis with a frame is performed (S909) and print number of sheet is designated (S910). Thereafter, the fee charging process is executed (S713) Once PC card is taken out from the insertion port 127, a message of the ejection confirmation displays on the screen(S912). Afterwards, motors 142 is driven according to the signal from the control section, and the cover C of insertion ports 127 for PC card closes. Then, the print operation is done(S914) and the cover C of print outlet port 131 are opened(S915). Since the cover C of the print outlet port 131 is closed until then, the outlet port 131, in spite of its relatively large opening, can hardly receive any extraneous substance and the mischief is effectively prevented. Thereafter, the user takes out the printed article from the outlet port(S916), and the control section which detects it acts to close cover C of print output port 131 (S917). That is a series of operation, and it returns to step S902 of the demonstration screen display. By the way, regarding the more details for the print operation in this aspect, it may be referred to the description of above first and second aspect of this invention.

The demonstration screen mentioned above is a screen which shows the demonstration images to passers-by, when the printing apparatus does not output any images. In this demonstration, it is preferable to have the function which adjusts the position and gradient of the monitor automatically in order to show the demonstration screen well for the passers-by. The setting of position and gradient would be done in advance and at well, and it is also possible to give a multiple setting in response to dates and times.

According to the third aspect of this invention, by setting as described above, the user can be set the screen at a position being easy to look and touch with reference to his height. Further, the inlet port for recording media or output port for printed articles is effective for the mischievous prevention, because they are opened only in use by automatic control of control section.

### Image printing apparatus of the fourth aspect

In Fig. 3. the image printer apparatus M of this invention has casing 1, and a screen of a monitor 14 with a touch panel is disposed on the upper front surface of the casing 1. The monitor 14 with a touch panel performs as a display device for displaying the operation guidance, the operation state, the read out image or the processed image or the like as well as a device for the inputting operation for inputting an order content, inputting an output method chosen, producing an order receipt note, inputting personal information or the like.

Insertion ports 15 to 19 for various recording media are provided sideways to the monitor 14 with a touch panel. A scanner reading surface 20 is provided on a horizontal part dividing the upper part and the lower part for reading the image of a printed article and processing the same to digital data. In this embodiment, these are a part of the image data inputting means. In this embodiment, as the insertion ports for the various recording media, specifically, a flexible disc insertion port 15, a CD-ROM insertion port 16, a PC card insertion port 17, a smart medium insertion port 18, and a compact flash insertion port 19 at a position on the whole. Moreover, the main bodies of each reading device are installed inside the housing of the main body 1 corresponding to the insertion port of each recording medium.

In the lower part of the casing 1, a maintenance key 21, a speaker 22, a coin insertion port 23, a coin return lever 24, a bill insertion port 25, a change return port 26, a receipt outlet port 27, a printed article (for standard printing) outlet port 28, a printed article (for pre-cut seal) outlet port 29. and a front door port/closing key 30 are disposed. The maintenance key 21 is a key for switching an ordinary drive mode capable of accepting a customer, and an administration mode for setting the image printing system or maintenance by an administrator. The speaker is for reproducing the sound, BGM, effect sound or the like while waiting or operation.

A customer would pay for the fee by inserting a coin in the coin insertion port 23 and/or inserting a bill in the bill insertion port 25. In case there is a change, it is discharged from the change return port 26 so that it is received by the customer.

Moreover, although it is not apparently recognized by the external appearance, inside the casing 1, a personal computer including a control unit for controlling each device in the main body 1, a power source box for converting the voltage, an interruptible power supply device for preventing breakage of the CPU, the hard disc or the like in the control unit at the time of blackout or the like are installed.

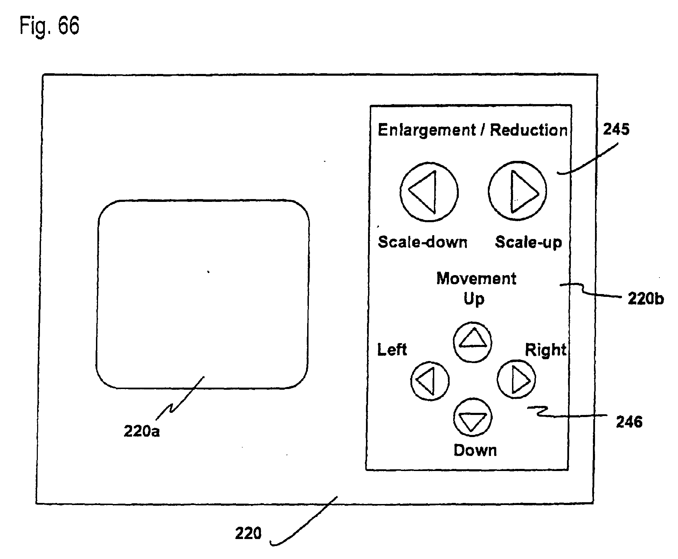

In the monitor screen 14, as shown in Fig. 66, a photograph adjustment screen 220 would be displayed, and further in this photograph adjustment screen 220, a image display screen 220a and an operation screen 220b are displayed. At the image display screen 220a, an outer frame 240 and a frame 241 for pre-cut of the pre-cut seal are displayed, as it is shown in Fig. 67. An image I is displayed based on the image information from the recording media, such as flexible disk, inserted from insertion port. In case a part of the image I lies of the frame 241, or in case the image I is too small, and in case the image is located in inclined position in the frame 241, it is manipulated in order to display the image I with an appropriate size and at the central of frame as shown in Fig. 68, by touching the displayed scale-up and scale-down operation indication 245 or the displayed moving operation indication 246 in the operation display 220b in the display 220. Printed image I does not come out of seals 247 by the bit, when seals 247 was torn off, as it is shown by this in Fig. 69, and that is to say, image I that it shouldn't not cut the image and printed for the appropriate position in the seal will be located. Thereby, as shown in Fig 69, when the customer peels off a seal 247 from the substrate sheet after printed out, the image I printed is located at a proper position, without lying off the seal, namely, without any cut-off parts.

However, even if position and size of the image are adjusted by manipulating with the displayed scale-up and scale-down operation indication 245 or the displayed moving operation indication 246 as shown in Fig. 66, a possibility that the image I printed with a proper size on the pre-cut seal has a part that lies out of cut lines C,L, as shown in Fig. 70, may be expected. Because, there is a possibility of a location deviation upon the conveyance of pre-cut seal for printing. Thus, in this invention, detection mark 248 is given at an appropriate position on the back side of the pre-cut seal S (Fig. 71). This pre-cut seal S is conveyed, as shown in Fig. 72, by transfer rollers 260, 260···260, and image I is printed by printing head 61 in response to various printing. On the transfer road of the pre-cut seal S, a sensor 262 is provided. The actual position of detection mark 248 is detected by the sensor 262, and the deviation from the standard position 249 of detection mark is analyzed, as shown in Fig.73. For example, a deviation in the carrier direction means deviation at a certain time after print starting, or deviation of the printer head at the print starting time.

Next, the operation of the printer is explained with referring to Fig. 74. When the printer is started(S1001), transfer roller 260 rotates to transfer the photographic printing paper (pre-cut seal S) toward the printer head 61 direction (S1002). At the time when the photographic printing paper passes in this transfer on sensors 262, the detection mark 248 is detected(S1003), and deviation from the standard position are analyzed(S1004). Control section 263 of Fig. 72 adjusts the printing start position of printer head 61 in proportion to this deviation degree(S1005). Pre-cut seal S thus printed is out to the print output port 16 (S1006). Above mentioned detection mark 248, sensor 262 and control section 263, etc. constitute of the image adjustment means, and the control sections 263 and printer head 261 etc. constitutes of the print adjustment means which regulates the printing position, and the detection mark 248 and sensors 262 constitutes of the detecting means.

Since the image printing apparatus of the forth aspect of this invention is thus comprised, in the obtained printed pre-cut seal, the image printed into the pre-cut seal would be located at a proper position and in a proper size so as to be in frame of the seal part of pre-cut seal. Therefore, when a seal part was torn off from the pre-cut seal along the pre-cut frame line, a possibility that part of the image lies off the frame of the seal and thus be cut out from the seal would be expelled.

### Information terminal table and information output system of the fifth aspect

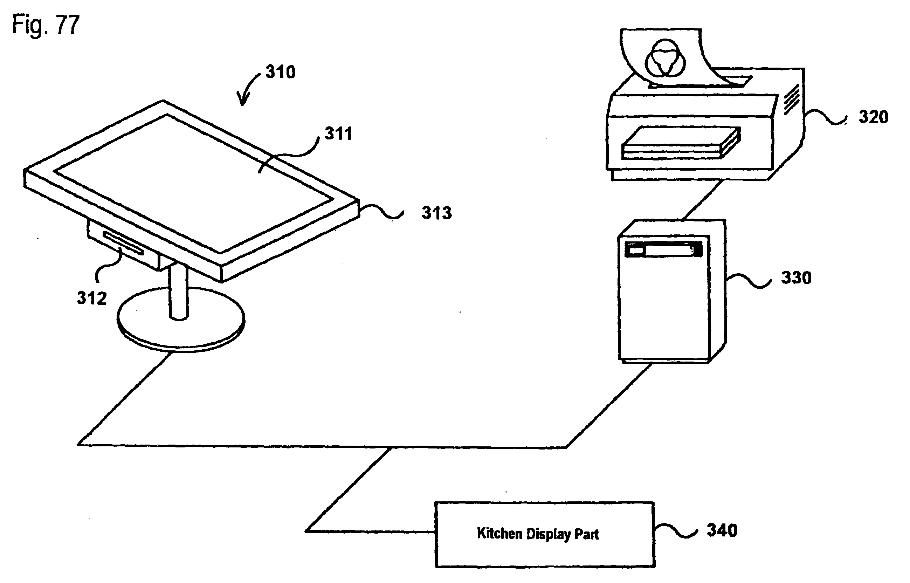

Fig. 77 is a view which explains an embodiment of information terminal table and information output system according to the fifth aspect of this invention.

Information output system in this embodiment has tables 310, printer 320, computer 330, kitchens display part 340, etc., and it is a system installed in tearooms and restaurants, etc.

The table 310 comprises touch panel part 311, medium reading part 312 and top board 313 , thus it is an information terminal table. Although the table 310 is shown in only one in Fig. 77 for the simplicity, it is possible to be installed in the multiple in proportion to the scale of the store . And, regarding on printer 320, one printer may be shared in multiple tables 310, or one printer 320 may be prepared per each table 310. The touch panel part 11 is a part with the function of display for displaying various information or views for various operations of this system, and the function of input by touching or pressing operation, and it is provided to the upper surface of top board 313. The top and bottom of display content displayed in touch panel part 311 is possible to change in the optional direction by manipulating touch panel part 311. Therefore, it is possible to easily carry out the operation from any directions, without that the manipulating persons who sit around the table move. The media reading part 312 is the part which reads image data from the medium which the user brings, and it is provided at the underside of top boards 313. The media which can be used in the this embodiment are various data recording media such as semiconductor memories, for example, smart media, compact flash (CF) card and PC card, or flexible disk, magneto-optic(MO) disk, CD-R , etc. The top board 313 is of table 310, and the top board has on its upper surface the touch panel part 11, and at its lower side the media reading part 112, and the upper surface being put along or almost along the horizontal

A printer 320 is an output device which outputs information such as image datum read by medium read part 312. In this embodiment, the heat sublimation transfer type printer is used. The computers 330 is connected to tables 310, printers 320, kitchen display part 340, and it is the control device which controls this system. The computers 330 has also a charge management division (not shown), which controls both fee of print which the user prints out and charge for drink and food. The kitchen display part 340 is a display part which the store side utilizes, and it may display food menu that the user ordered by tables 310 is displayed therein, an information of the charge management division.

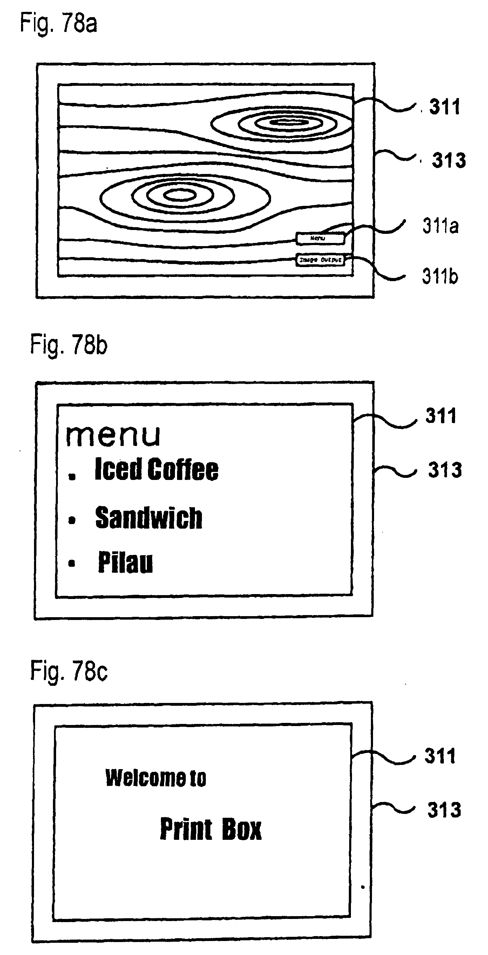

Fig. 78 is a view which shows the upper surface of top board 313. Although Fig. 78 is simplified for the description, the actual one can display any photo images or more detailed and smaller things.

When the table is not in operation and simply used as table, as shown in 78a, the display part displays, except the selection region 311a, 311b of touch panel part 311, grain tone pattern. Since in this embodiment, the design pattern of the parts of the table other than display part is the grain pattern, by displaying the grain tone pattern which is matched with the grain pattern, it is possible for the user to use the system in an atmosphere giving his presence of mind without feeling strange as the touch panel part 311. In this condition of figure 78a, only input operation in selection region 311a and 311b is transmitted to the computer 330, and the input operation onto the region of grain tone is not caused., even if the grain tone is touched, or pressed.

It becomes a display as shown in figure 78b, when selection region 311a is chosen, and the user can order the food and drink. Once the sandwich is chosen and ordered, for example, it is recorded to the charge management division and displays as the information in kitchen display part 34.

It becomes a display as shown in figure 78c, when selection region 311b is chosen, and the system become to read the image datum such as the photograph from the medium reading part 312 and outputs the photographs, etc. from printer 320. As described above, in this printing, synthesized photograph with a decoration frame, seal print, index print, etc. may be obtained by making a processing operation in advance of printing.

According to this embodiment, in case the user wants to large volume of printing, since he can manipulate the information output system in his presence of mind, it is possible to wait for a long time for the output, while he drinks or eats. Similarly, in case the user wants a long time for selecting frame in the frame print, or for adjusting the position of image to the selected frame, or etc., the user can operate with ease. In addition, since the table of this invention has only some additional functions as compared with the normal table, it is possible to give the installed shop a similar atmosphere of the conventional tearoom and shop, and then the user can do the operation and eating and drinking in his presence of mind.

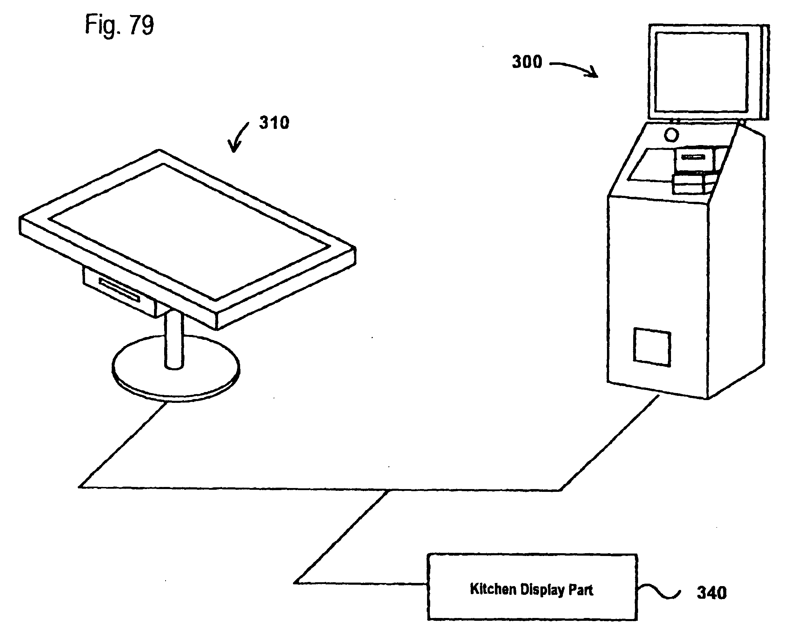

The information terminal table and system used thereof according this invention are not be limited to the embodiment as described above, and various modification and changes are possible, and they are also in the range of the scope of this invention. For example, in above embodiment, a system which provided with printer 320 and computer 330 is shown, however, this invention is not limited thereto, and for example, it may be combined with conventional information output machine 400, as shown in Fig. 79. In above embodiment, the medium reading part 312 that can read the data from various recording media, is shown, however, this invention is not limited thereto, and for example, it may be that can read negative film and printed photograph. In above embodiment, as the output form a photo print from the printer 20 is shown, however, this invention is not limited thereto, and for example, it may be that in CD-R and semiconductor memories, etc.

## Claims

1. Image printing system, which comprises a main body and a backyard printing part which is connected to the main body via a line,
wherein the main body comprises an image data inputting means for inputting image data, a request inputting means for inputting requests for an image to be output, a display means for displaying an image, an output content indicating data preparation means for preparing an output content indicating datum which records the image to be output and appendix conditions for the image on the basis of the input image and the input requests, an output method choice means for selecting one of instantaneous printing and backyard printing, and an instantaneous printing means which prints out an printed article of the image in accordance with the output content indicating datum when the choice at the output method choice means is the instantaneous printing, and
wherein the backyard printing part prints out an printed article of the image in accordance with the output content indicating datum when the choice at the output method choice means is the backyard printing.

2. Image printing system according to Claim 1, wherein the image data inputting means contains an image scanning device possible to scan an image directly,

3. Image printing system according to Claim 1 or 2, wherein the image datum which is input by the image data inputting means comprises an image datum of photographic image.

4. Image printing system according to one of Claims 1-3, wherein the main body and the backyard print part is located in a same shop.

5. Image printing system according to one of Claims 1-4, the main body and the backyard print part is connected through a network.

6. Image printing system according to one of Claims 1-5, the main body further comprises a receipt note issuing means for issuing to the customer a receipt note which has a customer identity information for confirming the customer to be handed the printed article at the backyard.

7. Image printing system according to one of Claim 6, wherein the backyard printing part further comprises a collation sheet printing means for printing the collation sheet which has at least a part of the customer identity information.

8. Image printing system according to one of Claim 7, wherein the main body further comprises a private information inputting means for inputting the private information of the customer, and the receipt note issuing means issues a receipt note which has a customer identity information which includes the private information input at the private information inputting means, and the collation sheet printing means issues the collation sheet which has the customer identity information which includes the private information input at the private information inputting means.

9. Image printing system, which comprises an image data procurement means for obtaining image data, a request inputting means for inputting requests for an image to be output, an output content indicating data preparation means for preparing an output content indicating datum which records the image to be output and appendix conditions for the image on the basis of the obtained image and the input requests, an printing means which prints out an printed article of the image in accordance with the output content indicating datum, a certification information setting means for setting a certification information which certifies the identity of the customer to be handed the printed article, a storage means which store the printed article therein and which is possible to be locked with the certification information, and a certification information inputting means for inputting the certification information to open the locked storage means.

10. Image printing system according to Claim 9, wherein the image data procurement means comprises an image data inputting means for inputting an image datum.

11. Image printing system according to Claim 9 or 10, wherein the indicating data preparation means comprises an editing means where the obtained image datum is processed into the image to be output.

12. Image printing system according to one of Claim 9-11, wherein the certification information setting means comprises a password designating means for designating a password as one pleases.

13. Image printing system according to one of Claim 9-11, wherein the certification information setting means comprises a password allocating means for automatically giving a password.

14. Image printing system according to one of Claim 9-13, wherein the storage means comprises a storing box having a the door with a lock which key is the aforesaid certification information.

15. Image printing system according to one of Claim 9-13, wherein the storage means comprises a plural of storing spaces and a common ejection port, wherein the each storing space can be locked independently and separately with a key which is the certification information to be set individually, and wherein the common ejection port is designed for discharging printed articles stored in any of the storing spaces.

16. Image printing system according to one of Claim 9-15, wherein the system further comprises an output method choice means for selecting one of instantaneous printing and backyard printing,
the printing means comprises an instantaneous printing means and a backyard printing means, wherein the instantaneous printing means prints out an printed article of the image in accordance with the output content indicating datum when the choice at the output method choice means is the instantaneous printing, and wherein the backyard printing means prints out an printed article of the image in accordance with the output content indicating datum when the choice at the output method choice means is the backyard printing, and
the certification information setting means sets the certification information upon the choice of the backyard printing.

17. Image printing system according to Claim 16, wherein the system comprises a main body, a backyard printing part and a stoker part, wherein the main body comprises the image data procurement means, the request inputting means, the output content indicating data preparation means, the output method choice means, the instantaneous printing means, and the certification information setting means, wherein the backyard printing part comprises the backyard printing means and is connected to the main body via a line, and wherein the stocker part is equipped with the certification information inputting means.

18. Image printing system according to Claim 17, wherein the main body and stocker part are connected via line.

19. Image printing system according to one of Claim 16-18, wherein the main body and backyard print part and the stocker part are all installed in a same shop.

20. Image printing apparatus for printing out a photo-image photographed by a imaging device such as digital camera,
which comprises a main body and a monitor part.
wherein the main body is equipped with a printing device therein, and
wherein the monitor part is located at upper side of the main body, and displays information such as image and character, and
which is **characterized by** the fact that the monitor part has at least one of height adjustment function and tilt angle regulatory function.

21. Image printing apparatus for printing out a photo-image photographed by a imaging device such as digital camera,
which comprises an inlet port for inserting a recording medium, and an outlet port for discharging a output printed article, and
which is **characterized by** the fact that at least one of the inlet and outlet ports has an open/close-free cover,

22. Image printing apparatus according to claim 21, wherein the cover is automatically opened and closed in relation to the customer's operation of the image printing apparatus.

23. Image printing apparatus for printing out a photo-image photographed by a imaging device such as digital camera,
which comprises a main body and a monitor part, wherein the main body is equipped with a printing device therein,
wherein the monitor part is located at upper side of the main body, and displays information such as image and character, and
wherein the apparatus comprises an inlet port for inserting a recording medium and an outlet port for discharging a output printed article,
which apparatus is **characterized by** the fact that the monitor part has at least one of height adjustment function and tilt angle regulatory function and that at least one of the inlet and outlet ports has an open/close-free cover.

24. Image printing apparatus for printing out a photo-image photographed by a imaging device such as digital camera on a pre-cut seal, which comprises a means for displaying a frame for the pre-cut of the pre-cut seal in addition to a selected image on a monitor screen, and a image adjustment means for aligning the selected image in the proper within the frame so as to print the image at a good position within the pre-cut frame.

25. Image printing apparatus according to Claim 24, wherein the image adjustment means comprise at least one of an image scaling means which is possible to be scale-up and scale-down of the image , an image translocating means, an image rotating means.

26. Image printing apparatus according to Claim 24 or 25, wherein the image adjustment means comprise a detecting means for detecting the transporting state of the pre-cut seal before printing, and a printing adjustment means for adjusting the printing where a deviation of the position detected by the detecting means from the standard position is calculated, and the printing position is adjusted in proportion to the calculated deviation.

27. Image printing apparatus according to Claim 26, wherein the detecting means detects a detection mark which is provided on the back side of the pre-cut seal.

28. Information terminal table which comprises a top board and a media reading part,
wherein the top board comprises on its upper surface a display part for displaying character and image information and an inputting part for an input operation, the upper surface being put along or almost along the horizontal, and
wherein the media reading part is provided at the lower side of the top board.

29. Information terminal table according to Claim 28, wherein the display part also has the function of the inputting part.

30. Information terminal table according to Claim 28 or 29, wherein the display part has a function of turning the top and bottom of the image displayed to any direction on a designated operation.

31. Information terminal table according to one of Claims 28-30, wherein the display part displays, except a necessitated minimum indication, a view which is matched with the design pattern of the parts of the table other than display part and/or the interior design of a room space where the table is placed , when the table is not in operation.

32. Information outputting system which comprises the information terminal table as set forth in one of Claims 28-31 and an outputting device,
wherein the outputting device outputs a information which is read out at the media reading part, and
wherein an operation for outputting the information from the outputting device is done at the top board.

33. Information outputting system according to Claim 32, wherein the top board further comprises a means for ordering food and/or drink.

34. Information outputting system according to Claim 32 or 33, wherein the system further comprises a charge management part which manages the charge for an output from the outputting device and/or charge for the food and drink ordered.
